# EUROPEAN PATENT APPLICATION

(11) **EP 2 450 548 A1**
(43) Date of publication of application: **09.05.2012**
(21) Application number: 09846837.4
(22) Date of filing: 18.08.2009
(51) Int. Cl.: F02C 1/05, F02C 1/00, F03G 6/00, F03G 6/04, F03G 6/06, F24J 2/00

(54) **GAS TURBINE PLANT, HEAT RECEIVER, POWER GENERATING DEVICE, AND SOLAR CONCENTRATING SYSTEM ASSOCIATED WITH SOLAR THERMAL ELECTRIC GENERATION SYSTEM**

(30) Priority: 29.06.2009 JP 2009153704; 29.06.2009 JP 2009153705; 29.06.2009 JP 2009153706; 29.06.2009 JP 2009153707; 30.07.2009 JP 2009178283; 30.07.2009 JP 2009178284; 30.07.2009 JP 2009178285
(71) Applicant: Mitsubishi Heavy Industries, Ltd., Tokyo 108-8215 (JP)
(72) Inventor: KOBAYASHI, Kazuta, Tokyo 108-8215 (JP); TAGAWA, Masashi, Tokyo 108-8215 (JP); AOYAMA, Kuniaki, Tokyo 108-8215 (JP); OSADA, Toshiyuki, Tokyo 108-8215 (JP); MASADA, Junichiro, Tokyo 108-8215 (JP); MAEDA, Manabu, Tokyo 108-8215 (JP); MASUDA, Masahiro, Tokyo 108-8215 (JP); SUGIMOTO, Shiro, Tokyo 108-8215 (JP); KAWASHIMA, Hiroshi, Tokyo 108-8215 (JP); IIJIMA, Takayoshi, Tokyo 108-8215 (JP); ATARASHIYA, Kenji, Tokyo 108-8215 (JP); MIZUTA, Keiji, Tokyo 108-8215 (JP); HORIE, Shigenari, Tokyo 108-8215 (JP)
(74) Representative: Bongiovanni, Simone
(86) International application number: PCT/JP2009/064473
(87) International publication number: WO 2011/001546

(57) **Abstract**

A gas turbine plant associated with a solar thermal electric generation system has a heat receiver which receives heat from the sun, a gas turbine having a compressor and a turbine which operates with an operating fluid compressed by the compressor and heated by the heat receiver, a temperature sensor which detects heat from the sun, an auxiliary driving device which is driven based on the temperature of the heat detected by the temperature sensor, and which starts the gas turbine, and a generator which converts kinetic energy generated as a result of the rotation of the turbine into electric energy.

## Description

### Technical Field

The present invention relates to a gas turbine plant, a heat receiver, a power generating device, and a sunlight collecting system associated with a solar thermal electric generation system.
The present invention claims priority on Japanese Patent Application No. 2009-153704, Japanese Patent Application No. 2009-153705, Japanese Patent Application No. 2009-153706, and Japanese Patent Application No. 2009-153707, filed June 29, 2009, and Japanese Patent Application No. 2009-178283, Japanese Patent Application No. 2009-178284, and Japanese Patent Application No. 2009-178285, filed July 30, 2009, the contents of which are incorporated herein by reference.

### Background Art

In recent years, from a viewpoint of global warming prevention and holding down use of fossil fuel, electric power generation which utilizes clean energy such as natural energy, which emits a low amount of harmful substances including carbon dioxide and nitrogen oxide, and recycled energy, which reuses resources, has started to gather attention. The amount of available clean energy is higher than the amount of electric power energy required worldwide. However, clean energy has a broad energy distribution and a low effective energy (the energy which can be externally extracted and can be used). Electric power generation with use of clean energy has not become sufficiently widespread because the efficiency of conversion into electric power is low and the cost of power generation is high due to this. As a power generation method, there is expected a power generation method with use of solar thermal energy in which electric power generation technologies such as gas turbine technology, steam turbine technology, and gas turbine combined-cycle (GTCC) technology are used.

In a conventional mainstream solar thermal electric generation system, solar heat is collected to heat a thermal medium (for example, synthetic oil or molten salt), and the heat of the thermal medium is heat-exchanged to produce steam, thereby performing electric power generation with a steam turbine. For example, Patent Document 1 discloses a solar thermal electric generation system provided with a heat receiver which receives the solar heat, a compressor which creates a compressed fluid, a regenerator which is arranged in a system for supplying the compressed fluid exited from the compressor to the heat receiver, and which recovers the heat to the compressed fluid, a turbine which introduces the compressed fluid from the heat receiver to obtain an output, a backup heating device which auxiliary heats the compressed fluid supplied to the turbine, and a generator connected to the turbine.

When utilizing solar thermal energy, in general, light collection and heat collection are performed with a combination of a light collection device with a mirror and a heat receiver, as disclosed in Patent Document 2 for example. Examples of the combination type of a light collection device and a heat receiver include a trough type (two dimensional light collection) combination and a tower type (three dimensional light collection) combination. The trough type combination is such that a half-cylinder-shaped mirror (trough) reflects sunlight to collect the light and collect the heat on a pipe which passes through the center of a cylinder of the half cylinder-shaped mirror, thereby raising the temperature of a thermal medium travelling within the pipe. The tower type combination is such that a heat receiver is arranged on an upper section of a tall tower, and a plurality of reflected light control mirrors called heliostats for collecting light are arranged on the ground around the tower, to thereby collect light and heat on the heat receiver on the upper section of the tower. In recent years, there is a demand for improving power generation cycle efficiencies, and development is being made in thermal media to be subjected to heat exchange in a tower type sunlight collecting heat receiver of a tower type so that it will be capable of handling higher temperature.

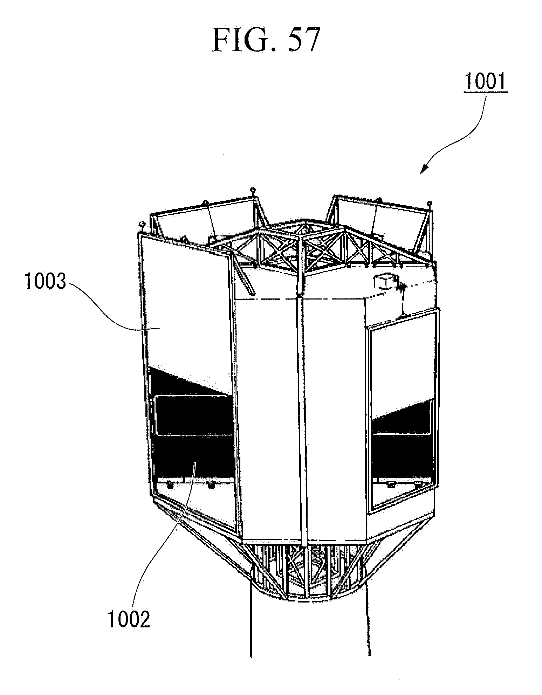

FIG. 57 is a schematic diagram showing a structure of a conventional three dimensional sunlight collecting tower type heat receiver. As shown in FIG. 57, a heat receiver 1001 is a cavity type in which a heat receiving pipe 1002 is arranged inside a casing 1003. Thereby, the heat receiving pipe 1002 is prevented from being exposed to the outside, and heat loss associated with convection and radiation from the heat receiving pipe 1002 is suppressed.

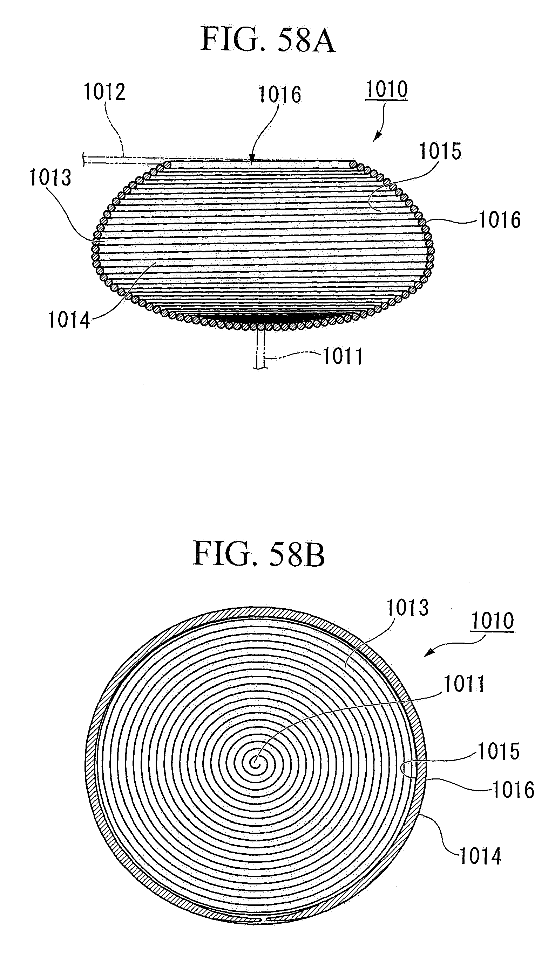

Patent Document 3 discloses a heat receiver having a structure different from that in FIG. 57. As shown in FIG. 58A and FIG. 58B, a heat receiver 1010 has a heat collecting body 1014 formed with a helically wound thermal medium supply pipe 1013 through which a thermal medium is supplied thereinto via a thermal medium inlet section 1011 and a thermal medium outlet section 1012. A light receiving surface 1015 of this heat collecting body 1014 is formed with an outer circumferential surface of the thermal medium supply pipe 1013 exposed to the inside of the heat collecting body 1014. The thermal medium inlet section 1011 is present in the center of the thermal medium supply pipe 1013, and the thermal medium outlet section 1012 is present on the outer circumferential section of the thermal medium supply pipe 1013. Accordingly, the thermal medium inside the thermal medium supply pipe 1013 is supplied from the center of the helix to the outer circumference. Moreover, the light receiving surface 1015 of the heat collecting body 1014 is of a curved shape which converges toward a sunlight inlet opening 1016. The heat collecting body 1014 has an upward opening, and the reflected light of the sunlight beams are collected toward the inner surface (the light receiving surface 1015) of the heat collecting body 1014 from the opening portion, using heliostats or the like.

A turbine (turbo machine) provided in a solar thermal electric generation system is not capable of activating itself, and a static type activating device (control device) which uses an electric motor and a torque motor, or an electric power converter is used for activation thereof as disclosed in Non-Patent Document 1.

### Prior Art Documents

### Patent Documents

[Patent Document 1] Japanese Unexamined Patent Application, First Publication No. H11-280638
[Patent Document 2] Japanese Patent No. 2951297
[Patent Document 3] International Publication No. 2006-025449 (Re-Publication No. 2006/025449)

### Non-Patent Documents

[Non-Patent Document 1] "Development of Gas Turbine Activation Device with High-Capacity Voltage Type Inverter", Ryoshi Tanaka, Yutaka Kawashima, et al. (3), Mitsubishi Heavy Industries, Ltd. Technical report, Volume 33 No. 6 (1996-11)

### Summary of the Invention

### Problems to be Solved by the Invention

Problems to be solved by the present invention are as follows. That is to say: (1) In conventional steam turbine power generation, the level of output thereof is lower than that of gas turbine power generation, and it is difficult to achieve a high level of power generation cycle efficiency. Moreover, in the case of a trough type, although the orientation of the mirror changes so as to track the sunlight, it is one-axis-controlled and therefore a large increase in the temperature of the thermal medium cannot be expected. Furthermore, in steam turbine power generation, a large amount of water (coolant) is required for generating steam in the power generation cycle. Moreover, a number of incidental facilities including a steam generator and condenser are required and the facility installation area consequently becomes large, resulting in an increase in facility installation cost and maintenance cost. Furthermore, the level of overall power consumption becomes high if the number of incidental facilities is high, and consequently, the cost of power generation becomes high.

Moreover, in the power generation system disclosed in Patent Document 1, in the case where a required amount of solar heat cannot be obtained by the heat receiver, the temperature of a compressed fluid supplied from the heat receiver to the turbine becomes lower and the turbine cannot be driven efficiently, and consequently, the level of burden on the ancillarily operating backup heating device becomes high, resulting in an increase in the power generation cost. Furthermore, since the compressor and the turbine are not directly connected with each other, the level of driving power for the compressor becomes high, and consequently, there is a need for increasing the capacity of the compressor driving motor and torque converter.

(2) In a conventional heat receiver, thermal expansion occurs in the constituents thereof due to the temperature rise in the heat receiving pipe, and there occurs thermal stress due to external restraints.

(3) In a light collecting tower type heat receiver, in order to efficiently receive sunlight beams which are reflected by heliostats, there may be considered a configuration such that a plurality of heat exchange heat receiving pipes are parallely arranged, and the extending direction (axial direction) of these heat exchange heat receiving pipes is arranged angled with respect to the ground surface.
However, in this type of configuration, the direction of stress acting on the heat exchange heat receiving pipes due to their own weight does not match with the extending direction of the heat exchange heat receiving pipes, and the bend stress which acts on the heat exchange heat receiving pipes becomes greater. In this case, if the heat exchange heat receiving pipes are heated by sunlight beams and the temperature thereof becomes high, the heat exchange heat receiving pipes may become deformed due to the bend stress. Therefore, there is a need for making improvements in the heat exchange heat receiving pipes in order to ensure the level of strength thereof, and this leads to further complication in the configuration and to an increase in manufacturing cost.

Moreover, the heat exchange heat receiving pipe may be considered to have a folding back structure with an outward heat receiving pipe arranged on the upstream side of the sunlight beam incident direction, and a homeward heat receiving pipe which is connected via a U-shaped pipe to this outward heat receiving pipe and is arranged on the downstream side of the incident direction.
Here, in order for the thermal medium to efficiently obtain thermal energy from the heat exchange heat receiving pipe, the temperature of the heat exchange heat receiving pipe needs to be sufficiently high compared to the temperature of the thermal medium. However, in the above configuration, the upstream end of the outward heat receiving pipe (in the proximity of the inlet side header) and the downstream end of the homeward heat receiving pipe (in the proximity of the outlet side header) are arranged in the proximity of each other. In this case, there is a significant temperature difference between the upstream end of the outward heat receiving pipe and the downstream end of the homeward heat receiving pipe, and therefore, heat is likely to be radiated from the homeward heat receiving pipe toward the outward heat receiving pipe. As a result, a temperature rise in the homeward heat receiving pipe is prevented, and the efficiency of heat exchange between the homeward heat receiving pipe and the thermal medium is reduced.

(4) In the heat receiver disclosed in Patent Document 3, the heat exchange heat receiving pipe 1013 is helically wound so that the outer circumferential surfaces thereof are in contact with each other, and therefore, sunlight beams collected by the heliostat will not be irradiated onto the external surface of the heat collecting body 1014 (non-light receiving surface 1016). Accordingly, in the circumferential direction of the heat exchange heat receiving pipe 1013, the temperature difference on the outer circumferential surface of the heat exchange heat receiving pipe 1013 becomes significant between the light receiving surface 1015 of the heat collecting body 1014 and the non-light receiving surface 1016 of the heat collecting body 1014.
That is to say, the temperature of the heat exchange heat receiving pipe 1013 becomes uneven in the circumferential direction thereof, and it is difficult to efficiently transmit thermal energy to the thermal medium supplied through the heat exchange heat receiving pipe 1013.

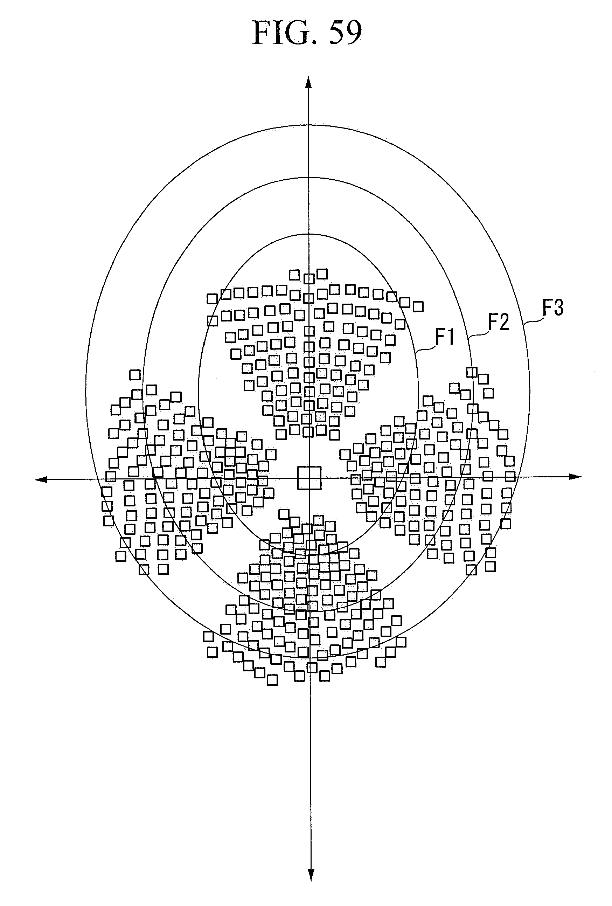

(5) In the light collecting tower type power generating device mentioned above, there occurs a phenomenon in which the effective mirror area associated with the degree of the incidence/reflection angle of the heliostat becomes significantly different between the southern location and the northern location of the tower section, depending on the actual locational conditions of the equipment.
Here, there are described differences in cosine efficiency (light collecting efficiency) associated with the arrangement position relationship between a light collecting heat receiver and a heliostat. FIG. 59 is a diagram showing a distribution of cosine efficiency with respect to the distance from the light collecting heat receiver. Further, FIG. 59 shows a cosine efficiency distribution measured at the time of the culmination of the vernal equinox in a subtropical area at a latitude of 20 degrees or lower. Cosine efficiency refers to a ratio of the amount of light reflected by the heliostat and irradiated into the light collecting heat receiver, with respect to the amount of sunlight beams irradiated onto the heliostat. That is to say, as the incident angle of light irradiation onto the heliostat becomes greater, the amount of light irradiated into the light collecting heat receiver is reduced, resulting in a downward tendency in the cosine efficiency. Moreover, around the light collecting heat receiver shown in FIG. 59, there are arranged heliostats surrounding the light collecting heat receiver.

As shown in FIG. 59, for example, in the northern hemisphere, sunlight beams are irradiated from the southern side to the northern side at the time of the culmination, and therefore, in a predetermined angle range on the northern side, the incident angle of the sunlight beams irradiated onto the heliostat is small. Accordingly, with the heliostat arranged on the northern side, a high level of cosine efficiency can be obtained. In this case, it can be understood that the range where a high level of cosine efficiency can be obtained (hereunder, referred to as high efficiency range F1) is a range having an approximately oval shape eccentric to the northern side from the center of the arrangement range where the heliostats are arranged.
Meanwhile, it can be understood that with approach to regions distanced from the light collecting heat receiver (range F2 and F3), the incident angle of sunlight beams irradiated onto the heliostat becomes greater, and the cosine efficiency tends to gradually decrease.

Here, with the light collecting tower type power generating device mentioned above, a supporting pole may be arranged on the light path of the sunlight beam reflected by the heliostat in some cases due to the light collecting heat receiver being supported by the supporting pole. In this case, the sunlight beam reflected by the heliostat is blocked by the supporting pole, and it obstructs the light beam from being irradiated into the opening section of the light collecting heat receiver. In particular, there is a problem in that sunlight beams reflected by the heliostat arranged within the high efficiency range F1 are blocked by the supporting column, and this consequently leads to a significant reduction in light collecting efficiency. Therefore, it is preferable that the number and sectional dimension of the supporting columns constituting the tower section are kept to the minimum.
On the other hand, since the load of the light collecting heat receiver and other equipment installed on the tower section, seismic loading, wind pressure, and the like, act on the tower section, it is necessary to ensure that the level of strength of the tower section is sufficient to tolerate these types of load.

(6) In the light collecting tower type power generating device, the angle of sunlight beams irradiated onto the heliostat differs, depending on the arrangement position of each heliostat. Therefore, the ratio of the amount of light reflected by the heliostat and irradiated into the light collecting heat receiver (so-called cosine efficiency) with respect to the light amount of sunlight beams irradiated onto the heliostat also differs, depending on the arrangement position of each heliostat. In this case, in order to ensure a required level of light collecting efficiency with the light collecting heat receiver, it is necessary to expand the range of heliostat arrangement to thereby arrange as many heliostats as possible, including locations where a high level of cosine efficiency cannot be expected. However, there is a problem in that arranging heliostats at locations where a high level of cosine efficiency cannot be expected leads to an increase in the cost of equipment.

Moreover, as the arrangement range of the heliostats expands, it is necessary to increase the height of the tower section in order to receive sunlight beams collected from the respective heliostats. As a result, the cost of building the tower section increases. Furthermore, the distance between each heliostat and the light collecting heat receiver increases as a result, and therefore, it is necessary to control the orientation of the heliostats at a high level of precision in order to accurately guide light beams collected by the heliostats to the light collecting heat receiver.

Furthermore, the diameter of the light beam collected by the heliostat (spot diameter) becomes greater with distance from the heliostat. Therefore, it is necessary to determine the dimension of a light receiving opening section in the light collecting heat receiver, based on the spot diameter of a light beam guided from a heliostat positioned at a point furthest from the light collecting heat receiver. Accordingly, as a result of expanding the heliostat arrangement range, it is also necessary to expand the dimension of the opening section of the light collecting heat receiver. In this case, there is a problem in that loss in thermal energy radiated from the opening section of the light collecting heat receiver to the outside becomes greater, and therefore the thermal medium cannot be expected to reach a high temperature.

(7) In a case where a turbine of the power generation system is rotated by an activating device and it has reached a rotation speed at which self-rotation can be performed, and then a high pressure gas (thermal medium), which has been heated by solar heat and has reached a high temperature, is combined to thereby activate the turbine, there is a problem in that since heat input from the sun is governed by weather, activation is likely to become unstable. Meanwhile, in a case of accelerating the turbine to a rated rotation speed with use of an activating device only, although activation of the turbine becomes stable, there is a problem in that the electric capacity required for the activating device becomes greater.

The present invention takes into consideration the above circumstances, with an object of providing a solar thermal electric generation system which utilizes solar thermal energy and is capable of performing clean electric power generation with a low amount of emission of harmful substances such as carbon dioxide and nitrogen oxide, and which is capable of preventing global warming and realizing a reduction in the amount of fossil fuel use.

### Means for Solving the Problem

A gas turbine plant of the present invention has a heat receiver which receives heat from the sun, a gas turbine having a compressor and a turbine which operates with an operating fluid compressed by the compressor and heated by the heat receiver, a temperature sensor which detects heat from the sun, an auxiliary driving device which is driven based on the temperature of the heat detected by the temperature sensor, and which starts the gas turbine, and a generator which converts kinetic energy generated as a result of the rotation of the turbine into electric energy.

According to the gas turbine plant of the present invention, the gas turbine (the compressor and the turbine) having no combustor is used instead of a steam turbine, and therefore, it is possible to achieve a higher level of power generation cycle efficiency compared to that of a steam turbine. Specifically, since there is used a heat receiver instead of a combustor, the temperature of a compressed fluid discharged from the compressor can be raised by the heat from the sun, and it can be supplied to the turbine. Moreover, in the present invention, water is not required in a power generation cycle as required with a steam turbine. Furthermore, since there is no need for providing incidental facilities including a steam generator and condenser, the area of equipment installation can be reduced, and equipment installation cost and maintenance cost can be reduced. Moreover, the level of overall power consumption is low as the number of incidental facilities is low, and consequently, the cost of power generation becomes low. Furthermore, in the present invention, the auxiliary driving device is driven based on the temperature of the heat detected by the temperature sensor, and therefore, the compressor and the turbine do not start if a required amount of solar heat cannot be obtained by the heat receiver. That is to say, in a case where the temperature of the operating fluid supplied from the heat receiver to the turbine is low and the turbine cannot be efficiently driven, driving energy of the compressor and the turbine can be suppressed, and the cost of power generation can be reduced. Therefore, it is possible to provide a gas turbine plant which achieves a high level of power generation cycle efficiency and which reduces the cost of power generation.

In the gas turbine plant of the present invention, the compressor and the turbine may be directly connected with each other by a coaxial rotational shaft, and the rotational shaft may be rotated by driving of the auxiliary driving device.

According to the gas turbine plant of the present invention, since the compressor and the turbine are directly connected with each other by the coaxial rotational shaft, driving power of the compressor may be compensated with power generated by rotation of the turbine. As a result, the capacity of the auxiliary driving device and a torque converter can be made small. Therefore, it is possible to provide a gas turbine plant which reliably achieves a high level of power generation cycle efficiency and which significantly reduces the cost of power generation.

In the gas turbine plant of the present invention, there may be provided a regenerative heat exchanger which performs heat exchange between the operating fluid and exhaust of the turbine before the operating fluid is heated in the heat receiver.

According to the gas turbine plant of the present invention, the temperature of the operating fluid is raised before the operating fluid is heated in the heat receiver, and it is therefore possible to preliminarily raise the temperature of the operating fluid to be heated in the heat receiver. Therefore, it is possible to provide a gas turbine plant which reliably achieves a high level of power generation cycle efficiency and which significantly reduces the cost of power generation.

In the gas turbine plant of the present invention, the compressor and the heat receiver may be directly connected with each other.

According to the gas turbine plant of the present invention, since the compressor and the heat receiver are directly connected with each other, the area of equipment installation can be reduced and the cost of equipment installation can be reduced. Moreover, the compressed fluid discharged from the compressor is directly supplied to and heated in the heat receiver without pressure loss while maintaining its high pressure. Therefore, it is possible to provide a gas turbine plant which achieves power generation cycle stability and reliability.

In the gas turbine plant of the present invention, there may be provided an auxiliary combustor which injects a fuel into the operating fluid, and which combusts and heats it to be supplied to the turbine.

According to the gas turbine plant of the present invention, during evening hours where solar energy cannot be utilized or in those cases where solar energy is insufficient due to poor weather conditions, it is possible to auxiliarily heat the operating fluid heated in the heat receiver to thereby raise the temperature thereof, and then supply it to the turbine. Therefore, it is possible to provide a gas turbine plant which achieves power generation cycle stability and reliability.

In the gas turbine plant of the present invention, there may be provided a tower with the heat receiver arranged on an upper section thereof, and heliostats which are arranged around the tower and which collect light beams from the sun and reflect them to the heat receiver.

According to the gas turbine plant of the present invention, sunlight beams are collected on the heat receiver on the upper section of the tower by the heliostats, and therefore, they are converted into high temperature thermal energy. Therefore, it is possible to provide a gas turbine plant which significantly achieves a high level of power generation cycle efficiency.

In the gas turbine plant of the present invention, a plurality of reinforcement members may be provided on the tower so as to intersect with a lengthwise direction of the tower and to have a clearance between the reinforcement members, and the intervals may be set to become greater with approach to the upper section of the tower, within a range serving as a light path on which light from the sun is entered from the heliostats to the heat receiver.

According to the gas turbine plant of the present invention, sunlight beams are reliably collected on the heat receiver on the upper section of the tower by the heliostats, and therefore, they are converted into high temperature thermal energy. That is to say, light beams reflected by the heliostats are collected on the heat receiver on the upper section of the tower without being blocked by the reinforcement members. Therefore, it is possible to provide a gas turbine plant which significantly achieves a high level of power generation cycle efficiency.

In the gas turbine plant of the present invention, the temperature sensor, the auxiliary driving device, the gas turbine, and the generator may be arranged on the upper section of the tower.

According to the gas turbine plant of the present invention, since the devices are arranged together on the upper section of the tower, the area of equipment installation can be reduced and the cost of equipment installation can be reduced.

In the gas turbine plant of the present invention, a vibration damper which dampens vibrations of the generator may be provided on the upper section of the tower.

According to the gas turbine plant of the present invention, the vibration damper dampens vibrations of the generator, and thereby resonance of the tower can be prevented. Therefore, it is possible to provide a gas turbine plant which achieves power generation cycle stability and reliability.

The heat receiver of the present invention has: a heat receiving pipe which transmits heat to a thermal medium which receives heat from the sun and flows thereinside; a casing which houses the heat receiving pipe; and a first suspender for suspending the casing, one end of which suspender is fixed to the outside and the other end is fixed to the casing.

According to the heat receiver of the present invention, since the casing is suspended by the first suspender, it is not externally restrained, and deformation of the casing due to thermal expansion is tolerated. Therefore, it is possible to provide a heat receiver capable of suppressing the occurrence of thermal stress due to thermal expansion of the associated members.

In the heat receiver of the present invention, the first suspender may have flexibility.

According to the heat receiver of the present invention, since the first suspender has flexibility, deformation is absorbed, and accordingly, deformation of the casing due to thermal expansion is tolerated. Therefore, it is possible to provide a heat receiver capable of significantly suppressing the occurrence of thermal stress due to thermal expansion of the associated members.

In the heat receiver of the present invention, there may be provided a second suspender for suspending the heat receiving pipe, one end of which suspender is fixed to the inner surface of the casing and the other end is fixed to the heat receiving pipe.

According to the heat receiver of the present invention, since the heat receiving pipe is suspended by the second suspender, it is not externally restrained, and deformation of the heat receiving pipe and the casing due to thermal expansion is tolerated. Therefore, it is possible to provide a heat receiver capable of significantly suppressing the occurrence of thermal stress due to thermal expansion of the associated members.

In the heat receiver of the present invention, the heat receiving pipe may be suspended by the second suspender so as to be distanced from the casing.

According to the heat receiver of the present invention, since the heat receiving pipe is separated from the casing, the clearance created by this separation tolerates deformation of the heat receiving pipe and the casing due to thermal expansion. Therefore, it is possible to provide a heat receiver capable of significantly suppressing the occurrence of thermal stress due to thermal expansion of the associated members.

In the heat receiver of the present invention, the first suspender and the second suspender may be directly connected with each other.

According to the heat receiver of the present invention, as a result of the first suspender and the second suspender being directly connected with each other, flexibility of the entire suspender improves. Therefore, the entire suspender significantly tolerates deformation of the heat receiving pipe and the casing due to thermal expansion. Moreover, as a result of the first suspender and the second suspender being directly connected with each other, the level of manufacturability and workability improves, and it is therefore possible to provide a heat receiver which reduces manufacturing cost.

In the heat receiver of the present invention, the heat receiving pipe and the casing respectively may be connected separatably at least at one location.

According to the heat receiver of the present invention, it is possible to manufacture the heat receiver by connecting at least one location of each of the heat receiving pipe and the casing. Therefore, it is possible to provide a heat receiver which has superior manufacturability and workability, and reduces manufacturing cost.

In the heat receiver of the present invention there may be provided; a connection pipe which is connected to the heat receiving pipe and which allows the thermal medium flowing through the heat receiving pipe to flow out, and an outlet pipe which is connected to the connecting pipe and is connected to the outside, and the connection pipe and the outlet pipe may be separatably connected at least at one location.

According to the heat receiver of the present invention, it is possible to manufacture the heat receiver by connecting at least one location of the connection pipe and the outlet pipe. Therefore, it is possible to provide a heat receiver which has superior manufacturability and workability, and reduces manufacturing cost.

A first aspect of a sunlight collecting heat receiver of the present invention is a sunlight collecting heat receiver provided with a heat receiving section through which a thermal medium flows, and which receives sunlight beams and transmits the heat to the thermal medium, wherein the heat receiving section is provided with: a plurality of heat exchange heat receiving pipes which receive sunlight beams; a thermal medium inlet header, to which an upstream end of the plurality of heat exchange heat receiving pipes in the flow direction of the thermal medium is connected, and which introduces the thermal medium toward the plurality of heat exchange heat receiving pipes; and a thermal medium outlet header, to which a downstream end of the plurality of heat exchange heat receiving pipes in the flow direction of the thermal medium is connected, and through which the thermal medium is derived from the plurality of heat exchange heat receiving pipes, and the thermal medium inlet header is arranged on the vertically lower side of the plurality of heat exchange heat receiving pipes, and the thermal medium outlet header is arranged on the vertically upper side of the plurality of heat exchange heat receiving pipes; and the plurality of heat exchange heat receiving pipes are such that the extending direction of the heat exchange heat receiving pipes which reach from the upstream end to the downstream end are arranged along the vertical direction.

In the sunlight collecting heat receiver of this type of configuration, since the heat exchange heat receiving pipes are arranged along the vertical direction, the direction of stress associated with the weight of the heat exchange heat receiving pipes and the extending direction of the heat exchange heat receiving pipes match with each other. Therefore, it is possible, by reducing the bending stress acting on the heat exchange heat receiving pipes, to suppress deformation and so forth of the heat exchange heat receiving pipes. In this case, compared to those cases of having a conventional configuration in which the heat exchange heat receiving pipes are arranged angled so as to face the sunlight beams, it is possible to simplify the configuration and reduce the manufacturing cost, as there is no need for an additional configuration for ensuring the strength level of the heat exchange heat receiving pipes.
In addition, according to the first aspect of the sunlight collecting heat receiver of the present invention, since the thermal medium inlet header is arranged at the lower end of the heat exchange heat receiving pipes, and the thermal medium outlet header is arranged at the upper end, both of these headers are arranged separated from each other while having the heat exchange heat receiving pipes therebetween. That is to say, no low-temperature heat source such as the thermal medium inlet header, is arranged around the thermal medium outlet header, and therefore, it is possible to suppress unnecessary radiation from the thermal medium outlet header. Therefore, the temperature of the heat receiving section can be stably raised by the sunlight beams, and accordingly, the thermal energy obtained by the heat receiving section can be efficiently transmitted to the thermal medium. Therefore, it is possible to provide a sunlight collecting heat receiver having a high level of thermal efficiency.

Moreover, in the first aspect of the sunlight collecting heat receiver of the present invention: there may be provided a casing which is installed on a tower section provided standing on the ground and which houses at least the heat exchange heat receiving pipes of the heat receiving section; the casing may be formed in a bottom-ended cylinder shape with the axial direction thereof arranged along the vertical direction, and the plurality of heat exchange heat receiving pipes may be arranged along the inner surface of the circumferential wall of the casing; and in the casing there may be formed an opening section which opens downward, and the casing may receive, from the opening section, sunlight beams collected by the heliostats arranged so as to surround the periphery of the tower section.
In the sunlight collecting heat receiver of this type of configuration, since the opening section of the casing is open downward, it is possible to evenly take in sunlight beams from the heliostats arranged around the tower section. Therefore, it is possible to stably receive sunlight beams with the heat exchange heat receiving pipes arranged within the casing, and thermal energy obtained by the heat exchange heat receiving pipes can be efficiently transmitted to the thermal medium.

Moreover, in the first aspect of the sunlight collecting heat receiver of the present invention: there may be provided a casing which is installed on a tower section provided standing on the ground and which houses at least the heat exchange heat receiving pipes of the heat receiving section; the casing may be provided with a planarly arc-shaped back surface section with the axial direction thereof arranged along the vertical direction, a front surface section which covers the front part of the back surface section, and an opening section formed in the lower end section of the front surface section; on the back surface section there may be arranged along the inner surface thereof the plurality of heat exchange heat receiving pipes; and the casing may receive, from the opening section, sunlight beams which are collected by heliostats arranged within a predetermined angle range in front of the tower section.
In a so-called all around arrangement type sunlight collecting heat receiver in which heliostats are arranged so as to surround the periphery of the tower section mentioned above, the effective mirror area associated with the degree of the incidence/reflection angle of the heliostat becomes significantly different, depending on the actual locational conditions of the equipment, and it is difficult to take in sunlight beams from some directions.
In this type of case, as practiced in the configuration of the present invention, by making a collected arrangement of the heliostats within the predetermined angle range in front of the tower section and by forming the opening section for taking in sunlight beams in the front surface section of the casing, the heliostats are arranged only in the range where the effective mirror area can be ensured. As a result, it is possible to realize stable light collecting efficiency while reducing the equipment cost of the heliostats.

Moreover, in the first aspect of the sunlight collecting heat receiver of the present invention, on the inner surface of the casing there may be arranged a thermal insulation material.
Furthermore, in the sunlight collecting heat receiver of this type of configuration, it is possible to suppress thermal energy inside the casing from being radiated from the wall surface of the casing to the outside.

Moreover, the first aspect of a solar thermal electric generation device of the present invention is such that there may be provided the sunlight collecting heat receiver of the present invention, and a gas turbine unit which uses the thermal medium heated by the sunlight collecting heat receiver to perform power generation, wherein the gas turbine unit may be provided with; a compressor which supplies the thermal medium to the thermal medium inlet header, a turbine which receives supply of the thermal medium derived from the thermal medium outlet header, and a generator which converts the driving force of the turbine into electric power.
In the solar thermal electric generation device of this type of configuration, since power generation is performed with use of a thermal medium heated by the sunlight collecting heat receiver of the present invention, it is possible to provide a solar thermal electric generation device with superior power generation efficiency.

Moreover, in the first aspect of the solar thermal electric generation device of the present invention, the gas turbine unit may be installed on the tower section, along with the sunlight collecting heat receiver.
In the solar thermal electric generation device of this type of configuration, the gas turbine unit and the sunlight collecting heat receiver are installed on the tower section together, and it is therefore possible to improve the level of maintainability.

Moreover, in the first aspect of the solar thermal electric generation device of the present invention, between the compressor and the thermal medium inlet header there may be provided a regenerative heat exchanger for performing heat exchange between the thermal medium supplied from the compressor to the thermal medium inlet header, and exhaust gas discharged from the turbine.
In the solar thermal electric generation device of this type of configuration, a thermal medium can be preliminarily heated before being introduced into the thermal medium inlet header, and therefore it is possible to supply the thermal medium at a high temperature to the turbine. As a result, it is possible to further improve the level of power generation efficiency of the solar thermal electric generation device. In addition, in the regenerative heat exchanger, since it is possible to effectively utilize the exhaust gas worked for power generation performed in the turbine, a separate heat source is not necessary and it is possible to simplify the configuration and reduce equipment cost.

A second aspect of a sunlight collecting heat receiver of the present invention is a sunlight collecting heat receiver provided with: a casing having an opening section which collects sunlight beams; and a plurality of heat exchange heat receiving pipes which are housed in the casing, through which a thermal medium flows, and which receive sunlight beams collected in the casing and transmit the heat to the thermal medium, and on the inner surface of the casing there is arranged a thermal insulation material, and the plurality of heat exchange heat receiving pipes are arranged at predetermined arrangement pitches in a state of having a clearance between the adjacent heat exchange heat receiving pipes, and the heat exchange heat receiving pipes are arranged in a state of having a predetermined distance from the inner surface of the thermal insulation material.

According to the second aspect of the sunlight collecting heat receiver of the present invention, first, the heat exchange heat receiving pipes are housed in the casing, and therefore, a region of the outer circumferential surface of the heat exchange heat receiving pipes which opposes to the inner surface of the casing (the inner surface of the thermal insulation material) serves as a non-light receiving surface which is unlikely to receive sunlight beams irradiated thereon.
Here, according to the configuration of the present invention, sunlight beams collected in the casing are irradiated onto the light receiving surface of the heat exchange heat receiving pipes (the surface opposing to the direction of sunlight beam irradiation) and they thereby become thermal energy, directly heating the heat exchange heat receiving pipes. Meanwhile, sunlight beams which travel through between the adjacent heat receiving pipes and which are irradiated onto the thermal insulation material, are radiated as thermal energy, and thereby the non-light receiving surface is also heated.
Therefore, thermal energy can also be transmitted to the non-light receiving surface of the heat exchange heat receiving pipes, and it is therefore possible to evenly heat the heat exchange heat receiving pipes around the entire circumferential direction. As a result, it is possible to efficiently transmit thermal energy from sunlight beams to the thermal medium, and therefore, it is possible to provide a sunlight collecting heat receiver with a high level of thermal efficiency.

In this case, compared to a conventional configuration in which the outer circumferential surfaces of the heat exchange heat receiving pipes are in contact with each other, a level of thermal energy equivalent to that of the conventional configuration can be obtained while reducing the total heat receiving area of all of the heat exchange heat receiving pipes, and therefore, it is possible to reduce the number of the heat exchange heat receiving pipes to be installed. As a result, it is possible to reduce the size, weight, and cost of the device. Furthermore, the diameter of the heat exchange heat receiving pipes can be expanded when reducing the number of the heat exchange heat receiving pipes, and therefore, it is possible to improve the level of workability and maintainability of the heat exchange heat receiving pipes.

Moreover, in the second aspect of the sunlight collecting heat receiver of the present invention, if an outer diameter of the heat exchange heat receiving pipes is taken as D, and a distance from the inner surface of the thermal insulation material to the center axis of the heat exchange heat receiving pipe is taken as Lx, the distance Lx with respect to the outer diameter D may be set within a range of 1.0 ≤ Lx / D ≤ 2.5.
According to the configuration of the present invention, by setting the distance Lx within the range of 1.0 ≤ Lx / D ≤ 2.5, thermal energy generated by the sunlight beams irradiated onto the thermal insulation material is efficiently radiated toward the non-light receiving surface of the heat exchange heat receiving pipes. Therefore, it is possible to evenly heat the heat exchange heat receiving pipes around the entire circumferential direction.

Moreover, in the second aspect of the sunlight collecting heat receiver of the present invention, if a distance between the center axes of the adj acent heat exchange heat receiving pipes is taken as an arrangement pitch Px, the arrangement pitch Px may be set within a range of 1.0D < Px ≤ 2.0D.
According to the configuration of the present invention, by setting the arrangement pitch Px within the range of 1.0D < Px ≤ 2, the heat exchange heat receiving pipes can be arranged at a suitable density while having a clearance between each of the heat exchange heat receiving pipes, and therefore, it is possible to efficiently irradiate sunlight beams collected in the casing toward the light receiving surface of the heat exchange heat receiving pipes and the thermal insulation material. Further, thermal energy generated by the sunlight beams irradiated onto the thermal insulation material is transmitted to the non-light receiving surface of the heat exchange heat receiving pipes, and thereby, it is possible to evenly heat the heat exchange heat receiving pipes around the entire circumferential direction.

Moreover, the second aspect of a solar thermal electric generation device of the present invention is such that there may be provided the above sunlight collecting heat receiver of the present invention, and a gas turbine unit which uses the thermal medium heated by the sunlight collecting heat receiver to perform power generation, and the gas turbine unit may be provided with; a compressor which supplies the thermal medium to the heat exchange heat receiving pipes, a turbine which receives supply of the thermal medium derived from the heat exchange heat receiving pipes, and a generator which converts the driving force of the turbine into electric power.
In the solar thermal electric generation device of this type of configuration, since power generation is performed with use of a thermal medium heated by the sunlight collecting heat receiver of the present invention, it is possible to provide a solar thermal electric generation device with superior power generation efficiency.

Moreover, in the second aspect of the solar thermal electric generation device of the present invention, the sunlight collecting heat receiver and the gas turbine unit may be installed on the tower section provided standing on the ground.
In the solar thermal electric generation device of this type of configuration, the gas turbine unit and the sunlight collecting heat receiver are installed on the tower section together, and it is therefore possible to improve the level of maintainability.

Moreover, in the second aspect of the solar thermal electric generation device of the present invention, between the compressor and the heat exchange heat receiving pipes, there may be provided a regenerative heat exchanger for performing heat exchange between the thermal medium supplied from the compressor to the heat exchange heat receiving pipes, and exhaust gas discharged from the turbine.
In the solar thermal electric generation device of this type of configuration, a thermal medium can be preliminarily heated before being introduced into the heat exchange heat receiving pipes, and therefore it is possible to supply the thermal medium at a high temperature to the turbine. As a result, it is possible to further improve the level of power generation efficiency of the solar thermal electric generation device. In addition, in the regenerative heat exchanger, since it is possible to effectively utilize the exhaust gas worked for power generation performed in the turbine, a separate heat source is not necessary and it is possible to simplify the configuration and reduce equipment cost.

A sunlight collecting heat receiver device of the present invention is provided with: a heat receiver through which a thermal medium flows, and which receives sunlight beams collected by a plurality of reflecting mirrors and transmits the heat to the thermal medium; and a supporting section which supports the heat receiver, and in the supporting section, on a light path between the reflecting mirrors and the heat receiver, there are formed opening sections for allowing sunlight beams collected by the plurality of reflecting mirrors to pass therethrough toward the heat receiver, and at least one of the opening sections is opened so that sunlight beams can be irradiated along the north-south direction onto the heat receiver.

According to the sunlight collecting heat receiver device of the present invention, even in a case where the supporting section is arranged on the light path of sunlight beams, after having passed through the opening sections, the sunlight beams reflected by the reflecting mirrors are collected on the heat receiver. That is to say, it is possible to suppress sunlight beams reflected by the reflecting mirrors from being blocked by the supporting section, and sunlight beams can be efficiently collected on the heat receiver. In particular, since the opening section is opened so that collected sunlight beams can be irradiated along the north-south direction onto the heat receiver, sunlight beams reflected by the reflecting mirrors having a high level of cosine efficiency can be collected on the heat receiver without being blocked.

Further, in the supporting section, it is sufficient as long as the opening sections are formed on the light path through which sunlight beams pass, and therefore, it is possible to ensure the strength of the supporting section by increasing the level of strength of the parts of the supporting section other than the opening sections. As a result, unlike a configuration which simply reduces the sectional dimension of the supporting section in order to improve the light collecting efficiency, it is possible to improve the light collecting efficiency in the heat receiver while ensuring the strength of the supporting section.
Therefore, the temperature of the heat receiver can be stably raised by the sunlight beams, and accordingly, the thermal energy obtained by the heat receiver can be efficiently transmitted to the thermal medium. Therefore, it is possible to provide a sunlight collecting heat receiver device having a high level of thermal efficiency.

In the sunlight collecting heat receiver device of the present invention, the heat receiver may be arranged on the upper side of the arrangement range where the plurality of reflecting mirrors are collaterally arranged, and the supporting section may be provided standing toward the heat receiver from an outer side range positioned on the outer side of the range of the arrangement range including the range directly under the heat receiver, and it may support the heat receiver at a position which is decentered from the center of the arrangement range toward either north or south.

According to the sunlight collecting heat receiver device of the present invention, the supporting section is provided standing toward the heat receiver from the outer side range, and it is thereby possible to arrange a reflecting mirror also directly under the heat receiver. Here, the range directly under the heat receiver is a highly efficient range where the irradiation angle of the sunlight beams irradiated onto the reflecting mirror is small and a high level of cosine efficiency can be obtained. Therefore, by arranging the reflecting mirror directly under the heat receiver, it is possible to improve the light collecting efficiency of the heat receiver.

Moreover, by arranging the heat receiver decentered from the center of the arrangement range to the upstream side in the sunlight beam irradiation direction in the north-south direction, it is possible to efficiently collect sunlight beams reflected by the reflecting mirror on the downstream side in the irradiation direction, which has a comparatively small sunlight beam irradiation angle. Therefore, it is possible to improve the efficiency of collecting sunlight beams irradiated onto the heat receiver.

In the sunlight collecting heat receiver device of the present invention, the supporting section, in an intermediate section thereof in the heightwise direction, may have a frame structure, and the opening section may be formed between the members which constitute the frame structure. According to the sunlight collecting heat receiver device of the present invention, since the supporting section has the frame structure, it is possible to increase the level of strength of the supporting section.

A sunlight collecting system of the present invention is provided with; a mirror which has a focal point and reflects sunlight beams (for example, a primary mirror in the embodiments), a light receiving section which receives reflected light from the mirror, and an optical path which is arranged between the mirror and the light receiving section, and which guides the reflected light from the mirror to the light receiving section. The mirror has a focal point, and the optical path has a first optical component (for example, a light collecting lens in the embodiments) which converts light beams collected on the focal point into parallel light beams, and a second optical component (for example, a secondary mirror in the embodiments) which guides the parallel light beams to the light receiving section.

According to the sunlight collecting system of the present invention, having converted a light beam reflected from the mirror into a parallel light in the first optical component, the parallel light is guided in the second optical component to the light receiving section, and thereby, all of sunlight beams irradiated onto the mirror become a light beam with a predetermined spot diameter and are irradiated onto the light receiving section. Therefore, regardless of the angle of sunlight beam irradiation onto the mirror, by constantly orienting the mirror toward the direction of the sun, a light beam of a light amount equivalent to that of the sunlight beam irradiated onto the mirror can be supplied to the light receiving section. Thereby, a high level of cosine efficiency can be obtained with each mirror, and the light collecting efficiency at the light receiving section can be improved. In this case, since it is possible to reduce the number of mirrors to be arranged in order to obtain a light collecting efficiency equivalent to that obtained conventionally, equipment cost can be reduced and the mirror arrangement area can also be reduced.

Furthermore, since the reflected light collected by the mirror can be converted into a light beam of parallel light using the first optical component, diffusion of the light beam to be guided to the light receiving section can be suppressed. Therefore, it is possible to improve the light collecting efficiency while reducing the dimension of the light receiving section as much as possible.
Therefore, it is possible to provide a sunlight collecting system with a high level of light collecting efficiency while reducing manufacturing cost.

In the sunlight collecting system of the present invention, the light receiving section may have a casing supported on the supporting section provided standing on the ground, and a heat exchanger housed within the casing, and in the casing there may be formed an opening section which opens downward and receives the parallel light beams guided from the optical path.
According to the sunlight collecting system of the present invention, since the opening section is formed facing downward, compared to the case where the opening section is set sideward or upward, it is possible to suppress thermal energy radiation from the opening section to the outside.

Moreover, by reducing the mirror arrangement area as described above, the height of the supporting section can be lowered, and therefore, the cost for building the supporting section can be reduced. Furthermore, since the distance between the mirror and the light receiving section can also be reduced, control of mirror operation for guiding sunlight beams to the light receiving section becomes easier.

In the sunlight collecting system of the present invention, the optical path may have a third optical component (for example, tertiary mirror in the embodiments) which reflects the parallel light beams guided downward from the second optical component, upward toward the opening section.
According to the sunlight collecting system of the present invention, even in a case where the solar altitude is low or where the mirror and the light receiving section are distanced from each other, it is possible to effectively take in sunlight beams into the light receiving section.

In the sunlight collecting system of the present invention, the mirror and the optical path may be integrally and oscillatably configured so as to track the position of the sun.
According to the sunlight collecting system of the present invention, the mirror and the optical path are integrally oscillated, and thereby the relative positions of the mirror and the optical path are always fixed. Therefore, angle adjustment of each optical component becomes easier, and the sun can be quickly tracked.

A first aspect of a power generating device of the present invention is provided with: a heat receiver which receives sunlight beams and supplies a thermal medium having a heat amount according to the received light beams; a generator which increases/decreases the driving force according to the amount of supplied electric power when electric power is supplied, and which generates electric power of a power generation amount according to performed control when the electric power is not supplied; a control device which detects the heat amount and supplies the electric power to the generator or which controls the power generation amount of the generator so as to compensate variations in the detected heat amount; and a turbo machine which is driven by the thermal medium supplied from the heat receiver, and by the driving force of the generator.

In the first aspect of the power generating device of the present invention, in a process from the moment of activation of the turbo machine to the moment where the generator supplies the electric power to an external system, the control device may control the generator so as to compensate variations in the heat amount.

In the first aspect of the power generating device of the present invention, in a process from the moment of activation of the turbo machine to the moment where the phase of the voltage of the generator and the phase of the voltage of the system are synchronized, the control device may control the generator so as to compensate variations in the heat amount.

In the first aspect of the power generating device of the present invention, in a case where the detected heat amount is a predetermined heat amount or lower, the control device may increase the amount of electric power to be supplied, and in a case where the detected heat amount is a predetermined heat amount or higher, it may reduce the amount of electric power to be supplied.

In the first aspect of the power generating device of the present invention, in a case where the detected heat amount is a predetermined heat amount or lower, the control device may increase the amount of electric power to be supplied, and in a case where the detected heat amount is a predetermined heat amount or higher, it may cause the generator to perform power generation.

In the first aspect of the power generating device of the present invention, the control device may detect the rotation speed of the turbo machine, instead of detecting the heat amount.

In the first aspect of the power generating device of the present invention, there may be provided a heat amount prediction section which predicts transition of the heat amount, and in a case where the heat amount is predicted to recover to a predetermined heat amount, the control device may control the electric power to be supplied to the generator so that the rotation speed of the turbo machine becomes a predetermined rotation speed.

A second aspect of the power generating device of the present invention is provided with: a heat receiver which receives sunlight beams and supplies a thermal medium having a heat amount according to the received light beams; a control device which detects the heat amount; a generator which is driven according to an excited magnetic force; a turbo machine which is driven by the thermal medium supplied from the heat receiver and by the generator; a heat amount prediction section which predicts transition of the heat amount; and an exciter which, in a case where the heat amount is predicted by the heat amount prediction section to recover to a predetermined heat amount, excites the generator according to the heat amount detected by the control device so that the rotation speed of the turbo machine becomes a predetermined rotation speed.

A driving control method of a power generating device of the present invention includes: a step in which the heat receiver receives sunlight beams and supplies a thermal medium having a heat amount according to the received light beams, a step in which in the case where electric power is supplied, the generator increases/decreases the driving force according to the supplied electric power amount, and in the case where the electric power is not supplied, it generates electric power of a power generation amount according to the performed control; a step in which the control device detects the heat amount, and supplies the electric power to the generator or controls the power generation amount of the generator so as to compensate variations in the detected heat amount, and a step in which the turbo machine is driven by the thermal medium supplied from the heat receiver and the driving force of the generator.

### Effects of the Invention

According to the gas turbine plant of the present invention, a gas turbine having no combustor is used instead of a steam turbine, and therefore, it is possible to achieve a higher level of power generation cycle efficiency compared to that of a steam turbine. Specifically, since there is used a heat receiver instead of a combustor, the temperature of a compressed fluid discharged from the compressor can be raised by the heat from the sun, and it can be supplied to the turbine. Moreover, in the present invention, water is not required in a power generation cycle as required with a steam turbine.

Furthermore, since there is no need for providing incidental facilities including a steam generator and condenser, the area of equipment installation can be reduced, and equipment installation cost and maintenance cost can be reduced. Moreover, the level of overall power consumption is low since the number of incidental facilities is low, and consequently, the cost of power generation becomes low.

Furthermore, in the present invention, the auxiliary driving device is driven based on the temperature of heat detected by the temperature sensor, and therefore, the compressor and the turbine do not start if a required amount of solar heat cannot be obtained by the heat receiver. That is to say, in a case where the temperature of the operating fluid supplied from the heat receiver to the turbine is low and the turbine cannot be efficiently driven, driving energy of the compressor and the turbine can be suppressed, and the cost of power generation can be reduced. Therefore, it is possible to provide a gas turbine plant which achieves a high level of power generation cycle efficiency and which reduces the cost of power generation.

According to the heat receiver of the present invention, the casing is suspended and is not externally restrained, and consequently deformation of the casing due to thermal expansion is tolerated. Therefore, it is possible to provide a heat receiver capable of suppressing the occurrence of thermal stress due to thermal expansion of the associated members.

In the first aspect of the sunlight collecting heat receiver of the present invention, since the heat exchange heat receiving pipes are arranged along the vertical direction, the direction of stress associated with the weight of the heat exchange heat receiving pipes and the extending direction of the heat exchange heat receiving pipes match with each other. Therefore, it is possible, by reducing the bending stress acting on the heat exchange heat receiving pipes, to suppress deformation and so forth of the heat exchange heat receiving pipes. In this case, compared to those cases of having a conventional configuration in which the heat exchange heat receiving pipes are arranged angled so as to face the sunlight beams, it is possible to simplify the configuration and reduce the manufacturing cost, as there is no need for an additional configuration for ensuring the strength level of the heat exchange heat receiving pipes.

In addition, according to the configuration of the present invention, since the thermal medium inlet header is arranged at the lower end of the heat exchange heat receiving pipes, and the thermal medium outlet header is arranged at the upper end, both of these headers are arranged separated from each other while having the heat exchange heat receiving pipes therebetween. That is to say, no low-temperature heat source such as the thermal medium inlet header is arranged around the thermal medium outlet header, and therefore, it is possible to suppress unnecessary radiation from the thermal medium outlet header. Therefore, the temperature of the heat receiving section can be stably raised by sunlight beams, and accordingly, the thermal energy obtained by the heat receiving section can be efficiently transmitted to the thermal medium. Therefore, it is possible to provide a sunlight collecting heat receiver having a high level of thermal efficiency.

Moreover, in the first aspect of the solar thermal electric generation device of the present invention, since power generation is performed with use of a thermal medium heated by the sunlight collecting heat receiver of the present invention, it is possible to provide a solar thermal electric generation device with superior power generation efficiency.

In the second aspect of the sunlight collecting heat receiver of the present invention, sunlight beams collected in the casing are irradiated onto the light receiving surface of the heat exchange heat receiving pipes (the surface opposing to the direction of sunlight beam irradiation) and they thereby become thermal energy, directly heating the heat exchange heat receiving pipes. Meanwhile, sunlight beams which travel through between the adjacent heat receiving pipes and which are irradiated onto the thermal insulation material, are radiated as thermal energy, and thereby the non-light receiving surface is also heated.
Therefore, thermal energy can also be transmitted to the non-light receiving surface of the heat exchange heat receiving pipes, and it is therefore possible to evenly heat the heat exchange heat receiving pipes around the entire circumferential direction. As a result, it is possible to efficiently transmit thermal energy from sunlight beams to the thermal medium, and therefore, it is possible to provide a sunlight collecting heat receiver with a high level of thermal efficiency.
In this case, compared to a conventional configuration in which the outer circumferential surfaces of the heat exchange heat receiving pipes are in contact with each other, a level of thermal energy equivalent to that of the conventional configuration can be obtained while reducing the total heat receiving area of all of the heat exchange heat receiving pipes, and therefore, it is possible to reduce the number of the heat exchange heat receiving pipes to be installed. As a result, it is possible to reduce the size, weight, and cost of the device. Furthermore, the diameter of the heat exchange heat receiving pipes can be expanded when reducing the number of the heat exchange heat receiving pipes, and therefore, it is possible to improve the level of workability and maintainability of the heat exchange heat receiving pipes.
Moreover, in the second aspect of the solar thermal electric generation device of the present invention, since power generation is performed with use of a thermal medium heated by the sunlight collecting heat receiver of the present invention, it is possible to provide a solar thermal electric generation device with superior power generation efficiency.

According to the sunlight collecting heat receiver device of the present invention, it is possible to suppress sunlight beams reflected by the reflecting mirrors from being blocked by the supporting section, and sunlight beams can be efficiently collected on the heat receiver. In particular, since the opening section is opened so that sunlight beams can be irradiated along the north-south direction onto the heat receiver, sunlight beams reflected by the reflecting mirrors having a high level of cosine efficiency can be collected on the heat receiver without being blocked. Therefore, the temperature of the heat receiver can be stably raised by the sunlight beams, and accordingly, the thermal energy obtained by the heat receiver can be efficiently transmitted to the thermal medium. Therefore, it is possible to provide a sunlight collecting heat receiver device having a high level of thermal efficiency.

According to the sunlight collecting system of the present invention, the mirror can be oriented toward the direction of the sun regardless of the angle of sunlight beam irradiation onto the mirror, and therefore, a light beam of a light amount equivalent to that of the sunlight beam irradiated onto the mirror can be supplied to the light receiving section. Thereby, a high level of cosine efficiency can be obtained with each mirror, and the light collecting efficiency at the light receiving section can be improved. In this case, since it is possible to reduce the number of mirrors to be arranged in order to obtain a light collecting efficiency equivalent to that obtained conventionally, equipment cost can be reduced and the mirror arrangement area can also be reduced. Moreover, by increasing the clearance between the mirror and the second optical component so that light beams reflected by the second optical component are not irradiated onto the sunlight collecting system in the close proximity, it is possible to reduce blocking loss while further reducing the mirror arrangement area. The term blocking loss refers to the ratio of the light amount of sunlight beams blocked by the surrounding sunlight collecting system before being reflected by the sunlight collecting system and received by the light receiving section, with respect to the light amount of sunlight beams irradiated onto the sunlight collecting system.
Furthermore, since the reflected light collected by the mirror can be converted into a light beam of parallel light using the first optical component, diffusion of the light beam to be guided to the light receiving section can be suppressed. Therefore, it is possible to improve the light collecting efficiency of the light receiving section.
Therefore, it is possible to provide a sunlight collecting system with a high level of light collecting efficiency while reducing manufacturing cost.

According to the present invention, the activating device of a solar thermal motor power generating device supplements driving of the turbo machine only for the amount of variation even if the amount of heat input varies, and therefore, it is possible to stably accelerate the turbo machine to a rated rotation speed without increasing the electrical capacity of the activating device.

Moreover, even if the heat input amount from the sun is reduced due to poor weather conditions and so forth, in a case where the heat input amount is predicted to recover, the activating device may wait for recovery of the heat input amount while standby-operating the turbo machine at a low level of electric power.

### Brief Description of the Drawings

FIG. 1 is a diagram showing a power generation cycle in a gas turbine plant according to a first embodiment of the present invention.
FIG. 2 is an explanatory diagram showing a positional relationship between heliostats and a heat receiver on the upper section of a tower in the gas turbine plant according to the first embodiment of the present invention.
FIG. 3 is a plan view showing a heliostat arrangement configuration around the tower in the gas turbine plant according to the first embodiment of the present invention.
FIG. 4A is a plan view showing a schematic configuration of the upper section of the tower in the gas turbine plant according to the first embodiment of the present invention.
FIG. 4B is a cross-sectional view showing the schematic configuration of the upper section of the tower in the gas turbine plant according to the first embodiment of the present invention.
FIG. 5 is a perspective view showing a schematic configuration of a heat receiver in the gas turbine plant according to the first embodiment of the present invention.
FIG. 6 is a schematic diagram showing a schematic configuration of the upper section of a tower in a gas turbine plant according to a second embodiment of the present invention.
FIG. 7 is a perspective view showing a connection state of a suspender in the gas turbine plant according to the second embodiment of the present invention.
FIG. 8 is a side view of an all around arrangement type power generating device in a gas turbine plant according to a third embodiment of the present invention.
FIG. 9 is a top view of the all around arrangement type power generating device in the gas turbine plant according to the third embodiment of the present invention.
FIG. 10A is a top cross-sectional view of the power generating device in the gas turbine plant according to the third embodiment of the present invention.
FIG. 10B is a side cross-sectional view of the power generating device in the gas turbine plant according to the third embodiment of the present invention.
FIG. 11 is a partially exploded perspective view showing a part of a light collecting heat receiver in the gas turbine plant according to the third embodiment of the present invention.
FIG. 12 is a perspective view of a heat receiver section in the gas turbine plant according to the third embodiment of the present invention.
FIG. 13 is a cross-sectional view taken along line A-A of FIG. 10B in the gas turbine plant according to the third embodiment of the present invention.
FIG. 14 is a perspective view of heat receiving pipes and a heat receiver main body shown in FIG. 13 in the gas turbine plant according to the third embodiment of the present invention.
FIG. 15 is a cross-sectional view taken along line A-A of FIG. 10B in a gas turbine plant according to a fourth embodiment of the present invention.
FIG. 16 is a perspective view of heat receiving pipes and a heat receiver main body shown in FIG. 13 in the gas turbine plant according to the fourth embodiment of the present invention.
FIG. 17 is a graph showing a geometric factor F with respect to the distance Lx (mm) between a thermal insulation material and the heat receiving pipe in the gas turbine plant according to the fourth embodiment of the present invention.
FIG. 18 is a graph showing a geometric factor F with respect to the ratio of the distance Lx (Lx / D) with respect to the outer diameter D in the gas turbine plant according to the fourth embodiment of the present invention.
FIG. 19 is a graph for comparing light collecting efficiencies between an all around arrangement type power generating device and a one-sided arrangement type power generating device in a gas turbine plant according to a fifth embodiment of the present invention.
FIG. 20 is a side view of the one-sided arrangement type power generating device in the gas turbine plant according to the fifth embodiment of the present invention.
FIG. 21A is a top view of the power generating device in the gas turbine plant according to the fifth embodiment of the present invention.
FIG. 21B is a cross-sectional view taken along line C-C in FIG. 21A.
FIG. 22 is a side view showing a sunlight collecting heat receiving system in a sixth embodiment.
FIG. 23 is a plan view showing the sunlight collecting heat receiving system in the sixth embodiment.
FIG. 24 is a partially exploded perspective view showing a part of a light collecting heat receiver in a gas turbine plant according to the sixth embodiment.
FIG. 25 is a side view showing a sunlight collecting heat receiving system in a seventh embodiment.
FIG. 26 is a plan view showing the sunlight collecting heat receiving system in the seventh embodiment.
FIG. 27 is a side view of the sunlight collecting heat receiving system showing a modified example of the seventh embodiment.
FIG. 28 is a plan view of the sunlight collecting heat receiving system showing the modified example of the seventh embodiment.
FIG. 29 is a perspective view of a sunlight collecting heat receiving system in an eighth embodiment.
FIG. 30 is a perspective view of a sunlight collecting heat receiving system showing a modified example of the eighth embodiment.
FIG. 31 is a perspective view of a sunlight collecting heat receiving system showing a modified example of the eighth embodiment.
FIG. 32 is a perspective view of a sunlight collecting heat receiving system showing a modified example of the eighth embodiment.
FIG. 33 is a perspective view of a sunlight collecting heat receiving system in a ninth embodiment.
FIG. 34 is a cross-sectional view taken along line D-D of FIG. 33.
FIG. 35 is a side view of a sunlight collecting heat receiving system in a tenth embodiment.
FIG. 36 is a perspective view of a sunlight collecting heat receiving system in the tenth embodiment.
FIG. 37 is a perspective view of a sunlight collecting heat receiving system showing a modified example of the tenth embodiment.
FIG. 38 is a plan view of the sunlight collecting heat receiving system showing the modified example of the tenth embodiment.
FIG. 39 is a plan view of the sunlight collecting heat receiving system showing a modified example of the tenth embodiment.
FIG. 40 is a perspective view of a sunlight collecting heat receiving system in an eleventh embodiment.
FIG. 41 is a side view of a sunlight collecting heat receiving system in a twelfth embodiment.
FIG. 42 is a cross-sectional view taken along line E-E of FIG. 41.
FIG. 43 is a side view showing a sunlight collecting heat receiving system in a thirteenth embodiment.
FIG. 44 is a side view of the sunlight collecting heat receiving system in the thirteenth embodiment in a state where one of the heliostats is taken out.
FIG. 45 is a side view of a heliostat in the thirteenth embodiment.
FIG. 46 is a diagram seen in the direction of arrow A of FIG. 45.
FIG. 47 is a side view of a light collecting heat receiving system showing a modified example of the thirteenth embodiment.
FIG. 48 is a block diagram showing a configuration of a power generating device in a fourteenth embodiment of the present invention.
FIG. 49 is a diagram showing operations of the power generating device in the fourteenth embodiment of the present invention (where there is no heat input variation).
FIG. 50 is a diagram for describing operations of the power generating device in the fourteenth embodiment of the present invention (where the amount of input heat increases).
FIG. 51 is a diagram for describing operations of the power generating device in the fourteenth embodiment of the present invention (where the amount of input heat decreases).
FIG. 52 is a diagram for describing operations of a power generating device in a fifteenth embodiment of the present invention.
FIG. 53 is a diagram for describing operations of the power generating device in the fifteenth embodiment of the present invention (after rated rotation speed has been reached).
FIG. 54 is a diagram for describing operations of the power generating device in the fifteenth embodiment of the present invention (system interconnection).
FIG. 55 is a diagram for describing operations of a power generating device in a sixteenth embodiment of the present invention (where an activating device 860 does not supply electric power to a generator 880).
FIG. 56 is a diagram for describing operations of the power generating device in the sixteenth embodiment of the present invention (where the activating device 860 supplies electric power to the generator 880).
FIG. 57 is a schematic diagram showing a structure of a conventional three dimensional light collecting tower type heat receiver.
FIG. 58A is a schematic diagram showing a structure of a heat receiver of Patent Document 2.
FIG. 58B is a cross-sectional view taken along line X-X of FIG. 58A.
FIG. 59 is a diagram showing a distribution of cosine efficiency with respect to the distance from a light collecting heat receiver.

### Best Mode for Carrying Out the Invention

### First Embodiment

Hereunder, a first embodiment of the present invention is described, with reference to the drawings. This embodiment illustrates an aspect of the present invention and does not limit this invention, and it may be arbitrarily modified without departing from the technical concept of the invention. Moreover, in the following drawings, scales and numbers of each structure may differ from the actual structure in order to facilitate understanding of each configuration.

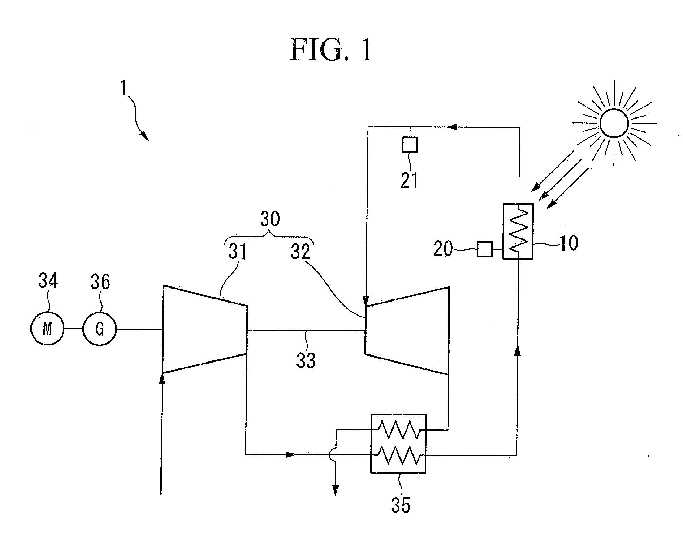

FIG. 1 is a diagram showing a power generation cycle in a gas turbine plant of the present invention. As shown in FIG. 1, the configuration of a gas turbine plant 1 comprises; a heat receiver 10, a temperature sensor 20, an auxiliary driving device 34, a rotational shaft 33, a gas turbine 30, an auxiliary combustor 21, a regenerative heat exchanger 35, and a generator 36.

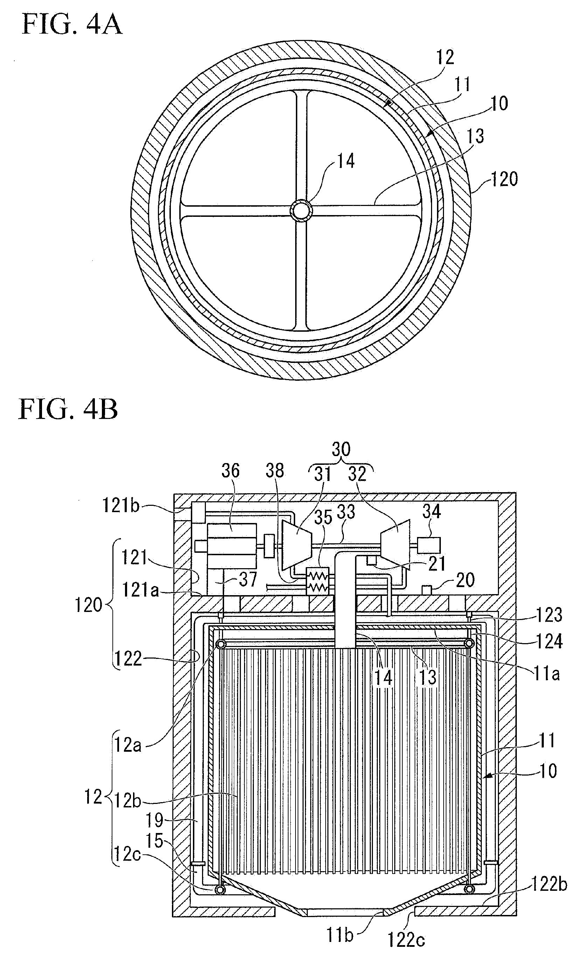

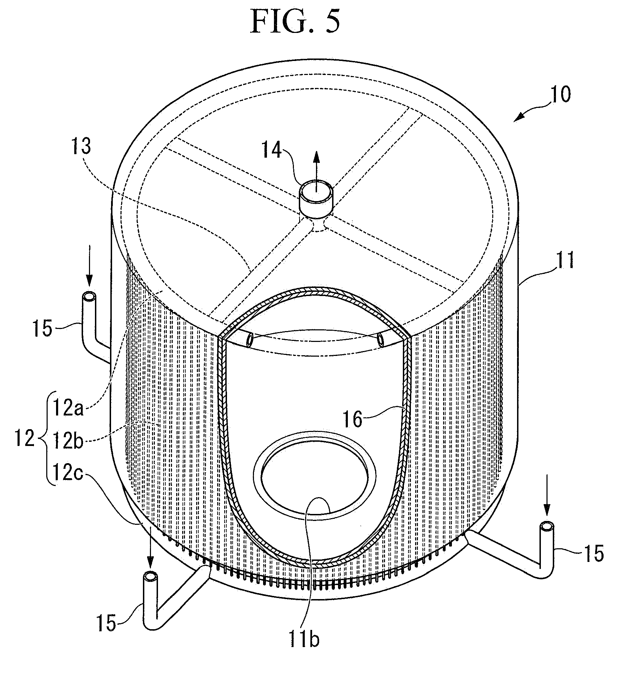

The heat receiver 101 is arranged in a position which receives irradiation of sunlight beams, and it has a function for receiving heat of the sun. As the heat receiver 10, there may be used a cavity type heat receiver in which heat receiving pipes are placed inside a casing for example. Details of the structure of the heat receiver 10 are described later (refer to FIG. 4A, FIG. 4B, and FIG. 5).

The temperature sensor 20 is arranged in the vicinity of the heat receiver 10, and it has a function for detecting heat received by the heat receiver 10. As the temperature sensor 20, for example, a thermocouple may be used. Moreover, as a thermocouple, it is preferable to use one in which platinum rhodium alloy and platinum are bonded therein, from the aspect of measurement range and measurement precision.

The auxiliary driving device 34 is connected to the rotational shaft 33, and it drives based on the temperature of heat detected by the temperature sensor 20. As the auxiliary driving device 34, for example, an electric motor may be used. In the case where an electric motor is employed as the auxiliary driving device 34, when the temperature of heat detected by the temperature sensor 20 is an allowable temperature or higher, the rotational shaft 33 is rotated based on a control signal from a control device (not shown in the diagram). That is to say, in a case where the required amount of solar heat cannot be obtained by the heat receiver 10, the rotational shaft 33 does not rotate.

The gas turbine 30 has a compressor 31 and a turbine 32, and it is started by driving of the electric motor (auxiliary driving device) 34. The compressor 31 draws in and compresses a fluid serving as a thermal medium (for example, air) to produce a compressed fluid. The turbine 32 is rotated with energy of an operating fluid (high temperature compressed fluid) supplied through the regenerative heat exchanger 35 and the heat receiver 10. As described above, in the present embodiment, there is used the gas turbine 30 having no combustor instead of a steam turbine, and therefore, it is possible to more efficiently perform a power generation cycle compared to a steam turbine. Moreover, water is not required in a power generation cycle as required with a steam turbine. Furthermore, since there is no need for providing incidental facilities such as a steam generator and condenser, it is possible to reduce the area of equipment installation. Moreover, since the number of incidental facilities is small, overall power consumption is lower.

The compressor 31 and the turbine 32 are directly connected with each other by the coaxial rotational shaft 33. The rotational shaft 33 is rotated by driving of the electric motor 34. Thereby, the driving force of the compressor 31 can be compensated with the driving force generated by the rotation of the turbine 32. As a result, the capacity of the electric motor 34 and a torque converter (not shown in the diagram) can be made small.

The auxiliary combustor 21 is provided between the heat receiver 10 and the turbine 32. The auxiliary combustor 21 auxiliarily heats the operating fluid to be supplied to the turbine 32. When the temperature of the operating fluid to be supplied to the turbine 32 is insufficient, the auxiliary combustor 21 operates based on a control signal from the control device (not shown in the diagram). As result, during evening hours where solar energy cannot be utilized or in those cases where solar energy is insufficient due to poor weather conditions, it is possible to auxiliarily heat the operating fluid discharged from the compressor 31 and heated in the heat receiver 10 to thereby raise the temperature thereof, and then supply it to the turbine 32.

The regenerative heat exchanger 35 is arranged in the vicinity of the gas turbine 30, and it has a function for performing heat exchange between the compressed fluid (low temperature fluid) supplied from the compressor 31 and the exhaust (high temperature fluid) from the turbine 32. As the regenerative heat exchanger 35, for example, a helical coil type heat exchanger or a plate fin type heat exchanger may be used.

The generator 36 is connected to the rotational shaft 33, and it has a function for converting kinetic energy generated due to the rotation of the turbine 32 into electric energy.

Next there is described a power generation cycle of the gas turbine plant 1 having the above configuration. When the temperature of heat from the sun detected by the temperature sensor 20 becomes the allowable temperature or higher, the electric motor 34 is driven. When the electric motor 34 is driven, the compressor 31 and the turbine 32 start. Consequently, the compressor 31 draws in and compresses a fluid (for example, air) to produce a compressed fluid. The compressed fluid generated by the compressor 31 travels through the regenerative heat exchanger 35 and is subjected to heat exchange with the exhaust of the turbine 32. The compressed fluid, the temperature of which has been raised as a result of the heat exchange (heat recovery) performed in the regenerative heat exchanger 35, is then supplied to the heat receiver 10 to be further heated with the heat from the sun. The high temperature compressed fluid, the temperature of which has been further raised in the heat receiver 10, is then supplied to the turbine 32 as an operating fluid. Consequently, the turbine 32 is rotated with the energy of the high temperature compressed fluid supplied from the turbine 32. Then, kinetic energy generated due to the rotation of the turbine 32 is converted by the generator 36 into electric energy, and is obtained as electric power.

As described above, in the present embodiment, since there is used the heat receiver 10 instead of a combustor, the temperature of the compressed fluid discharged from the compressor 31 can be raised by the heat from the sun at a high level of efficiency, and it can be supplied to the turbine 32.

During evening hours or in those cases where light of the sun cannot be obtained sufficiently due to cloudy or rainy weather, the auxiliary combustor 21 arranged between the heat receiver 10 and the turbine 32 injects and combusts a fuel to thereby raise the temperature of the operating fluid to be supplied to the turbine 32 to a predetermined temperature.

Moreover, the exhaust which has worked in the turbine 32 travels through the regenerative heat exchanger 35 as described above, and its heat is recovered by the compressed fluid supplied from the compressor 31, and then it is discharged.

Next there is described a tower type (three dimensional light collecting type) configuration is described as an example of the gas turbine plant 1 of the present invention. The tower type configuration is such that a heat receiver is arranged on the upper section of a tall tower, and a number of reflected light control mirrors called heliostats for collecting light are arranged on the ground around the tower, to thereby collect light beams on the heat receiver on the upper section of the tower.

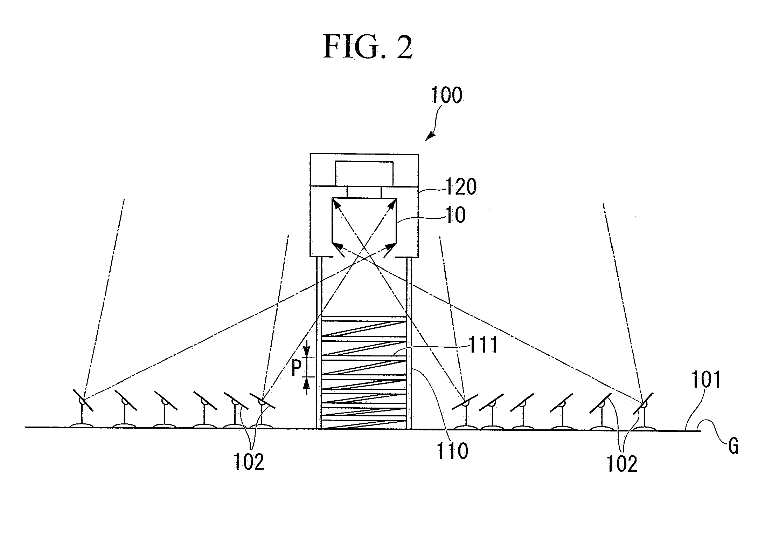

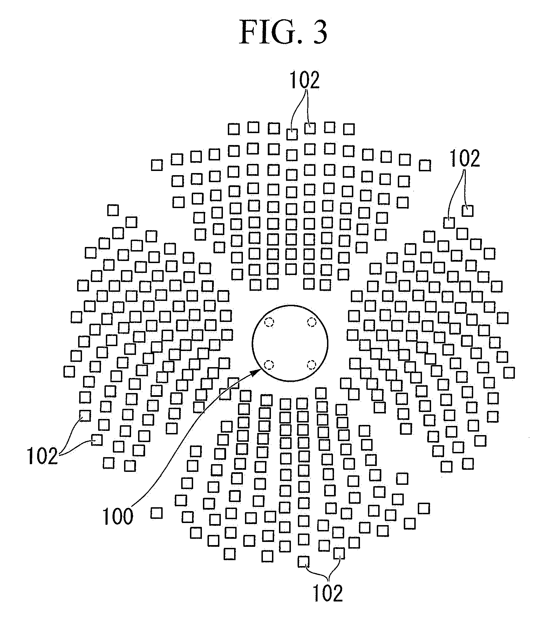

FIG. 2 is an explanatory diagram showing a positional relationship between the heliostats and the heat receiver on the upper section of the tower. FIG. 3 is a plan view showing a configuration of a heliostat arrangement around the tower.

As shown in FIG. 2, on the ground G there is provided a heliostat field 101. On this heliostat field 101 there are arranged a plurality of heliostats 102 for reflecting sunlight beams. Moreover, in the center section of the heliostat field 101 there is provided a tower type sunlight collecting heat receiver 100 which receives sunlight beams guided by the heliostats 102. As shown in FIG. 3, the heliostats 102 are arranged 360 degrees all around the tower type sunlight collecting heat receiver 100.

The tower type sunlight collecting heat receiver 100 comprises a tower 110 provided standing on the ground G, and a heat receiver 10 installed within a housing chamber 120 on the upper section of the tower 110.

In the tower 110, there are provided a plurality of reinforcement members 111. The reinforcement members 111 are provided having a clearance (distance between the adjacent reinforcement members) P therebetween so as to intersect with the lengthwise direction of the tower 110. The clearance P becomes greater with approach to the upper section of the tower 110 (the side where the heat receiver 10 is installed) within a range of light paths through which light beams from the sun are irradiated from the heliostats 102 onto the heat receiver 10. As a result, light beams reflected by the heliostats 102 are collected on the heat receiver 10 on the upper section of the tower 110 without being blocked by the reinforcement members 111. As the arrangement structure of the reinforcement members 11, for example, a truss structure is preferable from the aspect of ensuring the level of rigidity.

FIG. 4A is a plan view showing a schematic configuration of the upper section of the tower. FIG. 4B is a cross-sectional view showing the schematic configuration of the upper section of the tower. FIG. 5 is a perspective view showing a schematic configuration of the heat receiver.

As shown in FIG. 4A, the housing chamber 120 on the upper section of the tower 110 is of a planarly circular shape. The heat receiver 10 comprises a cylindrical casing 11, and heat receiving pipes 12.

As shown in FIG. 4B, the housing chamber 120 is of a structure having two housing chambers namely, an upper housing chamber 121 and a lower housing chamber 122. On the lower surface side of the lower housing chamber 122 there is provided an opening section 122c for taking in sunlight beams. The opening section 122c is of a circular shape according to the spot diameter of the sunlight beams.

The heat receiver 10 is provided within the lower housing chamber 122. The heat receiver 10 has the heat receiving pipes 12 which receive heat from the sun and transmit the heat to the thermal medium flowing thereinside, a cylindrical casing 11, first suspenders 123 which suspend the casing 11 with respect to the outside, and second suspenders 124 which suspend the heat receiving pipes with respect to the casing 11. Specifically, there is provided a structure such that the heat receiver 10 is fixed via the first suspenders 123 to a separating wall 121a between the upper housing chamber 121 and the lower housing chamber 122, and it is suspended within the lower housing chamber 122 from the separating wall 121a. That is to say, the heat receiver 10 is arranged separated from the inner wall of the lower housing chamber 122 so that it does not come in contact with the inner wall of the lower housing chamber 122.
The first suspender 123 is provided in a plurality of positions around the circumferential direction of the separating wall 121a, and is of a structure having flexibility. Moreover, the first suspender 123 passes through the casing 11 and is integrated with the second suspender 124 described later. Accordingly, deformation of the casing 11 due to thermal expansion is tolerated in a case where heat exchange is performed and a high temperature (for example, 900°C or higher) is reached inside the heat receiver 10. Moreover, on the lower surface side of the casing 11 there is provided an opening section 11b for taking in sunlight beams. As with the opening section 122c described above, the opening section 11b is of a circular shape according to the spot diameter of the sunlight beams.
Within the upper housing chamber 121 there are arranged the gas turbine 30 operated with a fluid (thermal medium) heated in the heat receiver 10 serving as an operating fluid, and the generator 36 which obtains the operating energy of the gas turbine 30 as electric power. The gas turbine 30 has the compressor 31 which draws in and compresses a thermal medium fluid (for example, air) to produce a compressed fluid, and the turbine 32 which is operated by the fluid compressed by the compressor 31 and heated by the heat receiver 10, serving as an operating fluid. Then, kinetic energy generated due to the rotation of the turbine 32 is converted by the generator 36 into electric energy, and is obtained as electric power.

Inside the upper housing chamber 121, there are arranged the temperature sensor 20 which detects the heat received by the heat receiver 10, the auxiliary driving device (not shown in the diagram) which causes the gas turbine 30 to start, the regenerative heat exchanger 35 which performs heat exchange between the operating fluid and the exhaust of the turbine 32 before the operating fluid is heated by the heat receiver 10, the auxiliary combustor 21 which auxiliarily heats the operating fluid and supplies it to the turbine 32, and a vibration damper 37 which dampens vibration of the generator 36. By arranging the devices together on the upper section of the tower 110 in this way, the equipment installation area can be reduced.

Moreover, on the side surface of the upper housing chamber 121 there is provided an opening section 121b for taking in a fluid (air) to be supplied to the compressor 31. The opening section 121b is used for releasing the exhaust from the turbine 32 to the outside as necessary.

The vibration damper 37 is arranged in the vicinity of the generator 36. Specifically, the vibration damper 37 is arranged between the separating wall 121a of the upper housing chamber 121 and the generator 36. As the vibration damper 37, for example, there may be used a natural rubber-based laminated rubber (a lamination of a thin natural rubber and a steel plate), an elastic sliding bearing (a configuration body of a laminated rubber and a sliding material), a laminated rubber with a lead plug therein, or an oil damper. With this type of configuration, vibrations of the generator 36 are dampened, and thereby resonance of the tower can be prevented.

The heat receiving pipe 12 has an upper header pipe 12a, a heat receiving pipe main body 12b, and a lower header pipe 12c. The upper header pipe 12a is of a ring shape, and is arranged on the upper section of the casing 11. Specifically, there is provided a structure such that the upper header pipe 12a is fixed integrally with the first suspender 123 via the second suspender 124 to an upper wall 11a of the casing 11, and it is suspended from the separating wall 121a. The second suspender 124 is provided integrally with the first suspender 123 in a plurality of positions around the circumferential direction of the separating wall 121 a, forming a movable structure. Accordingly, deformation of the heat receiving pipe 12 due to thermal expansion is tolerated in a case where heat exchange is performed and a high temperature (for example, 900°C or higher) is reached inside the heat receiver 10.

The lower header pipe 12c is of a ring-shaped or polygonal refraction pipe shape, and is arranged at the lower section of the casing 11. Specifically, the lower header pipe 12c is exposed to the outside of the casing 11, and it is arranged in the vicinity of a lower wall 122b within the lower housing chamber 122.

The heat receiving pipe main body 12b is provided in a plurality of positions between the upper header pipe 12a and the lower header pipe 12c, and one end thereof is connected to the upper header pipe 12a and the other end thereof is connected to the lower header pipe 12c. The heat receiving pipe main body 12b is to allow the operating fluid flowing out from the lower header pipe 12c to flow out to the upper header pipe 12a. Moreover, the heat receiving pipe main bodies 12b are provided at predetermined intervals (clearance) around the circumferential direction of the upper header pipe 12a (the lower head pipe 12c). The other end of the heat receiving pipe main body 12b is exposed to the outside of the casing 11. The heat receiving pipe main body 12b is of a linear shape along the lengthwise direction of the casing 11, and bending stress due to its own weight does not act thereon. Furthermore, the direction of the operating fluid flowing in the heat receiving pipe main body 12b is set to one direction.

Moreover, on the lower header pipe 12c there is provided an L shape inlet pipe 15. Between this inlet pipe 15 and the compressor 31, there are provided a heat receiver supply path 38 and a connection pipe 19. The connection pipe 19 is exposed to the outside of the casing 11, and it is arranged along the inner wall of the lower housing chamber 122. The compressed fluid produced by the compressor 31 is supplied to the lower header pipe 12c through the heat receiver supply path 38, the connection pipe 19, and the inlet pipe 15. The compressed fluid supplied to the lower header pipe 12c, while traveling through the plurality of heat receiving pipe main bodies 12b and the upper header pipe 12a, is heated by the thermal energy of the sunlight beams irradiated from the opening section 11b.

As shown in FIG. 5, on the inner wall surface of the casing 11 there is provided a thermal insulation material 16 which absorbs solar heat. The temperature of the inner surface of the thermal insulation material 16 is raised by the heat absorbed by the thermal insulation material 16, and it radiates heat to the back surface of the heat receiving pipe main body 12b (the surface on the side where sunlight beams are not directly irradiated), heating the entire heat receiving pipes 12 around the circumferential direction. Moreover, the thermal insulation material 16 returns radiation heat released from the heat receiving pipe main body 12b to the back surface of the heat receiving pipe main body 12b, stably heating the heat receiving pipe main body 12b. Furthermore, the thermal insulation material 16 reduces the amount of heat released from the heat receiving pipe main body 12b and the upper header pipe 12a, to the outside.

Furthermore, a reflecting mirror may be provided on the inner surface of the thermal insulation material 16 (between the casing 11 and the thermal insulation material 16) to reflect light rather than radiating heat. It is preferable that this reflecting mirror is provided on the portion in the casing 11 where the heat receiving pipe main body 12b is to be arranged. Thereby, the reflected light of sunlight beams irradiated through the clearance between the heat receiving pipe main bodies 12b can be irradiated onto the back surface of the heat receiving pipe main bodies 12b (the thermal insulation material 16 side surface), and it can be converted into thermal energy.

Meanwhile, to the upper header pipe 12a there is connected via a plurality of connection pipes 13, an outlet pipe 14. The plurality of connection pipes 13 is such that one end thereof is connected to the upper header pipe 12a, the other end thereof is connected to the outlet pipe 14, and it is of a planarly X shape. The outlet pipe 14 is bent within the upper housing chamber 121 and is of a sectionally L shape, and an end section of the outlet pipe 14 on the side opposite to the side connected to the plurality of connection pipes 13, is connected to the turbine 32. The compressed fluid, which has traveled through the heat receiving pipe main body 12b and the upper header pipe 12a and which has been heated as a result, travels through the plurality of connection pipes 13 and further through the outlet pipe 14, and then it becomes an operating fluid of a high temperature and high pressure and is supplied to the turbine 32.

According to the gas turbine plant 1 of the present embodiment, there are provided the heat receiver 10 which receives heat from the sun, the gas turbine 30 having the compressor 31 and the turbine 32 which is operated by the fluid compressed by the compressor 31 and heated by the heat receiver 10, serving as an operating fluid, the temperature sensor 20 which detects the heat from the sun, the electric motor 34 which is driven based on the temperature of the heat detected by the temperature sensor 20 and starts the gas turbine 30, and the generator 36 which converts kinetic energy generated by the rotation of the turbine 32 into electric energy. Since there is used the gas turbine 30 having no combustor instead of a steam turbine, it is possible to achieve a higher level of power generation cycle efficiency compared to that of a steam turbine. Specifically, since there is used the heat receiver 10 instead of a combustor, the temperature of a compressed fluid discharged from the compressor 31 can be raised by the heat from the sun, and it can be supplied to the turbine 32. Moreover, in the present invention, water is not required in a power generation cycle as required with a steam turbine. Furthermore, since there is no need for providing incidental facilities including a steam generator and condenser, the area of equipment installation can be reduced, and equipment installation cost and maintenance cost can be reduced. Moreover, the level of overall power consumption is low since the number of incidental facilities is low, and consequently, the cost of power generation becomes low. Furthermore, in the present invention, the electric motor 34 is driven based on the temperature of heat detected by the temperature sensor 20, and therefore, the compressor 31 and the turbine 32 do not start if a required amount of solar heat cannot be obtained by the heat receiver. That is to say, in a case where the temperature of the operating fluid supplied from the heat receiver 10 to the turbine 32 is low and the turbine 32 cannot be efficiently driven, driving energy of the compressor 31 and the turbine 32 can be suppressed, and the cost of power generation can be reduced. Therefore, it is possible to provide a gas turbine plant 1 which achieves a high level of power generation cycle efficiency and which reduces the cost of power generation.

According to this configuration, since the compressor 31 and the turbine 32 are directly connected with each other by the coaxial rotational shaft 33, the driving power of the compressor 31 can be compensated by the power generated by rotation of the turbine 32. As a result, the capacity of the electric motor 34 and the torque converter can be made small. Therefore, it is possible to provide a gas turbine plant 1 which reliably achieves a high level of power generation cycle efficiency and which significantly reduces the cost of power generation.

Moreover, according to this configuration, between the compressor 31 and the heat receiver 10, there is provided the regenerative heat exchanger 35 which performs heat exchange between the compressed fluid discharged from the compressor 31 and the exhaust of the turbine 32, and therefore, the temperature of the operating fluid is raised by the exhaust of the turbine 32 before being heated by the heat receiver 10. As a result, the temperature of the operating fluid to be heated by the heat receiver 10 can be preliminarily raised. Therefore, it is possible to provide a gas turbine plant 1 which reliably achieves a high level of power generation cycle efficiency and which significantly reduces the cost of power generation.

Furthermore, according to this configuration, between the heat receiver 10 and the turbine 32, there is provided the auxiliary combustor 21 which auxiliarily heats the compressed fluid to be supplied to the turbine 32, and therefore, during evening hours where solar energy cannot be utilized or in those cases where solar energy is insufficient due to poor weather conditions, it is possible to auxiliarily heat the operating fluid heated by the heat receiver 10, and supply it to the turbine 32. Therefore, it is possible to provide a gas turbine plant 1 which achieves power generation cycle stability and reliability.

Moreover, according to this configuration, since the tower type is employed, the heliostats 102 collect sunlight beams onto the heat receiver 10 on the upper section of the tower 110, and they are converted into thermal energy of high temperature. Therefore, it is possible to provide a gas turbine plant 1 which significantly achieves a high level of power generation cycle efficiency.

Furthermore, according to this configuration, the tower 110 has a plurality of the reinforcement members 111 provided having a clearance P therebetween so as to intersect with the lengthwise direction of the tower, and the clearance P becomes greater with approach to the upper section of the tower 110 within a range serving as a light path through which light beams from the sun are irradiated from the heliostats 102 onto the heat receiver 10. As a result, the heliostats 102 reliably collect sunlight beams onto the heat receiver 10 on the upper section of the tower 110. That is to say, light beams reflected by the heliostats 102 are collected on the heat receiver 10 on the upper section of the tower 110 without being blocked by the reinforcement members 111. Therefore, it is possible to provide a gas turbine plant 1 which significantly achieves a high level of power generation cycle efficiency.

Moreover, according to this configuration, the respective devices including the temperature sensor 20, the electric motor 34, the gas turbine 30, and the generator 36 are arranged on the upper section of the tower 110, and therefore, the devices are arranged together on the upper section of the tower 110 and the area for equipment installation can be reduced. Therefore, it is possible to reduce equipment installation cost.

Furthermore, according to this configuration, on the upper section of the tower 110, there is provided the vibration damper 37 which dampens vibrations of the generator 36, and therefore, vibrations of the generator 36 are damped and resonance of the tower can be prevented. Therefore, it is possible to provide a gas turbine plant 1 which achieves power generation cycle stability and reliability.

In the present embodiment, the regenerative heat exchanger 35 is provided between the compressor 31 and the heat receiver 10. However, the configuration is not limited to this. For example, the structure may be such that the compressor 31 and the heat receiver 10 are directly connected with each other. Thereby, it is possible to reduce the area for equipment installation and reduce equipment installation cost. Moreover, the compressed fluid discharged from the compressor 31 is directly supplied to and heated by the heat receiver 10 without pressure loss while maintaining its high pressure. Therefore, it is possible to provide a gas turbine plant 1 which achieves power generation cycle stability and reliability.

Furthermore, in the present embodiment, the temperature sensor 20 is provided in the vicinity of the heat receiver 10. However, the configuration is not limited to this. For example, the temperature sensor 20 may be provided in the vicinity of the heliostats 102. That is to say, the temperature sensor 20 only needs to be arranged at a position where it can detect the heat from the sun.

Moreover, in the present embodiment, the electric motor 34 is provided on one end of the rotational shaft 33, and the generator 36 is provided on the other end thereof. However, the configuration is not limited to this. For example, the electric motor 34 and the generator 36 may be provided on one end of the rotational shaft 33. Moreover, the generator 36 may also serve to perform the function of the electric motor 34, and may be provided on one end of the rotational shaft 33. That is to say, the electric motor 34 and the generator 36 only need to be provided coaxially with the rotational shaft 33.

Furthermore, in the present embodiment, the regenerative heat exchanger 35 is provided in the vicinity of the gas turbine 30. However, the configuration is not limited to this. For example, the regenerative heat exchanger 35 may be arranged in the vicinity of the heat receiver 10. That is to say, the regenerative heat exchanger 35 only needs to be arranged at a position where it can perform heat exchange between the operating fluid and the exhaust of the turbine 32 before the operating fluid is heated by the heat receiver 10.

Moreover, in the present embodiment, the heliostats 102 are provided 360 degrees all around the tower 110. However, the configuration is not limited to this. For example, the heliostats 102 may be arranged on one side of the tower 110 (in a planar angle range of 180 degrees or less). That is to say, the configuration of the arrangement of the heliostats 102 is sufficient as long as they are arranged on the side where a large effective mirror area associated with the degree of incidence/reflection angle of the heliostats 102 can be ensured according to actual changes in the solar altitude.

### Second Embodiment

Next there is described a second embodiment of the present invention. This embodiment illustrates an aspect of the present invention and does not limit this invention, and it may be arbitrarily modified without departing from the technical concept of the invention. Moreover, in the following drawings, scales and numbers of each structure may differ from the actual structure in order to facilitate understanding of each configuration. Those constituents which have already been described in the above first embodiment are given the same reference symbols, and descriptions thereof are omitted.

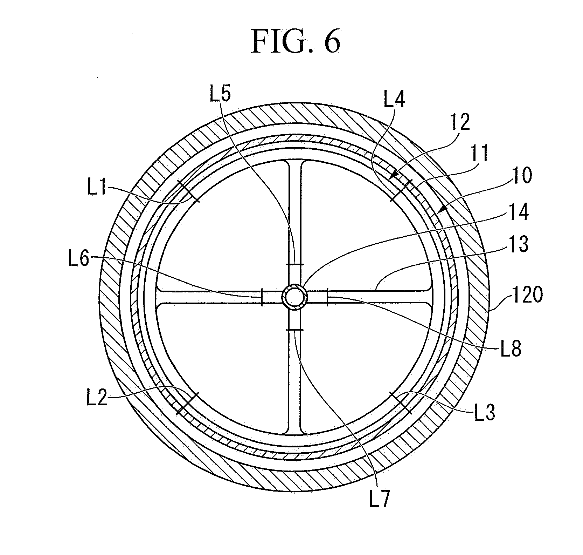

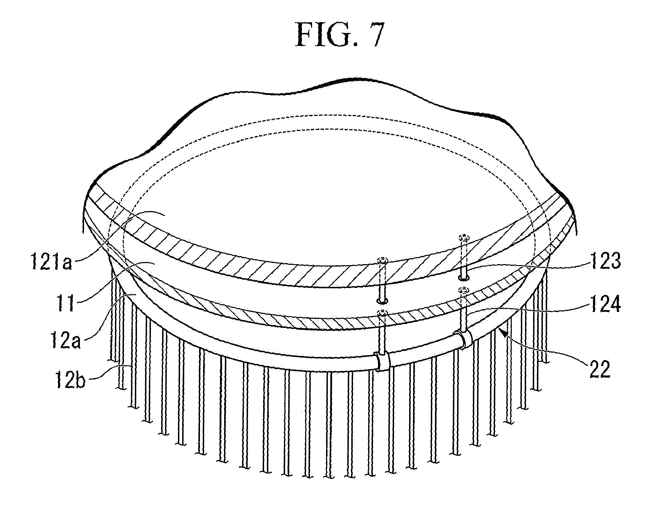

FIG. 6 is a plan view showing a schematic configuration of the upper section of a tower. FIG. 7 is a perspective view showing a state of a suspender connection. The heat receiving pipe 12 is in a structure such that the upper header pipe 12a is fixed to the upper wall 11a of the casing 11 via the second suspender 124, and it is entirely suspended from the upper wall 11a.

Moreover, the heat receiving pipe 12 is suspended by the second suspender 124 so as to be separate from the casing 11. For example, the position of the heat receiving pipe 12 with respect to the casing 11 is set by the first suspender 123 so that the outer surface of the heat receiving pipe 12 is separated from the inner surface of the casing 11 by a predetermined distance. Here, it is preferable that the predetermined distance is set within a range of 1.0 to 3.0 times the diameter of the heat receiving pipe 12. Furthermore, it is more preferable that the predetermined distance is set within a range of 1.3 to 2.0 times the diameter of the heat receiving pipe 12.

The heat receiving pipe 12 and the casing 11 are respectively connected separatably at least at one location. As shown in FIG. 6, the heat receiver 10 has the connection pipe 13 which is connected to the upper header pipe 12a and which allows the thermal medium flowing through the heat receiving pipe 12 to flow out, and the outlet pipe 14, one end of which is connected to this connection pipe 13 and the other end of which is connected to the turbine 32. The connection pipe 13 and the outlet pipe 14 are respectively connected separatably at least at one location. For example, the heat receiving pipe 12 and the casing 11 have eight dividing lines, namely dividing lines L1 to L8, and they are connected with each other by a connection joint while being capable of separating from each other into five configuration components. Specifically, these five components include a first component divided by the dividing lines L1, L2, and L6, a second component divided by the dividing lines L2, L3, and L7, a third component divided by the dividing lines L3, L4, and L8, a fourth component divided by the dividing lines L1, L4, and L5, and a fifth component divided by the dividing lines L5, L6, L7, and L8. Thereby, the heat receiver 10 can be provided in a structure with superior manufacturability and workability.

Between the upper header pipe 12a and the outlet pipe 14 there are connected four of the connection pipes 13 forming a planarly X shape. The outlet pipe 14 is bent within the upper housing chamber 121 and is of a sectionally L shape, and an end section of the outlet pipe 14 on the side opposite to the side connected to those four connection pipes 13, is connected to the turbine 32. The compressed fluid, which has traveled through the heat receiving pipe main body 12b and the upper header pipe 12a and which has been heated as a result, travels through the four connection pipes 13 and further through the outlet pipe 14, and then it becomes an operating fluid of a high temperature and high pressure and is supplied to the turbine 32.

As shown in FIG. 7, in the present embodiment, the first suspender 123 which connects the casing 11 and the lower housing chamber 122, and the second suspender 124 which connects the heat receiving pipe 12 and the casing 11 are directly connected with each other. Specifically, the first suspender 123 and the second suspender 124 are arranged in planarly overlapping positions, and the end sections thereof are connected to each other. In other words, there is provided a structure such that the first suspender 123 and the second suspender 124 serve integrally, the separating wall 121a between the upper housing chamber 121 and the lower housing chamber 122 is connected to the upper header pipe 12a, and the entire heat receiver 10 is suspended from the separating wall 121a.

Thereby, flexibility of the entire suspender improves, and consequently, displacement is absorbed by the entire suspender. As a result, deformation of the heat receiving pipe 12 and the casing 11 due to thermal expansion is significantly tolerated. Moreover, by directly connecting the first suspender 123 and the second suspender 124, the level of manufacturability and workability is improved.

According to the heat receiver 10 of the present embodiment, since there are provided the heat receiving pipe 12 which receives heat from the sun and transmits the heat to the thermal medium flowing thereinside, the casing 11 which houses the heat receiving pipe 12, and the first suspender 123, one end of which is fixed to the outside and the other end of which is fixed to the casing, and which suspends this casing 11, the casing 11 is suspended and therefore is not externally restrained. As a result, deformation of the casing 11 due to thermal expansion is tolerated. Therefore, it is possible to provide a heat receiver 10 capable of suppressing the occurrence of thermal stress due to thermal expansion of the associated members.

Moreover, according to this configuration, since the first suspender 123 has flexibility, deformation is absorbed, and accordingly, deformation of the casing 11 due to thermal expansion is tolerated. Therefore, it is possible to provide a heat receiver 10 capable of significantly suppressing the occurrence of thermal stress due to thermal expansion of the associated members.

Furthermore, according to this configuration, since the heat receiving pipe 12 is suspended by the second suspender 124, it is not externally restrained, and deformation of the heat receiving pipe 12 and the casing 11 due to thermal expansion is tolerated. Therefore, it is possible to provide a heat receiver 10 capable of significantly suppressing the occurrence of thermal stress due to thermal expansion of the associated members.

Moreover, according to this configuration, since the heat receiving pipe 12 is separated from the casing 11, the clearance created by this separation tolerates deformation of the heat receiving pipe 12 and the casing 11 due to thermal expansion. Therefore, it is possible to provide a heat receiver 10 capable of significantly suppressing the occurrence of thermal stress due to thermal expansion of the associated members.

Furthermore, according to this configuration, as a result of the first suspender 123 and the second suspender 124 being directly connected with each other, flexibility of the entire suspender improves. Therefore, the entire suspender absorbs displacement, and it significantly tolerates deformation of the heat receiving pipe 12 and the casing 11 due to thermal expansion. Moreover, as a result of the first suspender 123 and the second suspender 124 being directly connected with each other, the level of manufacturability and workability improves, and it is therefore possible to provide a heat receiver 10 which reduces manufacturing cost.

Furthermore, according to this configuration, the heat receiver 10 can be manufactured by connecting at least one location of each of the heat receiving pipe 12 and the casing 11. Therefore, it is possible to provide a heat receiver 10 which has superior manufacturability and workability, and reduces manufacturing cost.

Moreover, according to this configuration, the heat receiver 10 can be manufactured by connecting at least one location of the connection pipe 13 and the outlet pipe 14. Therefore, it is possible to provide a heat receiver which has superior manufacturability and workability, and reduces manufacturing cost.

In the present embodiment, the first suspender 123 and the second suspender 124 are directly connected with each other. However, the configuration is not limited to this. For example, the positional arrangement of the first suspender 123 and the second suspender 124 may be shifted or the number thereof to be arranged may be increased/decreased, to thereby appropriately change the state of the arrangement of the first suspender 123 and the second suspender 124.

Moreover, in the present embodiment, the heat receiving pipe 12 and the casing 11 have eight dividing lines and are connected so as to be able to separate from each other into five configuration components. However, the configuration is not limited to this. For example, the heat receiving pipe and the casing 11 may be connected so as to be able to separate from each other into two, three, four, five, or more configuration components. That is to say, it is sufficient as long as the heat receiving pipe 12 and the casing 11 are each connected separatably at least at one location.

### Third Embodiment

Next there is described a third embodiment of the present invention. The following description is made with an example of a solar thermal electric generation device (hereunder, referred to as power generating device) in which the sunlight collecting heat receiver of the present invention, and a gas turbine unit which uses a thermal medium heated by the sunlight collecting heat receiver to perform power generation, are integrally configured.

### Power Generating Device

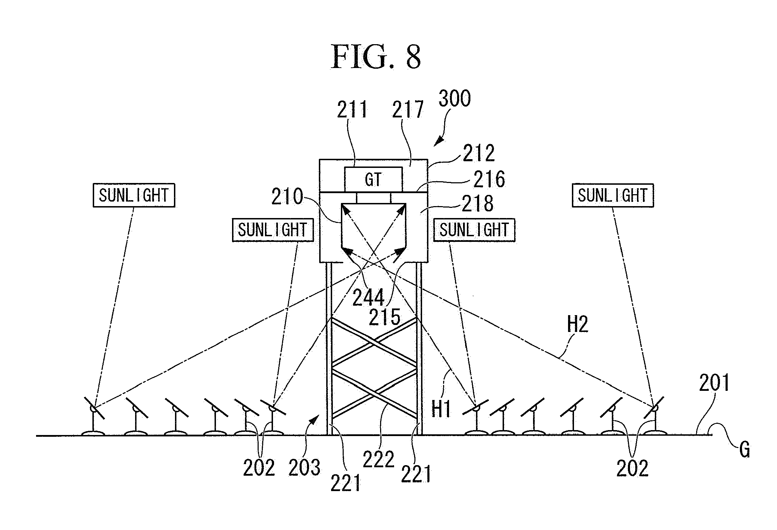

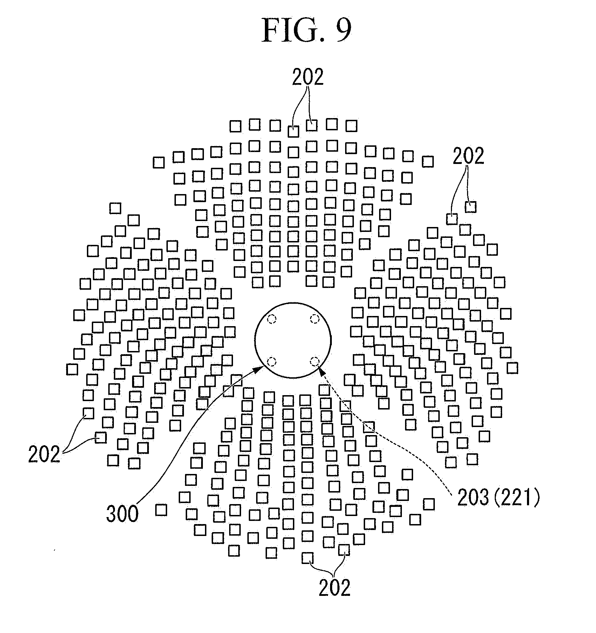

FIG. 8 and FIG. 9 are explanatory diagrams showing a positional relationship between heliostats and a power generating device on a tower, wherein FIG. 8 is a side view and FIG. 9 is a plan view. The suitable site location on the earth for a power generating device is an and region in the subtropical high-pressure belt close to the regression line where intense and superior solar radiation from the sun is available. Therefore, first, in the power generating device of the present embodiment, there is described an all around arrangement type power generating device to be arranged particularly in a low latitude region in the subtropical high-pressure belt.

As shown in FIG. 8, on the ground G there is provided a heliostat field 201. On this heliostat field 201 there are arranged a plurality of heliostats 202 for reflecting sunlight beams. Moreover, in the center section of the heliostat field 201 there is provided a tower-shaped power generating device 300 which receives sunlight beams (arrows H1 and H2 in FIG. 8) guided by the heliostats 202. That is to say, the heliostats 202 are arranged so as to surround approximately 360 degrees, all around the power generating device 300 (refer to FIG. 9).

The power generating device 300 is provided with a tower section 203 provided standing on the ground G, a housing 212 provided on the tower section 203, a light collecting heat receiver (sunlight collecting heat receiver) 210 housed in the housing 212, and a gas turbine unit 211.
The housing 212 is of a bottom-ended cylinder shape in which the axial direction thereof matches with the vertical direction, and the top surface thereof is blocked while in the radial center section on the bottom surface thereof, there is formed an opening section 215 which opens toward the ground G. Moreover, in the housing 212 there is provided a separating wall 216 which separates an upper section and lower section from each other in the axial direction. An upper space separated by the separating wall 216 is configured to serve as a turbine chamber 217 with the gas turbine unit 211 arranged therein, and a lower space is configured to serve as a light collecting chamber 218 with the light collecting heat receiver 210 arranged therein.

The tower section 203 is provided with a plurality of (for example, four) supporting columns 221 standing from the ground G toward the bottom surface of the housing 212. These supporting columns 221 are connected at equal intervals along the circumferential direction on the outer circumferential side on the bottom surface of the housing 212. As shown in FIG. 9, no heliostat 202 is arranged on the extended line of the diagonal line of each of the supporting columns 221. The reason for this is that if a supporting column 221 is arranged on a light path for sunlight beams reflected by the heliostat 202, the sunlight beams are blocked by the respective supporting columns 221, making it difficult to take in sunlight beams into the light collecting heat receiver 210. By arranging the heliostats 202 so as to avoid the diagonal line of each of the supporting columns 22 in this way, the need for wastefully installing heliostats 202 is eliminated, and it is possible to reduce equipment cost.
Moreover, the tower section 203 is provided with beam sections 222 which bridge-connect between the respective supporting columns 221. These beam sections 222 are not arranged on the light paths of sunlight beams reflected by the heliostats 202 and irradiated onto the light collecting heat receiver 210. That is to say, in the present embodiment, the beam sections 222 connect between the respective supporting columns 221 on the vertically lower side of the supporting columns 221.

### Gas Turbine Unit

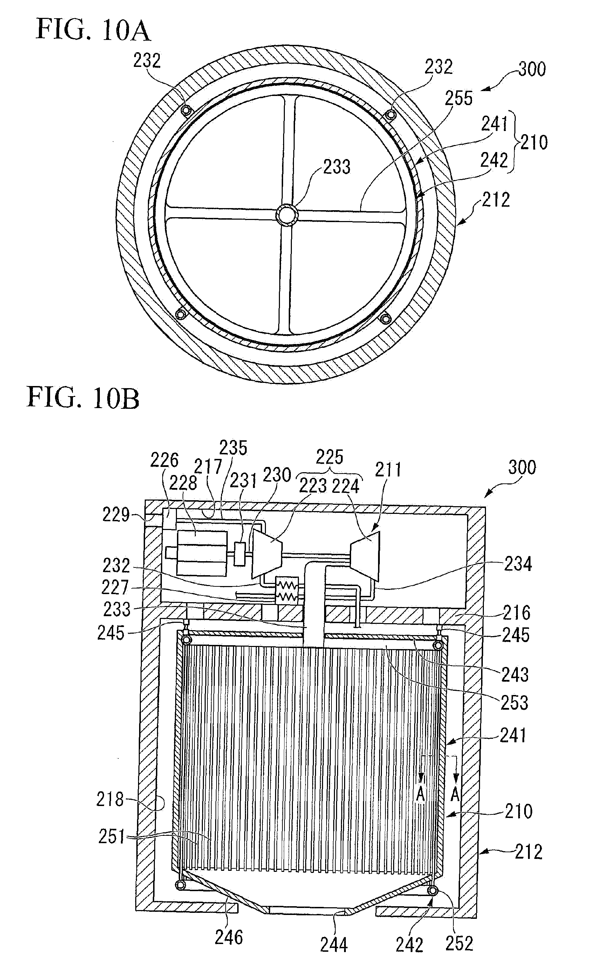

FIG. 10A is a top cross-sectional view of the power generating device, and FIG. 10B is a side cross-sectional view of the same.
As shown in FIG. 10A and FIG. 10B, the gas turbine unit 211 is provided mainly with a gas turbine 225 which is housed in the turbine chamber 217 of the housing 212, and which comprises a compressor 223 and a turbine 224, an air intake filter 226, a regenerative heat exchanger 227, and a generator 228.

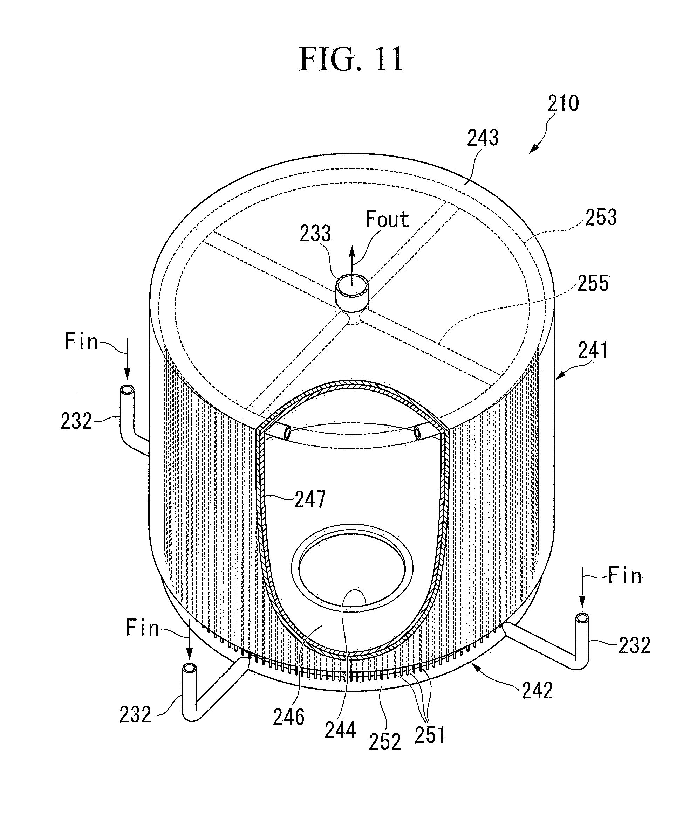

The gas turbine 225 is provided with a rotatable rotor 230 which is connected via a speed reducer 231 to the generator 228, and the compressor 223 and the turbine 224 are attached thereto so as to be arranged coaxial to this rotor 230.
The compressor 223 takes in air, which is supplied through an air supply path 235 from a supply source provided outside the housing 212 and not shown in the diagram, as an operating fluid from an air inlet 229 of the housing 212, and it generates compressed air. To the compressor 223 there is connected a heat receiver supply path 232 through which the compressed air compressed in the compressor 223 flows toward the upstream end (refer to arrow Fin in FIG. 11). The compressed air heated by the light collecting heat receiver 210 travels through a turbine supply path 233 connected to the downstream end of the light collecting heat receiver 210, to be supplied to the turbine 224 (refer to the arrow F out in FIG. 11).
The turbine 224 converts the thermal energy of the compressed air supplied from the turbine supply path 233, into rotational energy of the rotor 230, to thereby generate a driving force. This driving force is output to the generator 228 connected to the rotor 230, and thereby power generation is performed. Then, the compressed air which has flowed inside the turbine 224 becomes exhaust gas, and it travels through an air exhaust path 234 and is discharged from the turbine 224.

The air intake filter 226 is arranged between the supply source on the air supply path 235 and the compressor 223, and it removes grit and dust contained in the air supplied from the supply source before the air is supplied to the compressor 223.
Moreover, to the regenerative heat exchanger 227 there are connected the heat receiver supply path 232 and the air exhaust path 234, and it performs heat exchange between the compressed air flowing in the heat receiver supply path 232 and the exhaust gas flowing in the air exhaust path 234, so that the compressed air flowing in the heat receiver supply path 232 is preliminarily heated before being supplied to the light collecting heat receiver 210.

### Light Collecting Heat Receiver

FIG. 11 is a partially exploded perspective view showing a part of a light collecting heat receiver. As shown in FIG. 11, the light collecting heat receiver 210 is provided with a heat receiver main body 241 which is housed in a light collecting chamber 218 of the housing 212 and which serves as a casing, and a heat receiving section 242 in which compressed air supplied from the compressor 223 flows.
The heat receiver main body 241 is of a bottom-ended cylinder shape arranged in a state where the axial direction thereof matches with the axial direction of the housing 212, and an upper section thereof is blocked by a top plate section 243, while in a lower section thereof there is formed an opening section 244 which opens toward the ground G. The top plate section 243 and the separating wall 216 of the heat receiver main body 241 are connected by a plurality of hook members 245 (refer to FIG. 10B), and the heat receiver main body 241 is housed inside the light collecting chamber 218 in a state of being suspended from the separating wall 216 by these hook members 245. As described later, the lower end section of the hook member 245 passes through the heat receiver main body 241, and is connected also to the heat receiving section 242. That is to say, the heat receiver main body 241 and the heat receiving section 242 of the light collecting heat receiver 210 are supported together by the same hook member 245.

The end surface position of the opening section 244 of the heat receiver main body 241 is arranged at a position vertically the same as the bottom surface of the housing 212, and sunlight beams reflected by the heliostats 202 are taken into the heat receiver main body 241 through the opening section 244. Moreover, in the lower section of the heat receiver main body 241, there is formed a tapered section 246 the inner diameter of which gradually decreases with approach to the opening section 244 (downward).

Furthermore, on the inner wall surface of the heat receiver main body 241, there is entirely attached a thermal insulation material 247 (refer to FIG. 11). Thereby, it is possible to suppress thermal energy inside the heat receiver main body 241 from being radiated from the wall surface of the heat receiver main body 241 to the outside. Moreover, the configuration may be such that a reflecting plate for reflecting sunlight beams is provided on the surface of the thermal insulation material 247.

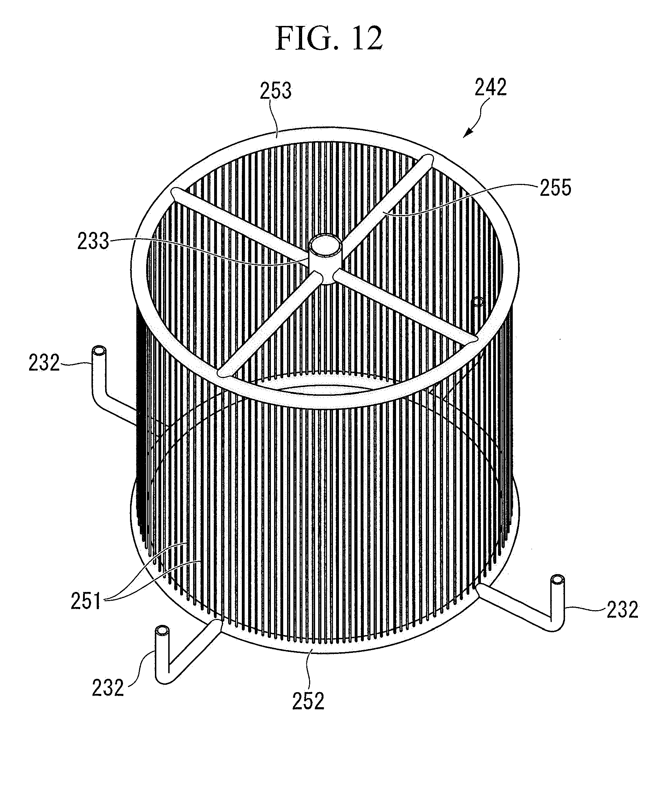

FIG. 12 is a perspective view of the heat receiving section. As shown in FIG. 12, the heat receiving section 242 is provided with a plurality of heat receiving pipes 251, a low-temperature side header (thermal medium inlet header) 252, to which the upstream ends, in the compressed air flow direction, of the plurality of heat receiving pipes 251 are all connected, and a high-temperature side header (thermal medium outlet header) 253, to which the downstream ends, in the compressed air flow direction, of the plurality of heat receiving pipes 251 are all connected.
The low-temperature side header 252 is a ring-shaped member arranged so as to surround the tapered section 246 of the heat receiver main body 241, and on the outer circumferential surface thereof, there are provided a plurality of the heat receiver supply paths 232 which connect between the compressor 223 and the heat receiving section 242. The heat receiver supply paths 232 are arranged at equal intervals along the circumferential direction of the low-temperature side header 252, and compressed air supplied from the heat receiver supply paths 232 into the low-temperature side header 252 is delivered to the entire low-temperature side header 252. Since the low-temperature side header 252 is arranged outside the heat receiver main body 241 in this way, there is no need for using a highly heat-resistant material for the low-temperature side header 252. Therefore, it is possible to reduce the device cost.

The high-temperature side header 253 is a ring-shaped member arranged along the outer circumferential side of the top plate section 243 within the heat receiver main body 241. In this case, the outer circumferential surface of the high-temperature side header 253 and the inner surface of the thermal insulation material 247 are not in contact with each other, and they are arranged in a state of having a clearance therebetween. On the inner circumferential side of the high-temperature side header 253 there are formed at equal intervals along the circumferential direction, a plurality of (for example, four) outlet pipes 255 which extend radially toward the center. These outlet pipes 255 congregate in the radial center of the high-temperature side header 253, forming the turbine supply path 233. The turbine supply path 233 passes through the top plate section 243 and the separating wall 216 along the vertical direction and extends so as to enter the interior of the turbine chamber 217, and it is connected to the turbine 224 at the downstream end thereof. To the high-temperature side header 253 there are connected the plurality of hook members 245 described above, and thereby, the heat receiving section 242 is suspended from and supported on the separating wall 216.

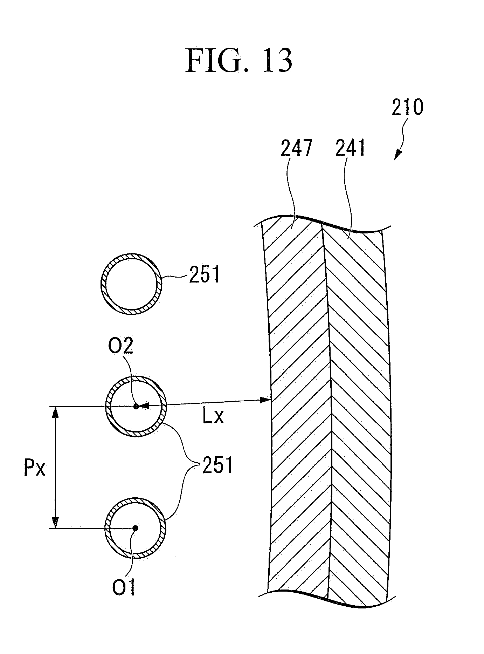

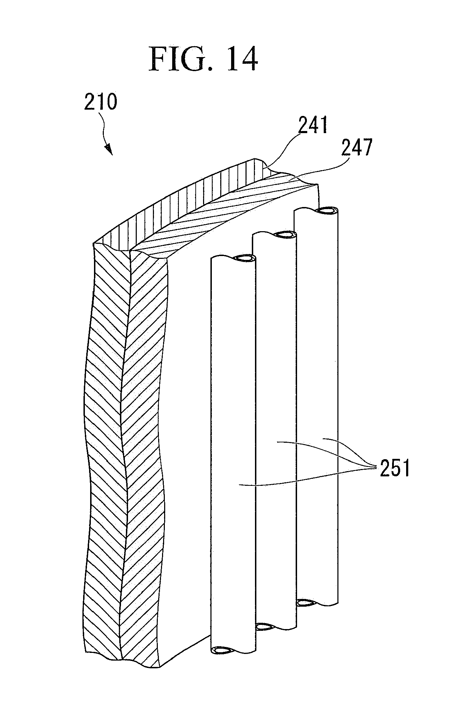

FIG. 13 is a cross-sectional view taken along line A-A of FIG. 10B, and FIG. 14 is a perspective view of the heat receiving section and the heat receiver main body.
Here, as shown in FIG. 11 to FIG. 14, the heat receiving pipes 251 are members which are arranged so that the axial direction thereof matches with the vertical direction, and a plurality of them are arranged along the inner wall surface of the circumferential wall of the heat receiver main body 241 around the entire circumference thereof. That is to say, the respective heat receiving pipes 251 are arranged parallel to each other while having a predetermined clearance therebetween, and the radial inner side surface of the outer circumferential surface thereof forms a light receiving surface which directly receives sunlight beams collected through the opening section 244. The lower end section (upstream end) of the respective heat receiving pipes 251 passes through the tapered section 246 and is respectively connected to the upper section of the low-temperature side header 252, while the upper end section (downstream end) thereof is respectively connected to the lower section of the high-temperature side header 253 within the heat receiver main body 241. That is to say, the compressed air flowing through the low-temperature side header 252 is distributed into each of the heat receiving pipes 251, is heated in each of the heat receiving pipes 251, and then congregates again at the high-temperature side header 253.

As shown in FIG. 13 and FIG. 14, the respective heat receiving pipes 251 are arranged at a predetermined pipe pitch (arrangement pitch) Px in a state of having a clearance between the adjacent heat receiving pipes 251 in the circumferential direction of the heat receiver main body 241. The pipe pitch Px refers to a distance between the center axes of the adjacent heat receiving pipes 251 (for example, O1 and 02) in the circumferential direction of the heat receiver main body 241.
Moreover, the non-light receiving surface of the heat receiving pipe 251 (the outer circumferential surface opposed to the thermal insulation material 247 in the heat receiving pipe 251) is not in contact with the inner surface of the thermal insulation material 247 and is arranged in a state of having a predetermined distance therefrom. In this case, in the radial direction of the heat receiver main body 241, the distance from the inner surface of the thermal insulation material 247 to the center axis of the respective heat receiving pipes 251 (for example, O1 and 02) is set to Lx. In this case, the respective heat receiving pipes 251 are arranged in a ring shape so that each center axis thereof is arranged on the circumference which is away from the inner surface of the thermal insulation material 247 by the distance Lx.

### Operation Method of Sunlight Collecting Heat Receiving System

Next, an operation method of the above power generating device is described.
First, as shown in FIG. 10A and FIG. 10B, as the generator 228 is activated and the rotor 230 starts to rotate via the speed reducer 231, the air accumulated in the supply source flows into the air supply path 235 from the air inlet 229, and it travels through the air intake filter 226 and flows into the compressor 223. The air which has flowed into the compressor 223 is compressed in the compressor 223, and it then becomes compressed air and flows out to the heat receiver supply path 232, to be supplied from the heat receiver supply path 232 into the low-temperature side header 252 of the heat receiving section 242 (refer to the arrow Fin in FIG. 11).

As shown in FIG. 11, the compressed air supplied into the low-temperature side header 252 is delivered into the low-temperature side header 252 around the entire circumferential direction, and then it flows into the respective heat receiving pipes 251 which are connected around the entire circumferential direction of the low-temperature side header 252.

Meanwhile, sunlight beams irradiated onto the heliostats 202 are reflected by the heliostats 202, and are then irradiated into the heat receiver main body 241 through the opening section 244 of the heat receiver main body 241. The sunlight beams irradiated onto the heat receiver main body 241 are received by the light receiving surface of the heat receiving pipe 241, and heat the heat receiving pipe 251. Specifically, as shown in FIG. 8, the sunlight beam from the heliostat 202 positioned at a closet point, which is the closest to the light collecting heat receiver 210 (refer to the arrow H1 in FIG. 8), is irradiated onto the upper section (downstream side) of the heat receiving pipe 251, and the sunlight beam from the heliostat 202 positioned at a furthest point, which is the furthest from the light collecting heat receiver 210 (refer to the arrow H2 in FIG. 8), is irradiated onto the lower section (upstream side) of the heat receiving pipe 251.

Thereby, the heat receiving pipe 251 is heated, and heat exchange is performed between the heated heat receiving pipe 251 and the compressed air flowing in the heat receiving pipe 251. As a result, the temperature of the compressed air becomes high while it is traveling in the heat receiving pipe 251. While thermal energy obtained by the heat receiving pipe 251 is radiated into the heat receiving pipe 251, it is also radiated to the outside of the heat receiving pipe 251 (into the heat receiver main body 241). In this case, since the thermal insulation material 247 is provided on the inner wall surface of the heat receiver main body 241, the thermal energy generated in the heat receiver main body 241 is not transmitted to the wall surface of the heat receiver main body 241, and it remains in the heat receiver main body 241. Furthermore, this remaining thermal energy is radiated to the surface of the heat receiving pipe 251 other than the light receiving surface (the surface opposed to the thermal insulation material 247).
Moreover, in the present embodiment, since the adjacent heat receiving pipes 251 are arranged in a state of having a clearance therebetween, the sunlight beams irradiated into the heat receiver main body 241 may travel through between the adjacent heat receiving pipes 251 and may directly reach the inner surface of the thermal insulation material 247 in some cases. In this case, the sunlight beams irradiated onto the thermal insulation material 247 become thermal energy within the heat receiver main body 241, and remain inside the heat receiver main body 241. Furthermore, the remaining thermal energy is radiated as heat also to the surface of the heat receiving pipe 251 other than the light receiving surface.
Therefore, it is possible to evenly heat the heat receiving pipes 251 around the entire circumferential direction.

The compressed air which has reached the downstream end of the heat receiving pipe 251 becomes high-temperature compressed air, and flows into the high-temperature side header 253. That is to say, the compressed air heated by the respective heat receiving pipes 251 is congregated in the high-temperature side header 253, and then it flows into the turbine supply path 233 through the outlet pipes 255.
The compressed air which has flowed into the turbine supply path 233 flows upward inside the turbine supply path 233 (refer to the arrow F out in FIG. 11), and it flows into the turbine 224 and drives the turbine 224. Thereby, the thermal energy of the compressed air supplied from the turbine supply path 233 is converted into rotational energy of the rotor 230, to thereby generate a driving force in the turbine 224. Then, this driving force is output to the generator 228 connected to the rotor 230, and thereby power generation is performed.

The compressed air which has flowed inside the turbine 224 becomes exhaust gas, and it travels through the air exhaust path 234 to be discharged from the turbine 224. The exhaust gas flowing through the air exhaust path 234 is supplied into the regenerative heat exchanger 227 and subjected to heat exchange with the compressed air flowing from the compressor 223 toward to the heat receiving section 242, and is then discharged to the outside. By preliminarily heating, in the regenerative heat exchanger 227, the compressed air flowing from the compressor 223 to the heat receiving section 242 before being supplied to the heat receiving section 242 in this way, it is possible to set the temperature of the compressed air to be supplied to the turbine 224 to a higher temperature. As a result, it is possible to further improve the level of power generation efficiency of the power generating device 300. In addition, in the regenerative heat exchanger 227, since it is possible to effectively utilize the exhaust gas worked for power generation performed in the turbine 224, a separate heat source is not necessary and it is possible to simplify the configuration and reduce equipment cost.

As described above, in the present embodiment, there is provided the configuration in which the extending direction of the plurality of heat receiving pipes 251 is arranged along the vertical direction.
According to this configuration, since the heat receiving pipes 251 are arranged along the vertical direction, the direction of stress associated with the weight of the heat receiving pipe 251 matches with the extending direction of the heat receiving pipe 251. Therefore, it is possible, by reducing the bending stress acting on the heat receiving pipes 251, to suppress deformation and so forth of the heat receiving pipes 251. In this case, compared to those cases of having a conventional configuration in which the heat receiving pipes are arranged angled so as to face the sunlight beams, it is possible to simplify the configuration and reduce the manufacturing cost, as there is no need for an additional configuration for ensuring the strength level of the heat receiving pipes 251.
In addition, since the low-temperature side header 252 is arranged at the lower end of the heat receiving pipes 251 and the high-temperature side header 253 is arranged at the upper end, both of the headers 252 and 253 are arranged distanced from each other in a state of having the heat receiving pipes 251 therebetween. That is to say, since no low-temperature heat source such as the low-temperature side header 252 is arranged around the high-temperature side header 253, it is possible to suppress unnecessary thermal energy radiation from the high-temperature side header 253. Therefore, the temperature of the heat receiving section 242 can be stably raised by the sunlight beams, and accordingly, the thermal energy obtained by the heat receiving section 242 can be efficiently transmitted to the compressed air. Therefore, it is possible to provide a sunlight collecting heat receiver 210 having a high level of thermal efficiency.

Moreover, since the opening section 244 of the heat receiver main body 241 is open vertically downward, it is possible to evenly take in sunlight beams from the heliostats 202 arranged around the tower section 203. Therefore, it is possible to stably receive sunlight beams with the heat receiving pipes 251 arranged within the heat receiver main body 241, and thermal energy obtained by the heat receiving pipes 251 can be efficiently transmitted to the compressed air.

Moreover, in the power generating device 300 of the present embodiment, since power generation is performed with use of compressed air heated by the light collecting heat receiver 210, it is possible to provide a power generating device 300 with superior power generation efficiency.
Furthermore, since the gas turbine unit 211 and the light collecting heat receiver 210 are both installed on the tower section 203, it is possible to improve the level of maintainability.

### Fourth Embodiment

Next there is described a fourth embodiment of the present invention. Those constituents which have already been described in the above third embodiment are given the same reference symbols, and descriptions thereof are omitted.

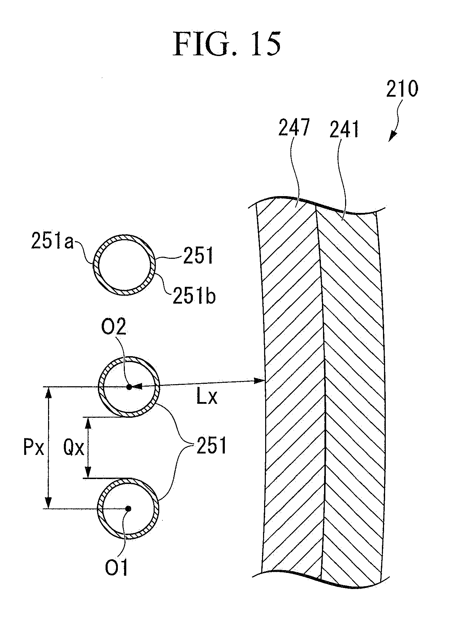

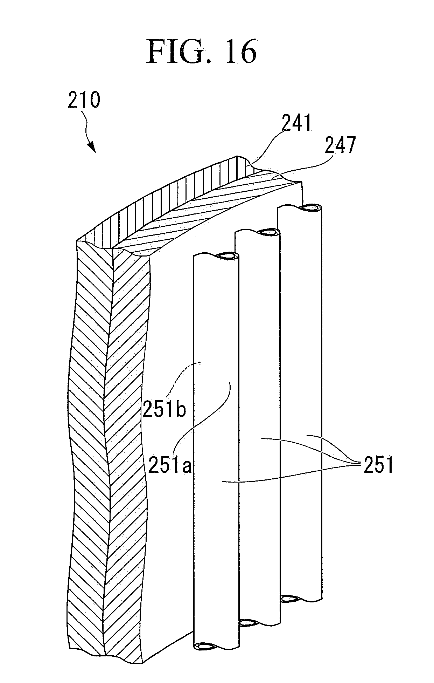

FIG. 15 is a cross-sectional view taken along line A-A of FIG. 10B, and FIG. 16 is a perspective view of the heat receiving section and the heat receiver main body. As shown in FIG. 15 and FIG. 16, the respective heat receiving pipes 251 are parallely arranged at a predetermined pipe pitch (arrangement pitch) Px in a state of having a clearance between the adjacent heat receiving pipes 251 in the circumferential direction of the heat receiver main body 241. In the circumferential direction of the outer circumferential surface of the heat receiving pipe 251, a region of approximately 180 degrees facing the radial inner side of the heat receiver main body 241 (the upstream side in the irradiation direction of sunlight beams H1 and H2), forms a light receiving surface 251a which faces the irradiation direction of the sunlight beams collected through the opening section 244 to directly receive the sunlight beams. Meanwhile, the region of approximately 180 degrees facing the radial outer side of the heat receiving pipe 251 forms a non-light receiving surface 251b which faces the thermal insulation material 247 and which does not directly receive sunlight beams.

Moreover, the non-light receiving surface 251b of the heat receiving pipe 251 is not in contact with the inner surface of the thermal insulation material 247 and is arranged in a state of being distanced therefrom by a predetermined distance. In this case, in the radial direction of the heat receiver main body 241, the distance from the inner surface of the thermal insulation material 247 to the center axis of the respective heat receiving pipes 251 (for example, O1 and 02) is set to Lx. That is to say, the respective heat receiving pipes 251 are arranged in a planar ring shape (when seen from the axial direction) so that each center axis thereof is arranged on the circumference which is away from the inner surface of the thermal insulation material 247 by the distance Lx.

### Geometric Factor Measurement Test

Here, the present inventor conducted a test of measuring geometric factor F with respect to the distance Lx, where the light amount of sunlight beams collected in the heat receiver main body 241 was not changed, and the outer diameter D and pipe pitch Px of the heat receiving pipe 251 were respectively changed. Respective conditions of the outer diameter D and pipe pitch were as follows.

| | |
|---|---|
| Outer diameter D of heat receiving pipe 251: | 31 mm |
| | 48.3 mm |
| | 71.6 mm |
| | |
| Pipe pitch Px: | 1.1D (clearance pitch: 0.1D) |
| | 1.5D (clearance pitch: 0.5D) |
| | 2.0D (clearance pitch: 1.0D) |

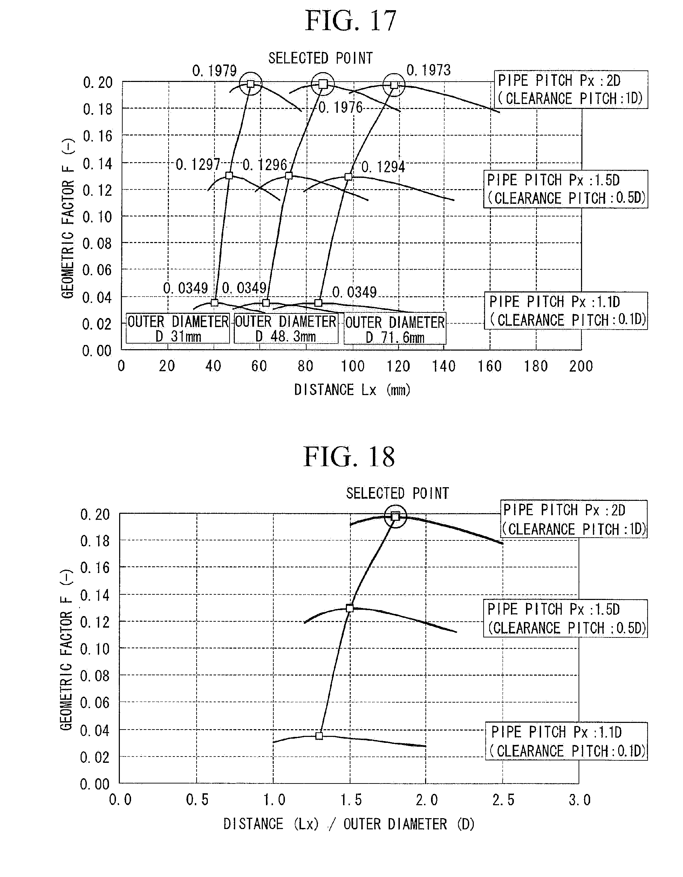

FIG. 17 is a graph showing the geometric factor F with respect to the distance Lx (mm) between the thermal insulation material 247 and the heat receiving pipe 251. The term geometric factor F here refers to a ratio of thermal energy input to an other surface among the thermal energy radiated from one surface into the entire space. That is to say, in the present embodiment, it refers to the ratio of thermal energy obtained by the heat receiving pipe 251 among the thermal energy generated by sunlight beams collected in the heat receiver main body 241. Moreover, the value of the geometric factor F in the diagram shows the maximum value (selected point) where the distance Lx between the thermal insulation material 247 and the heat receiving pipe 251 was changed.

As shown in FIG. 17, it can be understood that the geometric factor F increases as the pipe pitch Px of the heat receiving pipe 251 is widened. This illustrates that as the distance between the adjacent heat receiving pipes 251 becomes greater, the sunlight beams collected in the heat receiver main body 241 are more likely to travel through between the heat receiving pipes 251. Furthermore, the sunlight beams which have passed between the heat receiving pipes 251 are irradiated onto the inner surface of the thermal insulation material 247, and become thermal energy in the heat receiver main body 241. Accordingly, it is considered that as the thermal energy radiated from the thermal insulation material 247 increases, the thermal energy reaching the non-light receiving surface 251 of the heat receiving pipe 251 increases, and thereby the entire circumferentially direction of the heat receiving pipe 251 is heated.

In contrast, if the pipe pitch Px is set to 1.0D, the outer circumferential surfaces of the heat receiving pipes 251 come in contact with each other, and consequently, sunlight beams are not irradiated onto the thermal insulation material 247, and thermal energy is obtained only from the light receiving surface 251a. As a result, the thermal energy is unlikely to be transmitted to the non-light receiving surface 251b, and the temperature of the heat receiving pipe 251 becomes uneven in the circumferential direction thereof. Therefore, this is not preferable.
On the other hand, if the pipe pitch Px is excessively widened, it becomes difficult to arrange, in the heat receiver main body 241, a number of heat receiving pipes 251 required for obtaining a desired level of thermal energy. Therefore, this is not preferable.

From the above results, in the present embodiment, it is preferable that the pipe pitch Px of the heat receiving pipe 251 is set within a range of 1.0D ≤ Px ≤ 2.0D. In this case, the clearance pitch Qx between the adjacent heat receiving pipes 251 is 0 < Qx ≤ 1.0D. Accordingly, it is possible to arrange the heat receiving pipes 251 with a suitable density while having a clearance therebetween, and it is therefore possible to efficiently irradiate the sunlight beams collected in the heat receiver main body 241 toward the light receiving surface 251a of the heat receiving pipe 251 and the thermal insulation material 247. Further, thermal energy generated by the sunlight beams irradiated onto the thermal insulation material 247 is transmitted to the non-light receiving surface 251b of the heat receiving pipe 251, and thereby, it is possible to evenly heat the heat receiving pipes 251 around the entire circumferential direction.

Moreover, as shown in FIG. 17, the geometric factor F initially shows a trend of increasing as the distance Lx between the thermal insulation material 247 and the heat receiving pipe 251 is increased. This is because the thermal insulation material 247 and the heat receiving pipe 251 are arranged separated, and consequently, the thermal energy radiated from the thermal insulation material 247 is efficiently radiated toward the non-light receiving surface 251b of the heat receiving pipe 251.
Furthermore, it can be understood that as the distance Lx is further increased, the geometric factor F reaches the maximum value, and having exceeded the maximum value, the geometric factor F tends to decrease as the distance Lx is increased.
The reason for this is considered to be that, if the thermal insulation material 247 and the heat receiving pipe 251 are separated too far from each other, the possible installable number of the heat receiving pipes 251 becomes smaller, the area which allows the light receiving surface 251a to directly receive heat becomes small, and the area which allows the non-light receiving surface 251b to receive heat radiated from the thermal insulation material 247 also becomes smaller.

FIG. 18 is a graph showing a geometric factor F with respect to the ratio of the distance Lx (Lx / D) with respect to the outer diameter D.
As shown in FIG. 18, if the relationship between the outer diameter D and the distance Lx is non-dimensionalized based on the above test results, it is preferable that the ratio Lx / D of the distance Lx with respect to the outer diameter D is set within a range of 1.0 ≤ Lx / D ≤ 2.5 regardless of the pipe pitch Px. Furthermore, it is more preferable that it is set within a range where an approximately 90% geometric factor F with respect to the maximum value can be obtained. Specifically, when the range of Lx /D is set for each pipe pitch Px, it is preferable that it is set within a range of 1.0 ≤ Lx / D ≤ 2.0 if the pipe pitch Px is 1.1D, 1.2 ≤ Lx/D ≤ 2.2 if the pipe pitch Px is 1.5D, and 1.5 ≤ Lx / D ≤ 2.5 if the pipe pitch Px is 2.0D.

Sunlight beams irradiated onto the heliostats 202 are reflected by the heliostats 202, and are then irradiated into the heat receiver main body 241 through the opening section 244 of the heat receiver main body 241. Among the sunlight beams irradiated into the heat receiver main body 241, the sunlight beams which have been received by the light receiving surface 251a of the heat receiving pipe 251 become thermal energy and directly heat the heat receiving pipe 251. Specifically, as shown in FIG. 8, the sunlight beam from the heliostat 202 positioned at a closet point, which is the closest to the light collecting heat receiver 210 (illustrated with the arrow H1), is irradiated onto the upper section (downstream side) of the heat receiving pipe 251, and the sunlight beam from the heliostat 202 positioned at a furthest point, which is the furthest from the light collecting heat receiver 210 (illustrated with the arrow H2), is irradiated onto the lower section (upstream side) of the heat receiving pipe 251.

Moreover, among the sunlight beams irradiated into the heat receiver main body 241, the sunlight beams which have passed through between the respective heat receiving pipes 251 are irradiated onto the inner surface of the thermal insulation material 247, and become thermal energy in the heat receiver main body 241. In this case, since the inner surface of the heat receiver main body 241 is insulated with the thermal insulation material 247, the thermal energy generated in the heat receiver main body 241 is not transmitted to the wall surface of the heat receiver main body 241, and it is radiated into the heat receiver main body 241. Since the heat receiving pipe 251 is arranged in a state of being distanced by the distance Lx from the inner surface of the thermal insulation material 247, the thermal energy radiated from the inner surface of the thermal insulation material 247 into the heat receiver main body 241 is transmitted to the non-light receiving surface 251b of the heat receiving pipe 251, thereby heating the heat receiving pipe 251.

Then, heat exchange is performed between the heated heat receiving pipe 251 and the compressed air flowing in the heat receiving pipe 251, and the temperature of the compressed air becomes high while it is flowing in the heat receiving pipe 251. While thermal energy obtained by the heat receiving pipe 251 is radiated into the heat receiving pipe 251, it is also radiated to the outside of the heat receiving pipe 251 (into the heat receiver main body 241). Also in this case, since the thermal insulation material 247 is provided on the inner wall surface of the heat receiver main body 241, the thermal energy remains in the heat receiver main body 241. Furthermore, this remaining thermal energy is radiated to the heat receiving pipes 251.
Therefore, since the heat receiving pipes 251 can be evenly heated around the entire circumferential direction, the thermal energy from the sunlight beams can be efficiently transmitted to the compressed air.

The compressed air which has reached the downstream end of the heat receiving pipe 251 becomes high-temperature compressed air, and flows into the high-temperature side header 253. That is to say, the compressed air heated by the respective heat receiving pipes 251 is congregated in the high-temperature side header 253, and then it flows into the turbine supply path 233 through the outlet pipes 255.
The compressed air which has flowed into the turbine supply path 233 flows upward inside the turbine supply path 233 (refer to the arrow F out in FIG. 11), and it flows into the turbine 224 and drives the turbine 224. Thereby, the thermal energy of the compressed air supplied from the turbine supply path 233 is converted into rotational energy of the rotor 230, to thereby generate a driving force in the turbine 224. Then, this driving force is output to the generator 228 connected to the rotor 230, and thereby power generation is performed.

The compressed air which has flowed inside the turbine 224 becomes exhaust gas, and it travels through the air exhaust path 234 to be discharged from the turbine 224. The exhaust gas flowing through the air exhaust path 234 is supplied into the regenerative heat exchanger 227 and is subjected to heat exchange with the compressed air flowing from the compressor 223 toward to the heat receiving section 242, and is then discharged to the outside. By preliminarily heating, in the regenerative heat exchanger 227, the compressed air flowing from the compressor 223 to the heat receiving section 242 before being supplied to the heat receiving section 242 in this way, it is possible to set the temperature of the compressed air to be supplied to the turbine 224 to a higher temperature. As a result, it is possible to further improve the level of power generation efficiency of the power generating device 300. In addition, in the regenerative heat exchanger 227, since it is possible to effectively utilize the exhaust gas worked for power generation performed in the turbine 224, a separate heat source is not necessary and it is possible to simplify the configuration and reduce equipment cost.

As described above, in the present embodiment, there is provided the configuration such that the heat receiving pipes 251 are arranged at the pipe pitches Px along the inner surface of the thermal insulation material 247, and the heat receiving pipes 251 are arranged in a state of being distanced by the distance Lx from the inner surface of the thermal insulation material 247.
According to this configuration, while the sunlight beams collected in the heat receiver main body 241 are irradiated onto the light receiving surface 251a of the heat receiving pipe 251 and become thermal energy to directly heat the heat receiving pipe 251, the sunlight beams which have passed through between the adjacent heat receiving pipes 251 and irradiated onto the thermal insulation material 247 become thermal energy which is radiated to heat the non-light receiving surface 215b.
Therefore, since thermal energy can be transmitted also to the non-light receiving surface 251b of the heat receiving pipe 251 which is unlikely to receive sunlight beams directly, it is possible to evenly heat the heat receiving pipes 251 around the entire circumferential direction. As a result, it is possible to efficiently transmit thermal energy from sunlight beams to the compressed air, and therefore, it is possible to provide a sunlight collecting heat receiver 210 with a high level of thermal efficiency.

In this case, compared to the conventional configuration in which the outer circumferential surfaces of the heat receiving pipes 251 are in contact with each other, a level of thermal energy equivalent to that of the conventional configuration can be obtained while reducing the total heat receiving area of all of the heat receiving pipes 251 (heat receiving area of the heat receiving section 242), and therefore, it is possible to reduce the number of the heat receiving pipes 251 to be installed. As a result, it is possible to reduce the size, weight, and cost of the light collecting heat receiver 210. Furthermore, the diameter of the heat receiving pipe 251 can be increased while reducing the number of the heat receiving pipes 251 to be installed, and therefore, it is possible to improve the level of workability and maintainability of the heat receiving pipes 251.

Moreover, in the power generating device 300 of the present embodiment, since power generation is performed with use of compressed air heated by the light collecting heat receiver 210, it is possible to provide a power generating device 300 with superior power generation efficiency.
Furthermore, since the gas turbine unit 211 and the light collecting heat receiver 210 are both installed on the tower section 203, it is possible to improve the level of maintainability. Moreover, by arranging the light collecting heat receiver 210 and the gas turbine unit 211 in the vicinity of each other, the compressed air heated by the light collecting receiver 210 can be supplied to the turbine 224 without reducing the temperature thereof, and power generation efficiency can be further increased.

Incidentally, in the light collecting tower type heat receiver, in order to efficiently receive the sunlight beams which are reflected by the heliostats, there may be considered a configuration such that a plurality of the heat receiving pipes are parallely arranged, and the extending direction (axial direction) of these heat receiving pipes is arranged angled with respect to the ground surface.
However, in this type of configuration, the direction of stress acting on the heat receiving pipes due to their own weight does not match with the extending direction of the heat receiving pipes, and the bend stress which acts on the heat receiving pipes becomes greater. In this case, if the heat receiving pipes are heated by the sunlight beams and the temperature thereof becomes high, the heat receiving pipes may become deformed due to the bend stress. Therefore, there is a problem in that there is a need for making improvements in the heat receiving pipes in order to ensure the level of strength thereof, and this leads to further complication in the configuration and to an increase in manufacturing cost.

Moreover, the heat receiving pipe may be considered to have a folding back structure with an outward heat receiving pipe arranged on the upstream side of the sunlight beam incident direction, and a homeward heat receiving pipe which is connected via a U-shaped pipe to this outward heat receiving pipe and is arranged on the downstream side of the incident direction.
Here, in order for the thermal medium to efficiently obtain thermal energy from the heat receiving pipe, the temperature of the heat receiving pipe needs to be sufficiently high compared to the temperature of the compressed air. However, in the heat receiving pipe of the folding back structure, the upstream end of the outward heat receiving pipe (the vicinity of the low-temperature side header) and the downstream end of the homeward heat receiving pipe (the vicinity of high-temperature side header) are arranged in close proximity to each other. In this case, there is a significant temperature difference between the upstream end of the outward heat receiving pipe and the downstream end of the homeward heat receiving pipe, and therefore, heat is likely to be radiated from the homeward heat receiving pipe toward the outward heat receiving pipe. As a result, there is a problem in that a temperature rise in the homeward heat receiving pipe is prevented, and the efficiency of heat exchange between the homeward heat receiving pipe and the thermal medium is reduced.

In contrast, in the present embodiment, there is provided the configuration in which the extending direction of the plurality of heat receiving pipes 251 is arranged along the vertical direction.
According to this configuration, since the heat receiving pipes 251 are arranged along the vertical direction, the direction of stress associated with the weight of the heat receiving pipe 251 matches with the extending direction of the heat receiving pipe 251. Therefore, it is possible, by reducing the bending stress acting on the heat receiving pipes 251, to suppress deformation and so forth of the heat receiving pipes 251. In this case, compared to those cases of having a conventional configuration in which the heat receiving pipes are arranged angled so as to face the sunlight beams, it is possible to simplify the configuration and reduce the manufacturing cost, as there is no need for an additional configuration for ensuring the strength level of the heat receiving pipes 251.
In addition, since the low-temperature side header 252 is arranged at the lower end of the heat receiving pipes 251 and the high-temperature side header 253 is arranged at the upper end, both of the headers 252 and 253 are arranged distanced from each other in a state of having the heat receiving pipes 251 therebetween. That is to say, since no low-temperature heat source such as the low-temperature side header 252 is arranged around the high-temperature side header 253, it is possible to suppress unnecessary thermal energy radiation from the high-temperature side header 253. Therefore, the temperature of the heat receiving section 242 can be stably raised by the sunlight beams, and accordingly, the thermal energy obtained by the heat receiving section 242 can be efficiently transmitted to the compressed air. Therefore, it is possible to provide a sunlight collecting heat receiver 210 having a high level of thermal efficiency.

### Fifth Embodiment

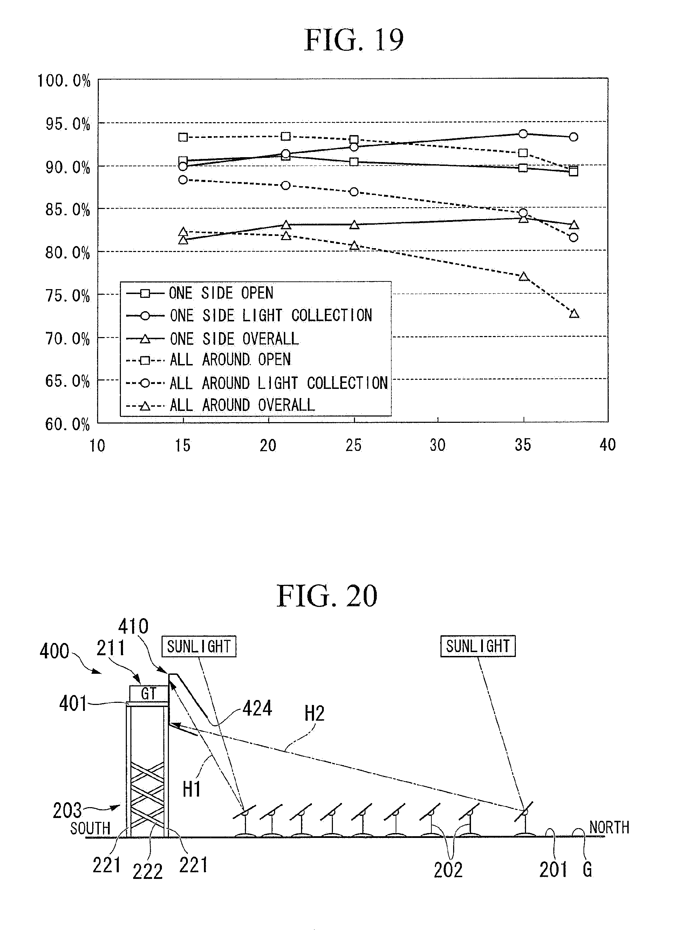

Next there is described a fifth embodiment of the present invention. In the third and fourth embodiments described above, there was described the all around arrangement type power generating device 300 in which the heliostats 202 were arranged all around the power generating device. In the all around arrangement type power generating device 300, there occurs a phenomenon in which the effective mirror area associated with the degree of the incidence/reflection angle of the heliostat 202 becomes significantly different between the southern location and the northern location of the tower section 203 and it becomes degraded on one side, depending on the actual locational conditions of the equipment.
For this reason, in some cases, there is used a power generating device 400 called a one-sided arrangement type (refer to FIG. 20) in which heliostats 202 are collected and arranged on a side where a large effective area of the heliostats 202 can be ensured to respond to changes in the actual solar altitude.

FIG. 19 is a graph for comparing light collection efficiency between the all around arrangement type power generating device and the one-sided arrangement type power generating device, where the horizontal axis represents latitude (degrees) and the vertical axis represents efficiency (%). The solid line in the diagram represents the one-sided arrangement type power generating device, and the broken line represents the all around arrangement type power generating device. Moreover, the terms "one side open" and "all around open" refer to the ratio of effective thermal energy with respect to the entire thermal energy obtained from sunlight beams within the heat receiver main body (difference between the entire thermal energy and the thermal energy radiated from the opening section (heat radiation loss)), and the terms "one side light collection" and "all around light collection" refer to the ratio of sunlight beams irradiated into the heat receiver main body with respect to the sunlight beams irradiated onto the heliostats 202. Furthermore, in FIG. 19, the height of the light collecting heat receiver (height of the opening section) and the solar altitude are set equal between the one-sided arrangement type and the all around arrangement type.

As shown in FIG. 19, the ratio of the all around light collection is lower than that of the one side light collection in a low-latitude region (a region of approximate latitude 15 degrees). However, since the ratio of the all around open is higher than that of the one side open, it can be understood from an overall comparison (all around overall and one side overall) that the all around arrangement type power generating device 300 (all around overall) has a higher light collecting efficiency.
In contrast, in a high latitude region (a region of approximate latitude 20 degrees or higher), it can be understood that the ratio of the one side overall is higher than the ratio of the all around overall. That is to say, the solar altitude becomes lower as the latitude becomes higher, and therefore, the collecting efficiency of sunlight in some directions (for example, the southern side in the case of the northern hemisphere) tends to decrease. The reason for this is considered to be that, in the all around arrangement type, a decrease in the solar altitude is likely to lead to a reduced cosine efficiency and an increase in blocking loss. The term cosine efficiency refers to the ratio of the amount of sunlight beams reflected by the heliostats 202 and irradiated into the opening section of the heat receiver main body with respect to the amount of the sunlight beams irradiated onto the heliostats 202, and it shows that the amount of light irradiated into the opening section decreases as the angle of irradiation into the opening section becomes greater. Moreover, the term blocking loss refers to the ratio of the light amount of sunlight beams blocked by the surrounding heliostats 202 before being reflected by the heliostats 202 and irradiated into the heat receiver main body, with respect to the light amount of sunlight beams irradiated onto the heliostats 202. For this reason, it is preferable that the all around arrangement type power generating device 300 and the one-sided arrangement type power generating device 400 are appropriately and separately used, depending on the solar altitude between the low-latitude region and the high-latitude region.

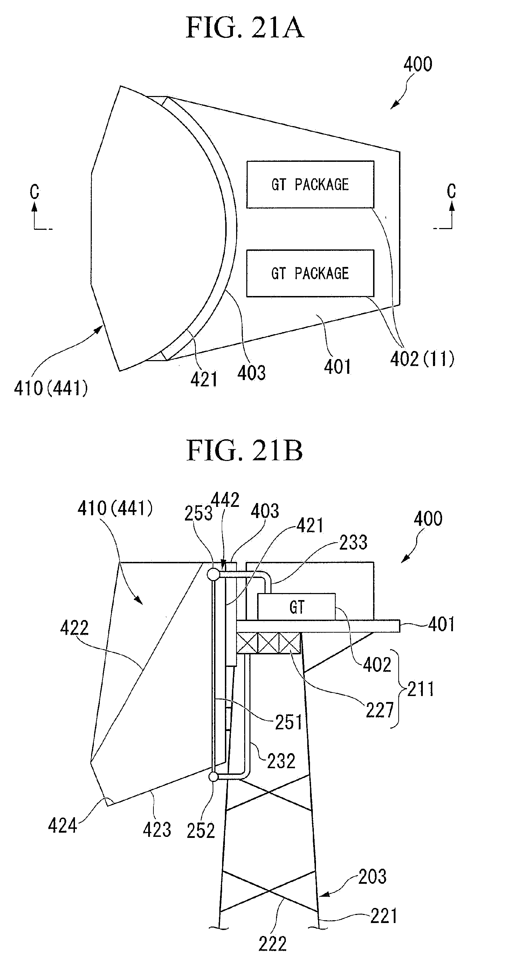

Consequently, in the present embodiment, there is described a configuration of the one-sided type power generating device 400 in which the heliostats 202 are collected and arranged only on one side of the power generating device. FIG. 20 is an explanatory diagram showing a positional relationship between the heliostats and the power generating device on the tower. Moreover, FIG. 21A is a schematic configuration diagram showing a top view of the power generating device, and FIG. 21B is a cross-sectional view taken along line C-C in FIG. 21A. In the following description, configurations the same as those in the third embodiment above are given the same reference symbols, and descriptions thereof are omitted.

As shown in FIG. 20, FIG. 21A, and FIG. 21B, on a heliostat field 201 there are arranged a plurality of heliostats 202 for reflecting sunlight beams, and at the southern end of the heliostat field 201 (on the left side in FIG. 20) there is provided a tower type power generating device 400 which receives sunlight beams guided by the heliostats 202.

As shown in FIG. 21A and FIG. 21B, the power generating device 400 is provided with a tower section 203 provided standing on the ground G, a supporting section 401 installed on the tower section 203, a light collecting heat receiver (sunlight collecting heat receiver) 210 fixed on the supporting section 401, and a gas turbine unit 211.
The supporting section 401 is of a flat plate shape which, at the upper end section of the tower section 203, extends in parallel with the ground G, and on the upper surface of the supporting section 401 there is provided a GT package of the gas turbine unit 211 including the gas turbine 225 and air intake filter 226 described above. Meanwhile, on the lower surface side of the supporting section 401 there is installed a regenerative heat exchanger 227 of the gas turbine unit 211.

On the upstream side of the supporting section 401 in the sunlight beam irradiation direction (on the left side in FIG. 21B), there is provided an arc section 403 formed in a planar arc shape, and on the inner surface side of the arc section 403, there is fixed a light collecting heat receiver 410.
The light collecting heat receiver 410 is provided with a heat receiver main body 441 serving as a casing, and a heat receiving section 442 provided on the downstream side in the sunlight beam irradiation direction (directions of arrow H1 and H2 in FIG. 20) within a heat receiver main body 441.

The heat receiver main body 441 is of a planar arc shape, and is provided with a back surface section 421 having a curvature radius equivalent to that of the inner surface of the arc section 403, a front surface section 422 which is arranged opposing to the back surface section 421 and which is angled from the upper side to the lower side toward the front side (toward the left side in FIG. 21B), and an angled section 423 which is formed on the lower end side of the back surface section 421, and which is angled from the upper side to the lower side toward the front side. The lower end positions of the front surface section 422 and the back surface section 421 are positioned at vertically the same position, and thereby, between the lower end section of the back surface section 421 and the lower end section of the angled section 423, there is formed an opening section 424 for taking sunlight beams into the heat receiver main body 441. This opening section 424 is open toward the diagonally front side of the heat receiver main body 441 (toward the northern side in the case of the northern hemisphere) so as to oppose to the heliostats 202. Although it is not shown in the diagram, a thermal insulation material is attached on the entire inner surface of the heat receiver main body 441.

As with the third embodiment described above, the heat receiving section 442 is provided with a plurality of heat receiving pipes 251, a low-temperature side header 252, to which the upstream ends, in the compressed air flow direction, of the plurality of heat receiving pipes 251 are all connected, and a high-temperature side header 253, to which the downstream ends, in the compressed air flow direction, of the plurality of heat receiving pipes 251 are all connected.
The low-temperature side header 252 is an arc-shaped member which extends along the base end side outer surface of the angled section 423, outside the back surface section 421, and there is provided a heat receiver supply path 232 which connects between the regenerative heat exchanger 227 and the heat receiving section 442.

The high-temperature side header 253 is an arc-shaped member which extends along the inner surface of the back surface section 421, in the upper section of the back surface section 421 (thermal insulation material), and to which header there is connected a turbine supply path 233 which connects between the turbine 224 of the GT package 402 (refer to FIG. 10B) and the high-temperature side header 253.
The heat receiving pipe 251 is a member arranged so that the axial direction thereof matches with the vertical direction, and a plurality thereof are arranged along the inner surface of the back surface section 421. That is to say, the respective heat receiving pipes 251 are arranged parallel to each other while having a predetermined clearance therebetween, and the front surface side (the surface side facing the opening section 424) thereof forms a light receiving surface which receives sunlight beams collected through the opening section 424. Moreover, the lower end section (upstream end) of the respective heat receiving pipes 251 passes through the angled section 423 and is respectively connected to the upper section of the low-temperature side header 252, while the upper end section (downstream end) thereof is respectively connected to the lower section of the high-temperature side header 253 within the heat receiver main body 441. That is to say, the compressed air flowing through the low-temperature side header 252 is distributed into each of the heat receiving pipes 251, is heated in each of the heat receiving pipes 251, and then congregates again at the high-temperature side header 253.

According to the present embodiment, while an effect similar to that in the third embodiment described above is achieved, by employing the one-sided arrangement type power generating device 400 in a high-latitude region in particular, the heliostats 202 are arranged only in a range where an effective mirror area can be ensured. As a result, it is possible to realize stable light collecting efficiency while reducing the equipment cost of the heliostats 202.

In the embodiment described above, there was described the case of supplying compressed air heated by the light collecting heat receiver 410, serving as an operating fluid to the turbine 224. However, the configuration is not limited to this, and there may be provided a configuration such that an operating fluid (for example, a combustion gas) is separately supplied to the turbine 224, and the compressed air heated by the heat receiving section 442 is used for heat exchange performed with the operating fluid.
Moreover, any appropriate design modification may be made to the positional relationship between the light collecting heat receiver and the gas turbine unit. That is to say, the arrangement position of the gas turbine unit is not limited to the upper side or rear side of the light collecting heat receiver.

Furthermore, in the embodiment described above, there was described the case where the generator 228 drives the rotor 230 and it has a function to serve as an alternator which performs power generation upon rotation of the turbine 224. The configuration is not limited to this, and there may be employed a driving motor for rotating the rotor 230 as a separate unit from the generator 228.
Furthermore, in the embodiment described above, there was described the case of arranging the respective heat receiving pipes 251 at pipe pitches Px. However, the respective heat receiving pipes 251 may be arranged without providing a clearance therebetween.
Furthermore, the outer circumferential surface of the heat receiving pipe 251 may be in contact with the inner surface of the thermal insulation material 247.
Moreover, there may be employed a power generating device which excludes the regenerative heat exchanger 227.

### Sixth Embodiment

Next there is described a sixth embodiment of the present invention. In the following description, there is described as an example, a sunlight collecting heat receiving system (hereunder, referred to as light collecting heat receiving system) having a solar thermal electric generation device (sunlight collecting heat receiving device), and heliostats (reflecting mirrors) arranged around the solar thermal electric generation device.

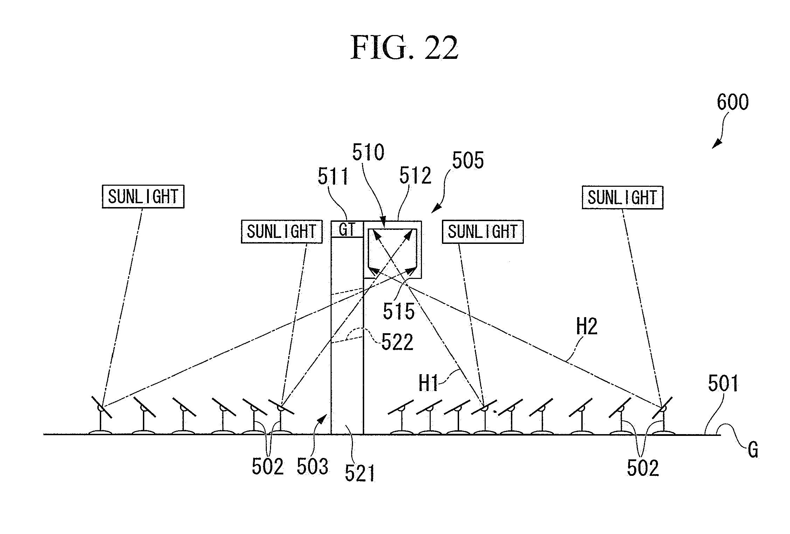

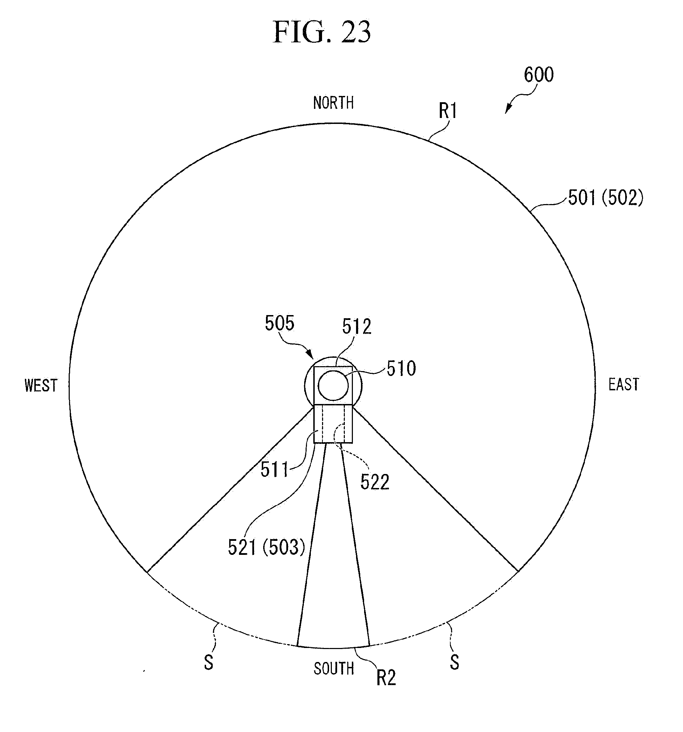

FIG. 22 is a side view of the light collecting heat receiving system, and FIG. 23 is a plan view thereof. The suitable site location on the earth for a power generating device is an arid region in the subtropical zone close to the regression line where intense and superior solar radiation from the sun is available. Consequently, in the power generating device of the sixth embodiment, there is first described a light collecting heat receiving system to be arranged in a low-latitude region in the subtropical zone of the northern hemisphere (for example, latitude 20 degrees or lower).
As shown in FIG. 22 and FIG. 23, a light collecting heat receiving system 600 is provided with a substantially ring-shaped heliostat field 501 provided on the ground G, and a solar thermal electric generating device (hereunder, referred to as power generating device) 505. On the heliostat field 501 there are collaterally arranged a plurality of heliostats 502 for reflecting sunlight beams. Specifically, the heliostats 502 are arranged in a predetermined angle range (for example, 135 degrees) on circumferentially both sides from the due north direction on the heliostat field 501, and they are arranged in a predetermined angle range on circumferentially both sides from the due south direction (refer to FIG. 23). Among the ranges of the arrangement of the heliostats 502, the northern side range with respect to a light collecting heat receiver 510 described later is taken as a first arrangement range R1, and the southern side range with respect to the light collecting heat receiver 510 is taken as a second arrangement range R2.

Moreover, in the inner side (center section) of the heliostat field 501 there is provided a tower-shaped power generating device 505 which receives sunlight beams (arrows H1 and H2 in FIG. 22) guided by the heliostats 502.
The power generating device 505 is provided with a tower section (supporting section) 503 provided standing on the ground G, a gas turbine unit 511 and a housing 512 supported on the tower section 503, and a light collecting heat receiver (heat receiver) 510 housed in the housing 512.

First, the gas turbine unit 511 is fixed on the upper end section of a supporting column 521 of the tower section 503, and is provided mainly with a gas turbine comprising a compressor and a turbine, and a generator (none of these are shown in the diagram).
The gas turbine is provided with a rotatable rotor connected to the generator, and the compressor and the turbine are attached so as to be arranged coaxial to this rotor.

The compressor turns air supplied from the outside of the housing into compressed air, and then supplies it to the light collecting heat receiver 510. Then, having been heated in the light collecting heat receiver 510, the compressed air is supplied to the turbine.
The turbine converts the thermal energy of the compressed air heated in the light collecting heat receiver 510 into rotational energy of the rotor, to thereby generate a driving force. This driving force is output to the generator connected to the rotor, and thereby power generation is performed. The compressed air which has flowed inside the turbine becomes exhaust gas to be discharged from the turbine.

The housing 512 is of a rectangular cylinder shape in which the axial direction thereof matches with the heightwise direction, and the top surface thereof is blocked while in the radial center section on the bottom surface thereof, there is formed an opening section 515 which opens toward the ground G. Furthermore, inside this housing 512, there is housed the light collecting heat receiver 510.

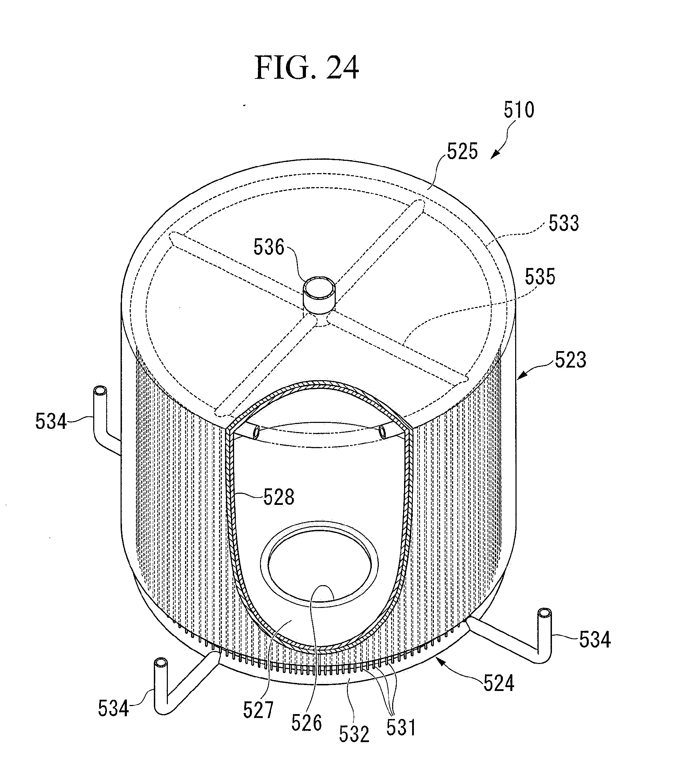

FIG. 24 is a partially exploded perspective view showing a part of the light collecting heat receiver.
As shown in FIG. 24, the light collecting heat receiver 510 is provided with a heat receiver main body 523 serving as a casing, and a heat receiving section 524 through which compressed air supplied from the compressor flows.
The heat receiver main body 523 is of a bottom-ended cylinder shape arranged in a state where the axial direction thereof matches with the axial direction of the housing 512, and an upper section thereof is blocked by a top plate section 525, while in a lower section thereof there is formed an opening section 526 which opens toward the ground G. Moreover, the top plate section 525 and the upper surface of the housing 512 are connected by a hook member or the like not shown in the diagram, and thereby the heat receiver main body 523 is supported in the housing 512.

The end surface position of the opening section 526 of the heat receiver main body 523 is arranged at a position the same in the heightwise direction as the end surface of the opening section 515 of the housing 512, and sunlight beams reflected by the heliostats 502 are taken into the heat receiver main body 523 through the opening section 526. Moreover, in the lower section of the heat receiver main body 523, there is formed a tapered section 527 the inner diameter of which gradually decreases with approach to the opening section 526 (downward).

Furthermore, on the inner wall surface of the heat receiver main body 523, there is entirely attached a thermal insulation material 528. Thereby, it is possible to suppress thermal energy inside the heat receiver main body 523 from being radiated from the wall surface of the heat receiver main body 523 to the outside. Moreover, the configuration may be such that a reflecting plate for reflecting sunlight beams is provided on the surface of the thermal insulation material 528.

The heat receiving section 524 is provided with a plurality of heat receiving pipes 531, a low-temperature side header 532, to which the upstream ends, in the compressed air flow direction, of the plurality of heat receiving pipes 531 are all connected, and a high-temperature side header 533, to which the downstream ends, in the compressed air flow direction, of the plurality of heat receiving pipes 531 are all connected.
The low-temperature side header 532 is a ring-shaped member arranged so as to surround the tapered section 527 of the heat receiver main body 523, and on the outer circumferential surface thereof, there are provided a plurality of heat receiver supply paths 534 which connect between the compressor and the heat receiving section 524. The heat receiver supply paths 534 are arranged at equal intervals along the circumferential direction of the low-temperature side header 532, and compressed air supplied from the heat receiver supply paths 534 into the low-temperature side header 532 is delivered to the entire low-temperature side header 532. Since the low-temperature side header 532 is arranged outside the heat receiver main body 523, there is no need for using a highly heat-resistant material for the low-temperature side header 532. Therefore, it is possible to reduce the device cost.

The high-temperature side header 533 is a ring-shaped member arranged along the outer circumferential side of the top plate section 525 within the heat receiver main body 523. On the inner circumferential side of the high-temperature side header 533 there are formed at equal intervals along the circumferential direction, a plurality of (for example, four) outlet pipes 535 which extend radially toward the center. These outlet pipes 535 congregate in the radial center of the high-temperature side header 533, forming a turbine supply path 536. The turbine supply path 536 is connected to the turbine at the downstream end thereof.

The heat receiving pipe 531 is a member which is arranged so that the axial direction thereof matches with the heightwise direction, and a plurality thereof are arranged along the inner wall surface of the circumferential wall of the heat receiver main body 523 around the entire circumferential direction. That is to say, the respective heat receiving pipes 531 are arranged parallel to each other while having a predetermined clearance therebetween, and are configured so that the outer circumferential surface thereof receives sunlight beams. The lower end section (upstream end) of the respective heat receiving pipes 531 passes through the tapered section 527 and is respectively connected to the upper section of the low-temperature side header 532, while the upper end section (downstream end) thereof is respectively connected to the lower section of the high-temperature side header 533 within the heat receiver main body 523. That is to say, the compressed air flowing through the low-temperature side header 532 is distributed into each of the heat receiving pipes 531, is heated in each of the heat receiving pipes 531, and then congregates again at the high-temperature side header 533.

Here, the tower section 503 is provided with a single supporting column provided standing upward on the ground G. The supporting column 521 is of a rectangular column shape for example, and it is arranged in a state where each of the side surfaces thereof respectively faces north, south, east, and west. On the northern side side surface of the supporting column 521, there is fixed the housing 512. As described above, the heliostats 502 are not arranged in the range where the supporting column 521 intervenes on the straight line connecting the ground G and the light collecting heat receiver 510. This is because, the area on the straight line connecting the ground G and the light collecting heat receiver 510 serves as a light path for sunlight beams reflected by the heliostats 502 to reach the light collecting heat receiver 510, and if the supporting column 521 is arranged on this light path, sunlight beams are blocked by the supporting column 521 and it is difficult to take sunlight beams into the light collecting heat receiver 510. Therefore, in the present embodiment, no heliostat 502 is arranged in a light-blocked range S where sunlight beams are blocked by the supporting column 521 (predetermined angle ranges circumferentially on both sides from the southern side of the power generating device 505 (south-west and south-east). That is to say, by arranging the heliostats 502 so as to avoid the light-blocked range S, the need for wastefully installing heliostats 502 is eliminated, and it is possible to reduce equipment cost.

Moreover, in the heightwise intermediate position of the supporting column 521, there is formed an opening section 522 which passes through the supporting column 521 along the north-south direction. This opening section 522 is formed on the light path for sunlight beams reflected by the heliostats 502 arranged on the southern side of the power generating device 505, and it passes through the supporting column 521 from the southern side side surface to the northern side side surface while being angled upward. That is to say, the opening section 522 is open to allow the input of sunlight beams reflected by the heliostats 502 arranged in the second arrangement range R2.

Next, an operation method of the above power generating device is described.
First, as shown in FIG. 22 and FIG. 23, as the generator of the gas turbine unit 511 is activated and the rotor starts to rotate via a speed reducer, air is supplied into the compressor. The air supplied into the compressor is compressed in the compressor, then flows out to the heat receiver supply paths 534, and it is supplied from the heat receiver supply paths 534 into the low-temperature side header 532 of the heat receiving section 524.

As shown in FIG. 24, the compressed air supplied into the low-temperature side header 532 is delivered into the low-temperature side header 532 around the entire circumferential direction, and then it flows into the respective heat receiving pipes 531 which are connected around the entire circumferential direction of the low-temperature side header 532.

Meanwhile, sunlight beams irradiated onto the heliostats 502 are reflected by the heliostats 502, and are then irradiated into the heat receiver main body 523 through the opening section 526 of the heat receiver main body 523. Specifically, as shown in FIG. 22, the sunlight beam from the heliostat 502 positioned at a closet point, which is the closest to the light collecting heat receiver 510 (refer to the arrow H1 in FIG. 22), is irradiated onto the upper section (downstream side) of the heat receiving pipe 531, and the sunlight beam from the heliostat 502 positioned at a furthest point, which is the furthest from the light collecting heat receiver 510 (refer to the arrow H2 in FIG. 22), is irradiated onto the lower section (upstream side) of the heat receiving pipe 531. As a result, the heat receiving pipe 531 is heated.
At this time, the sunlight beams reflected by the heliostats 502 arranged in the second arrangement range R2 travel through the opening section 522 of the supporting column 521, and are then irradiated into the opening section 526 of the heat receiver main body 523. Then, the sunlight beams irradiated onto the heat receiver main body 523 are received on the heat receiving pipe 531, and heat the heat receiving pipe 531.

Thereby, the heat receiving pipe 531 is heated, and heat exchange is performed between the heated heat receiving pipe 531 and the compressed air flowing in the heat receiving pipe 531. As a result, the temperature of the compressed air becomes high while it is traveling in the heat receiving pipe 531.
The compressed air which has reached the downstream end of the heat receiving pipe 531 becomes high-temperature compressed air, and flows into the high-temperature side header 533. That is to say, the compressed air heated in the respective heat receiving pipes 531 is congregated in the high-temperature side header 533, and then it flows into the turbine supply path 536 through the outlet pipes 535.
The compressed air supplied into the turbine supply path 536 travels through the turbine supply path 536, and then flows into the turbine to drive the turbine. Thereby, the thermal energy of the compressed air supplied from the turbine supply path 536 is converted into rotational energy of the rotor, to thereby generate a driving force in the turbine. This driving force is output to the generator connected to the rotor, and thereby power generation is performed. The compressed air which has flowed inside the turbine becomes exhaust gas to be discharged from the turbine.

As described above, in the present embodiment, there is provided the configuration such that the opening section 522 which opens along the north-south direction is formed in the heightwise intermediate position of the supporting column 521 which supports the light collecting heat receiver 510.
According to this configuration, even in a case where the tower section 503 is arranged on the light path for sunlight beams, it is possible to suppress sunlight beams reflected by the heliostats 502 from being blocked by the tower section 503, and sunlight beams can be efficiently collected on the light collecting heat receiver 510.
Since the opening section 522 is formed, in the supporting column 521, only on the light path through which sunlight beams pass, by increasing the strength of the portion other than the opening section 522, it is possible to ensure the strength of the tower section 503. As a result, unlike a configuration which simply reduces the sectional dimension (diameter) and the number of the supporting columns in order to improve the light collecting efficiency, it is possible to improve the light collecting efficiency in the light collecting heat receiver 510 while ensuring the strength of the tower section 503.
Therefore, the temperature of the light collecting heat receiver 510 can be stably raised by the sunlight beams, and accordingly, the thermal energy obtained by the light collecting heat receiver 510 can be efficiently transmitted to the compressed air. Therefore, it is possible to provide a power generating device 505 having a high level of thermal efficiency.

In addition, in a case where the light collecting heat receiving system 600 is installed in the northern hemisphere as with the present embodiment, the high efficiency range F1 (refer to FIG. 59) is decentered to the northern side from the center of the heliostat field 501.
Consequently, in the present embodiment, by installing the tower section 503 on the southern side with respect to the housing 512, sunlight beams reflected by the heliostats 502 on the northern side where cosine efficiency is high are collected in the light collecting heat receiver 510 without being blocked by the tower section 503. As a result, it is possible to efficiently supply sunlight beams into the light collecting heat receiver 510.

Moreover, in the power generating device 505 of the present embodiment, since power generation is performed with use of compressed air heated by the light collecting heat receiver 510, it is possible to provide a power generating device 505 with superior power generation efficiency.
Furthermore, since the gas turbine unit 511 and the light collecting heat receiver 510 are both installed on the tower section 503, it is possible to improve the level of maintainability.

### Seventh Embodiment

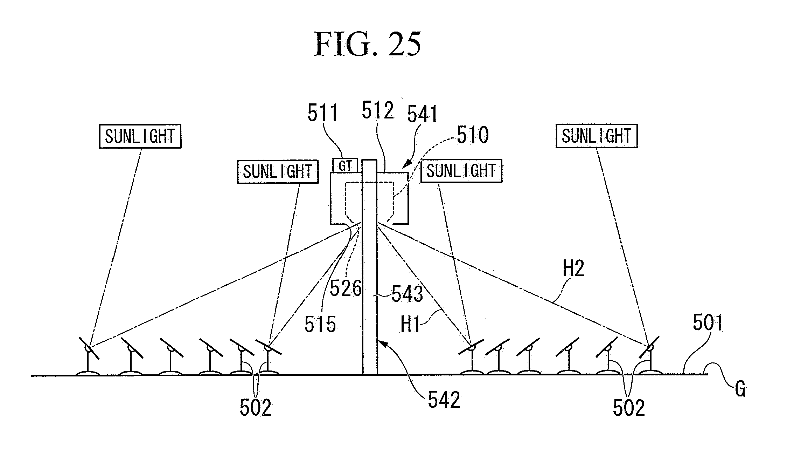

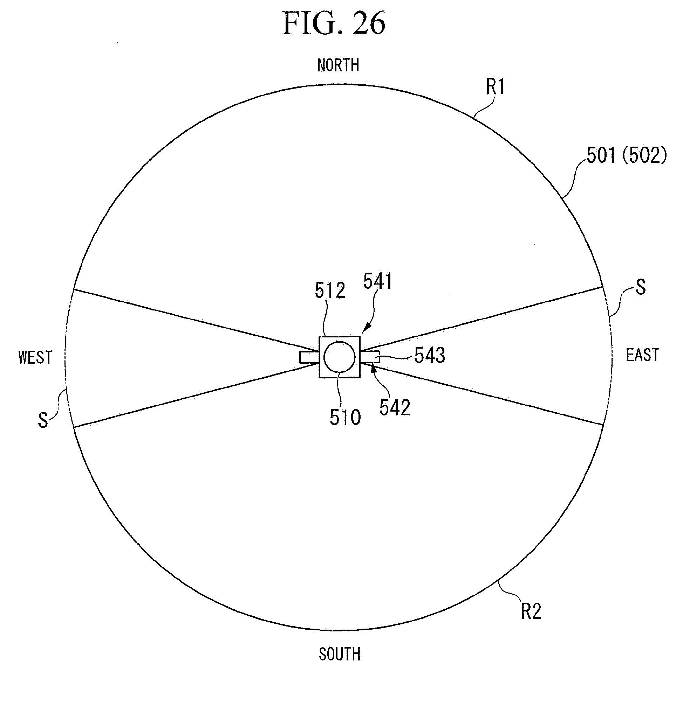

Next there is described a seventh embodiment of the present invention. FIG. 25 is a side view of a sunlight collecting heat receiving system of the seventh embodiment, and FIG. 26 is a plan view thereof. In the sixth embodiment described above, there was described the case where the light collecting heat receiver 510 and the gas turbine unit 511 are supported by a single supporting column 521. However, the present embodiment differs from the sixth embodiment in that the light collecting heat receiver 510 and the gas turbine unit 511 are supported by two supporting columns. Configurations similar to those in the sixth embodiment described above are given the same reference symbols and descriptions thereof are omitted.

As shown in FIG. 25 and FIG. 26, a tower section of a power generating device 541 in the present embodiment is provided with two supporting columns 543 provided standing upward on the ground G. Each of the supporting columns 543 is of a rectangular column shape for example, and they are collaterally arranged along the east-west direction. The planar shape of each supporting column 543 is formed in a rectangular shape such that lengthwise direction thereof is arranged so as to match with the east-west direction and the widthwise direction thereof is arranged so as to match with the north-south direction.

Here, in the heliostat field 501, there are arranged in a substantially ring shape a plurality of heliostats 502 so as to surround the periphery of a tower section 542. In this case, in the circumferential direction of the heliostat field 501 having the power generating device 541 in the center thereof, a region on the straight line connecting the power generating device 541 and the ground G where the supporting columns 543 intervene, serves as a light-blocked range S, and no heliostat 502 is arranged in this light-blocked region S. That is to say, the arrangement range of the heliostats 502 in the present embodiment includes a predetermined angle range (first arrangement range R1) on circumferentially both sides of due north with respect to the power generating device 541, and a predetermined angle range (second arrangement range R2) on circumferentially both sides of due south with respect to the power generating device 541.

On the upper section of the supporting columns 543 there is fixed a housing 512 so as to bridge-connect between the supporting columns 543. Inside the housing 512 there is housed a light collecting heat receiver 510 having a configuration similar to that of the sixth embodiment described above, and on the upper surface of the housing 512 there is arranged a gas turbine unit 511.

In this case, sunlight beams reflected by the heliostats 502 travel through between the respective supporting columns 543 and are irradiated into the light collecting heat receiver 510. That is to say, there is configured an opening section which opens between the respective supporting columns 543 along the north-south direction. Sunlight beams are collected into the light collecting heat receiver 510, and thereby power generation as with that in the sixth embodiment described above is performed. Although it is not shown in the diagram, on the upper section of the housing 512 there is provided an elevating mechanism comprising a pulley and the like, and it can be raised or lowered along the side surface of the supporting column 543 on the side opposite to that of the light collecting heat receiver 510. Accordingly, tools and components required when conducting maintenance for the light collecting heat receiver 510 and the gas turbine unit 511, can be transported to the upper section of the tower section 542 using the elevating mechanism. In this case, by transporting tools and components along the side surface of the supporting column 543 in the light-blocked range S, the efficiency of light collection performed by the light collecting heat receiver 510 will not be reduced.

In this way, according to the present embodiment, an effect similar to that of the sixth embodiment can be achieved, and it is possible to improve the strength of the tower section 542 compared to the case where the housing 512 and the gas turbine unit 511 are supported by a single supporting column 521.
Moreover, since the lengthwise direction of the upper surface of the supporting column 543 is arranged so as to match with the east-west direction, it is possible to reduce the light-blocked range S where sunlight beams are blocked by the supporting column 543, compared to the case where the lengthwise direction thereof is arranged so as to match the north-south direction. In addition, since the opening direction of the opening section between the supporting columns 543 extends along the north-south direction, sunlight beams reflected in the range of the arrangement of the heliostats 502 where cosine efficiency is high (the first arrangement range R1), can be collected on the light collecting heat receiver 510 without being blocked by the supporting column 543. As a result, it is possible to improve the light collecting efficiency of the light collecting heat receiver 510 and improve the power generating efficiency. There may also be provided a configuration in which an opening section passing through each supporting column 543 is formed as with the sixth embodiment. Thereby, it is possible to further reduce the light-blocked range S and thereby improve the light collecting efficiency.

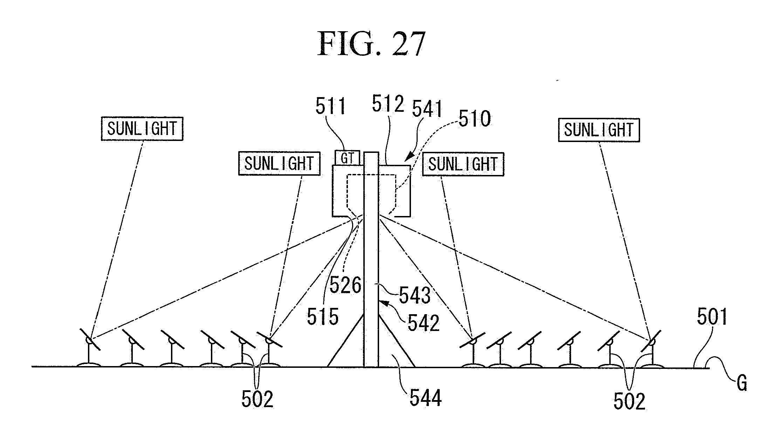

Next there is described a modified example of the seventh embodiment. FIG. 27 is a side view of a light collecting heat receiving system showing the modified example of the seventh embodiment.
As shown in FIG. 27, the supporting column 543 of the tower section 542 may be reinforced with a reinforcement member 544. The reinforcement member 544 is of a laterally triangular shape, is provided standing on the ground G, and supports the lower section of the supporting column 543 so as to surround it.
According to this configuration, since the supporting column 543 can be reinforced with the reinforcement member 544, the sectional dimension of the supporting column 543 (for example, the length in the north-south direction) may be reduced as much as possible to thereby reduce the range S where light beams are blocked by the supporting column 543. Any appropriate design modification may be made to the size and shape of the reinforcement member 544 provided that it does not intervene on the light path of sunlight beams.

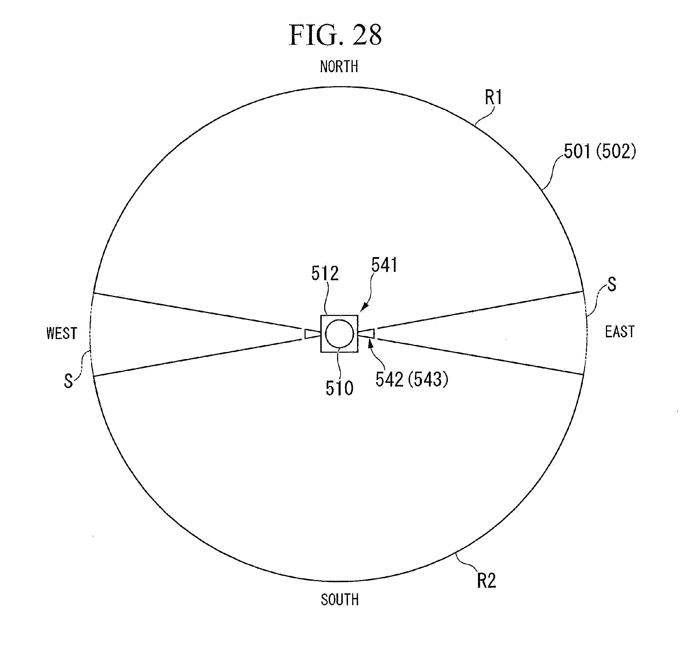

Furthermore, FIG. 28 is a side view of a light collecting heat receiving system showing another modified example of the seventh embodiment.
The planar shape of the supporting column 543 is not limited to a rectangular shape, and, for example, it may be formed in a wedge shape (planarly substantially trapezoidal shape) as shown in FIG. 28. Specifically, each supporting column 543 is formed so that the width thereof in the widthwise direction (north-south direction) becomes narrower with approach to the housing 512. Moreover, the housing 512 is fixed so as to bridge-connected between the short-edge side side surfaces of the respective supporting columns 543.
According to this configuration, since the light-blocked range S can be reduced compared to the case of forming the supporting column 543 in a planarly rectangular shape, it is possible to further improve the light collecting efficiency. The planar shape of the supporting column 543 does not need to be formed in a wedge shape in the entire heightwise direction, and only the location which intervenes on the light path for sunlight beams may be formed in a wedge shape. Thereby, it is possible to reduce the light-blocked range S while ensuring the strength of the tower section 542.

### Eighth Embodiment

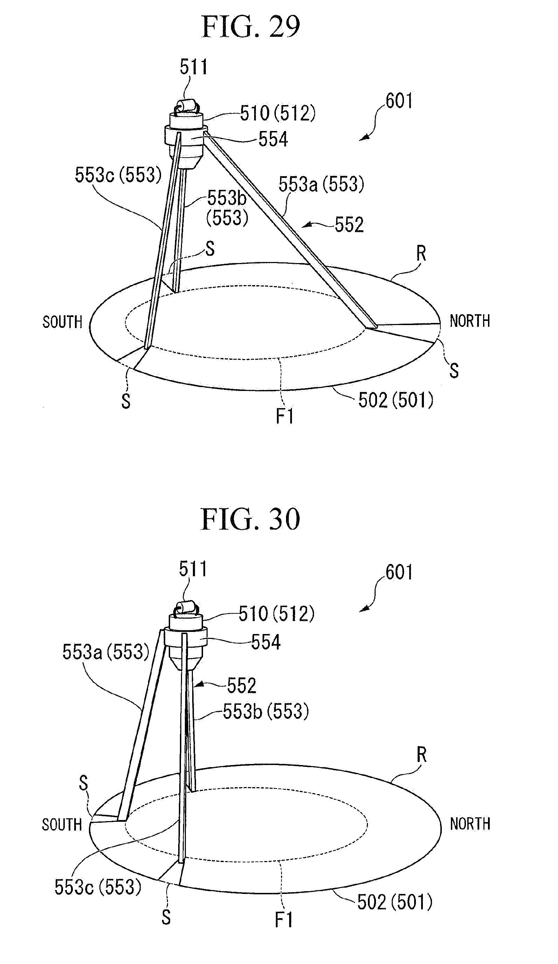

Next there is described an eighth embodiment of the present invention. FIG. 29 is a perspective view of a sunlight collecting heat receiving system in the eighth embodiment. In the sixth embodiment described above, there was described the configuration in which the tower section 503 is arranged in the center section of the heliostat field 501, and the heliostats 502 are arranged so as to surround this tower section 503. However, the eighth embodiment differs therefrom in that the supporting columns of the tower section extend from the outer circumferential region of the heliostat field.

As shown in FIG. 29, in a light collecting heat receiving system 601 of the present embodiment, a plurality of heliostats 502 are arranged in a substantially circular shape on the heliostat field 501. Specifically, an arrangement range R of the heliostats 502 in the heliostat field 501 is such that, in the range on the outer side of the high efficiency range F1 (refer to FIG. 59), the northern side range is set larger than the southern side range. Furthermore, in a position on the southern side of the center of the heliostat field 501, that is, a position decentered to the upstream side in the sunlight beam irradiation direction, there are arranged a light collecting heat receiver 510 and a gas turbine unit 511 supported on the tower section 552.

The tower section 552 is provided with three supporting columns 553 which extend diagonally upward from the outer periphery of the high efficiency range F1 toward the light collecting heat receiver 510, and a cylindrical bracket 554 supported between the respective supporting columns 553, and the light collecting heat receiver 510 is supported on the inner side of this bracket 554.
One supporting column 553a of the respective supporting columns 553 extends from the northern outer periphery of the high efficiency range F1 toward the bracket 554, and the other supporting columns 553b and 553c extend from the outer periphery on the south-eastern side and south-western side toward the bracket 554. Each supporting column 553 is of a rectangular solid shape, and the planarly lengthwise direction thereof is arranged so as to match with the radial direction of the heliostat field 501. Moreover, a region on the radial outer side of the supporting columns 553 serves as a light-blocked range S, and no heliostat 502 is arranged in this range. In this case, sunlight beams reflected by the heliostats 502 travel through between the respective supporting columns 553 and are irradiated into the opening section 526 (refer to FIG. 24) of the light collecting heat receiver 510. That is to say, the range between the respective supporting columns 553 is arranged on the light path between the heliostats 502 and the light collecting heat receiver 510, forming an opening section through which sunlight beams can be irradiated onto the light collecting heat receiver 510.

As described above, in the present embodiment, since an effect similar to that of the above embodiment can be achieved and also the supporting columns 553 are provided standing from the outer periphery of the high efficiency range F1, the heliostats 502 can be arranged directly under the light collecting heat receiver 510, that is, in the entire high efficiency range F1. Here, the range directly under the light collecting heat receiver 510 is the high efficiency range F1 where the irradiation angle of sunlight beams irradiated onto the heliostats 502 is small and a high level of cosine efficiency can be obtained. Therefore, by arranging the heliostats 502 directly under the light collecting heat receiver 510, it is possible to improve the light collecting efficiency of the light collecting heat receiver 510.

Moreover, by arranging the heliostats 502 also in the range outside the high efficiency range F1, it is possible to further improve the light collecting efficiency. In this case, by ensuring that the heliostat field 501 on the northern side of the high efficiency range F1 is larger than the heliostat field 501 on the southern side, more heliostats 502 may be arranged in the northern side heliostat field 501 where the cosine efficiency is comparatively high. Furthermore, by having the sunlight collecting heat receiving system 601 arranged decentered from the center of the heliostat field 501 to the northern side, it is possible to efficiently collect sunlight beams reflected by the heliostats 502 on the downstream side in the irradiation direction where the sunlight beam irradiation angle is comparatively small.
As a result, it is possible to increase the irradiation amount of sunlight beams irradiated into the light collecting heat receiver 510, and improve the light collecting efficiency of the sunlight collecting heat receiving system 601. Furthermore, the configuration may be such that the supporting columns 553 extend from the outer side of the heliostat field 501 toward the light collecting heat receiver 510.

Next there is described a modified example of the eighth embodiment. In the eighth embodiment described above, there was described the configuration in which the supporting column 553a is provided standing from the northern side outer periphery of the high efficiency range F1. However, the configuration is not limited to this, and for example, the supporting column 553a may extend from the southern side outer periphery of the high efficiency range F1 toward the light collecting heat receiver 510 as illustrated in FIG. 30. In this case, although sunlight beams irradiated from the southern side are likely to be blocked by the supporting column 553a, the heliostats 502 can be arranged in the entire area of the heliostat field 501 on the northern side of the light collecting heat receiver 510. As a result, sunlight beams irradiated onto the northern side of the light collecting heat receiver 510 can be efficiently reflected toward the light collecting heat receiver 510.

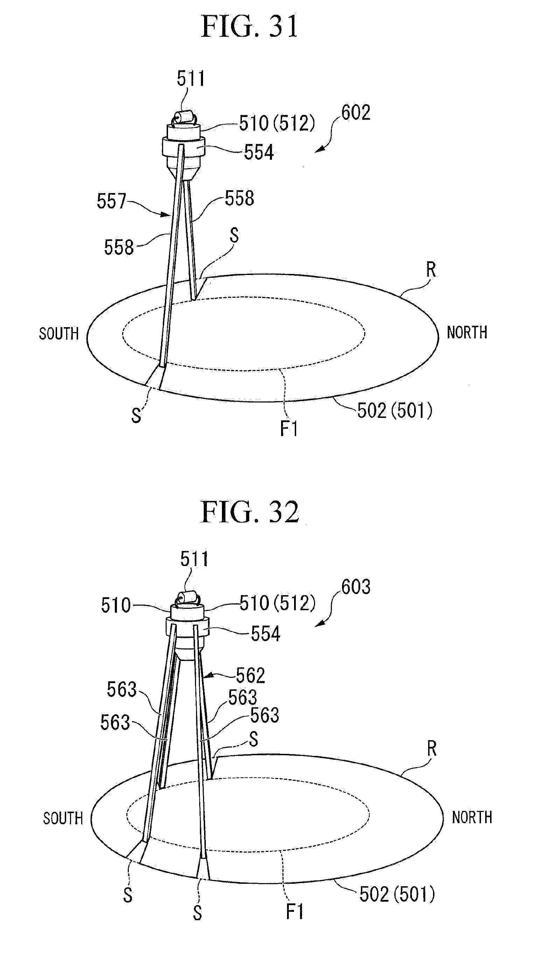

Moreover, in the eighth embodiment described above, there was described the case where the light collecting heat receiver 510 is supported with three of the supporting columns 553. However, the number of the supporting columns 553 is not limited to three, and any appropriate modification may be made thereto.
For example, a tower section 557 of a light collecting heat receiving system 602 shown in FIG. 31 is provided with two supporting columns 558. Each supporting column 558 respectively extends from the outer periphery on the south-eastern side and south-western side of the high efficiency range F1 toward the light collecting heat receiver 510. Moreover, the planar shape of the supporting column 558 is formed so that the lengthwise direction thereof matches with the radial direction of the heliostat field 501. Furthermore, a region on the radial outer side of the supporting columns 558 serves as a light-blocked range S, and no heliostat 502 is arranged in this range.

Moreover, a tower section 562 of a light collecting heat receiving system 603 shown in FIG. 32 is provided with four supporting columns 563. Two of the supporting columns 563 extend from both the outer periphery on the south-eastern side and the outer periphery on the south-western side of the high efficiency range F1 toward the light collecting heat receiver 510. Moreover, the planar shape of the supporting column 563 is formed so that the lengthwise direction thereof matches with the radial direction of the heliostat field 501. Furthermore, a region on the radial outer side of the supporting columns 563 serves as a light-blocked range S, and no heliostat 502 is arranged in this range.

### Ninth Embodiment

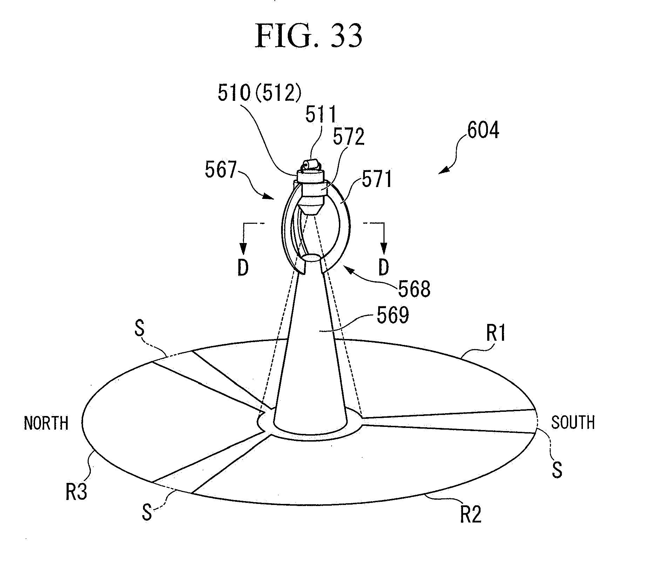

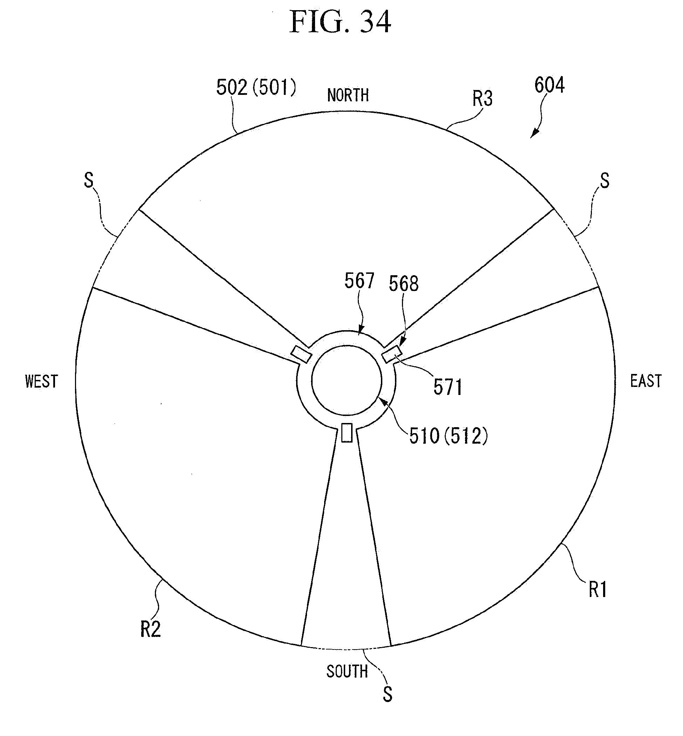

Next there is described a ninth embodiment of the present invention. FIG. 33 is a perspective view showing a power generating device of the ninth embodiment, and FIG. 34 is a cross-sectional view taken along line D-D of FIG. 33.
As shown in FIG. 33 and FIG. 34, a light collecting heat receiving system 604 of the present embodiment is such that a ring-shaped heliostat field 501 is provided so as to surround the periphery of a tower section 568 of a power generating device 567. The tower section 568 is provided with a base section 569 provided standing from the center section of the heliostat field 501, three supporting columns 571 extending from the upper section of the base section 569, and a cylindrical bracket 572 which is connected between the respective supporting columns 571 at the upper end section of the respective supporting columns 571, and a light collecting heat receiver 510 is supported on the inner side of this bracket 572.

The base section 569 is a solid substantially cone-shaped member composed of concrete or the like, and it extends to a height at which it does not block sunlight beams reflected by the heliostats 502. That is to say, the sunlight beams reflected by the heliostats 502 travel through the upper side of the base section 569.

Here, each supporting column 571 is an arc-shaped member which overhangs along the radial direction in the heliostat field 501, with approach from the upper end side and lower end side to the heightwise center section. That is to say, each supporting column 571, from the lower end section thereof to the upper section thereof, is connected to the bracket 572 so as to bend around from the radial outer side of the heliostat field 501.
Moreover, the planar shape of the supporting column 571 is formed so that the lengthwise direction thereof matches with the radial direction of the heliostat field 501. In this case, sunlight beams reflected by the heliostats 502 travel through between the respective supporting columns 571 and are irradiated into the light collecting heat receiver 510. That is to say, the range between respective supporting columns 571 forms an opening section through which sunlight beams can be irradiated onto the light collecting heat receiver 510. Furthermore, a region on the radial outer side of the periphery of the base section 569 and the supporting columns 571 serves as a light-blocked range S, and no heliostat 502 is arranged in this range. That is to say, in the heliostat field 501, there are alternately arranged along the circumferential direction, arrangement ranges R1 to R3 of the heliostats 502 and the light-blocked range S.

According to this configuration, an effect similar to that of the above embodiment can be achieved, and by connecting the supporting columns 571 to the solid base section 569, the supporting columns 571 are arranged only in the range corresponding to the light path for sunlight beams. As result, the length of the column 571 can be reduced compared to the case of providing a supporting column standing from the ground G, and it is therefore possible to improve the strength of the tower section 568. Furthermore, since each supporting column 571 is formed in an arc shape so as to be separated from the light collecting heat receiver 510, it is possible to reduce the light-blocked range S formed by the supporting columns 571, compared to the case where the supporting column vertically extends from the base section 569. As a result, it is possible to improve the light collecting efficiency while ensuring the strength of the tower section 568.

### Tenth Embodiment

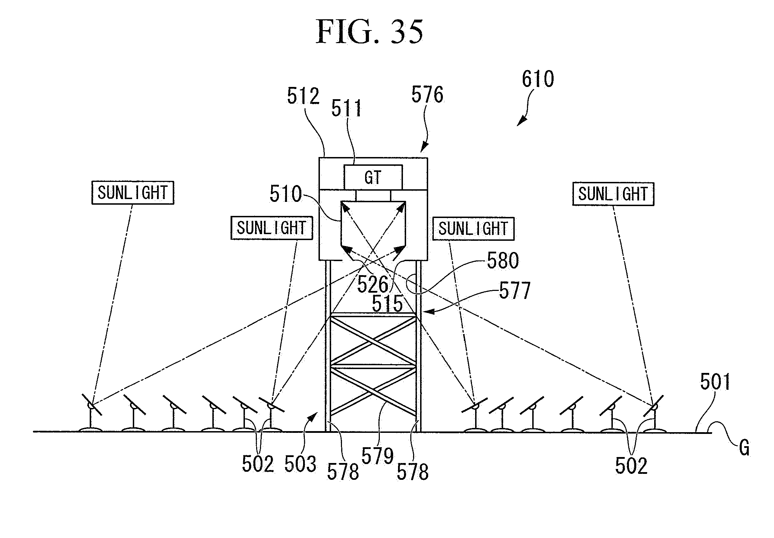

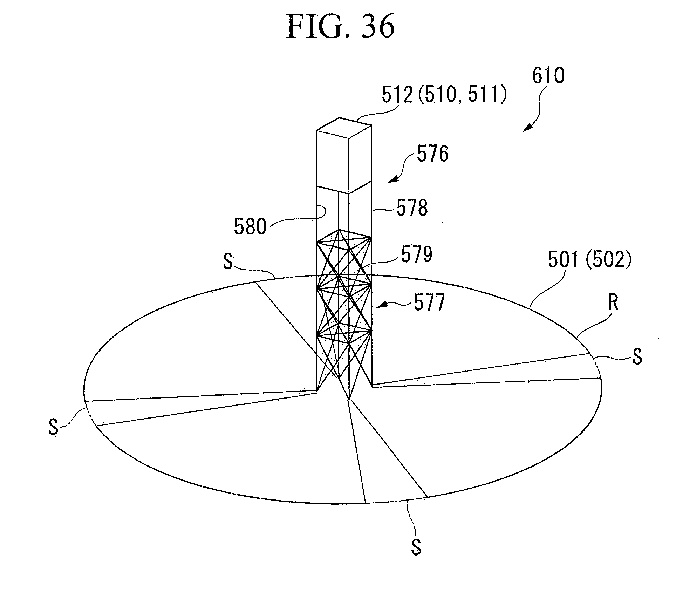

Next there is described a tenth embodiment of the present invention. FIG. 35 is a side view of a light collecting heat receiving system, and FIG. 36 is a perspective view thereof. The present embodiment differs from the above embodiment in that a tower section is of a truss structure (frame structure).
As shown in FIG. 35 and FIG. 36, a light collecting heat receiving system 610 of the present embodiment is such that a ring-shaped heliostat field 501 is provided so as to surround the periphery of a tower section 577 of a power generating device 576. On the upper section of the tower section 577 there is installed a rectangular cylinder-shaped housing 512, and inside this housing 512 there are housed the light collecting heat receiver 510 and the gas turbine unit 511 described above.

The tower section 577 is provided with four supporting columns 578 standing from the ground G toward the lower surface of the housing 512. As shown in FIG. 36, the range on the extended line of the diagonal line of each supporting column 578 serves as a light-blocked range S, and no heliostat 502 is arranged in this range. Meanwhile, the regions other than the light-blocked ranges S in the heliostat field 501 form arrangement ranges R of the heliostats 502.
Moreover, the tower section 577 is provided with beam sections 579 which bridge-connect the respective supporting columns 578. These beam sections 579, on the heightwise lower side of the supporting column 578, connect between the respective supporting columns 578, and they are not arranged on the light paths of sunlight beams reflected by the heliostats 502 and irradiated into the light collecting heat receiver 510. That is to say, on the upper section of the supporting column 578, the region with no beam section 579 arranged therein forms an opening section 580 of the present invention.

According to this configuration, an effect similar to that of the above embodiment can be achieved. Furthermore, in the lower section of the tower section 577, by configuring a truss structure with the respective supporting columns 578 connected by the beam sections 579 while forming the opening section 580 between the respective supporting columns 578 without arranging the beam sections 579 on the light paths of sunlight beams in the upper section of the tower section 577, it is possible to improve the efficiency of sunlight beam collection while ensuring the strength of the tower section 577.

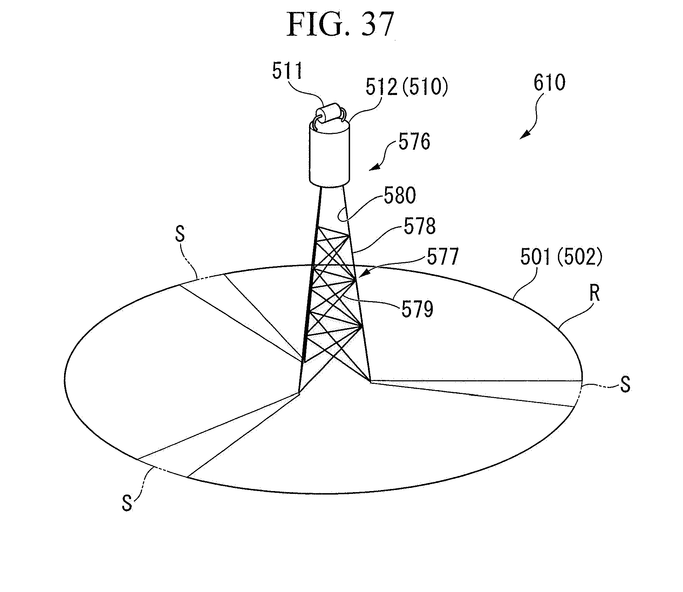

Next there is described a modified example of the tenth embodiment. In the tenth embodiment described above, there was described the case of installing four of the supporting columns 578. However, the configuration is not limited to this, and the configuration may be such that, for example, three of the supporting columns 578 are installed as shown in FIG. 37. Thereby, the light-blocked range S can be reduced compared to the case of installing four of the supporting columns 578, and therefore, light collecting efficiency can be improved. Moreover, the shape of the housing 512 may be a rectangular cylinder shape or a cylinder shape. However, by forming the housing 512 in a cylinder shape, wind pressure which acts on the housing 512 can be reduced.

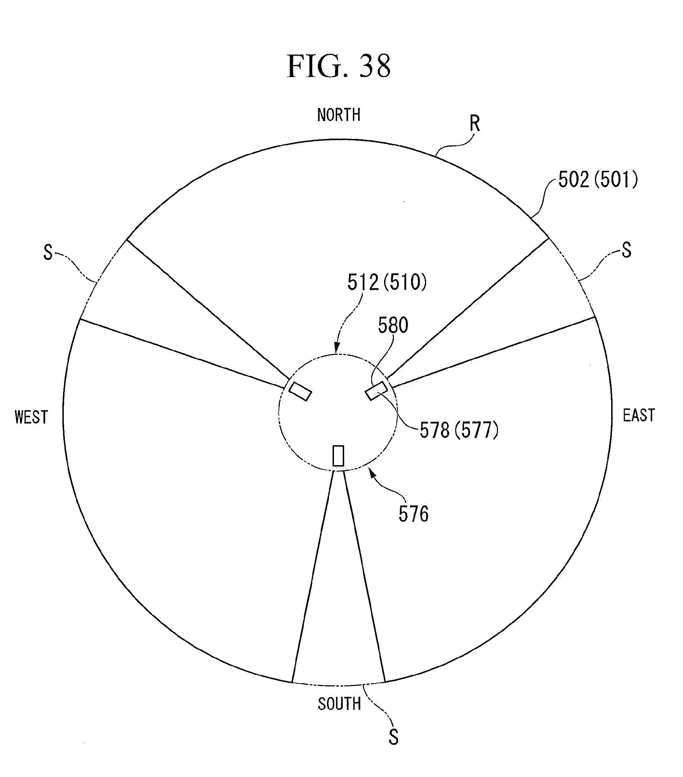

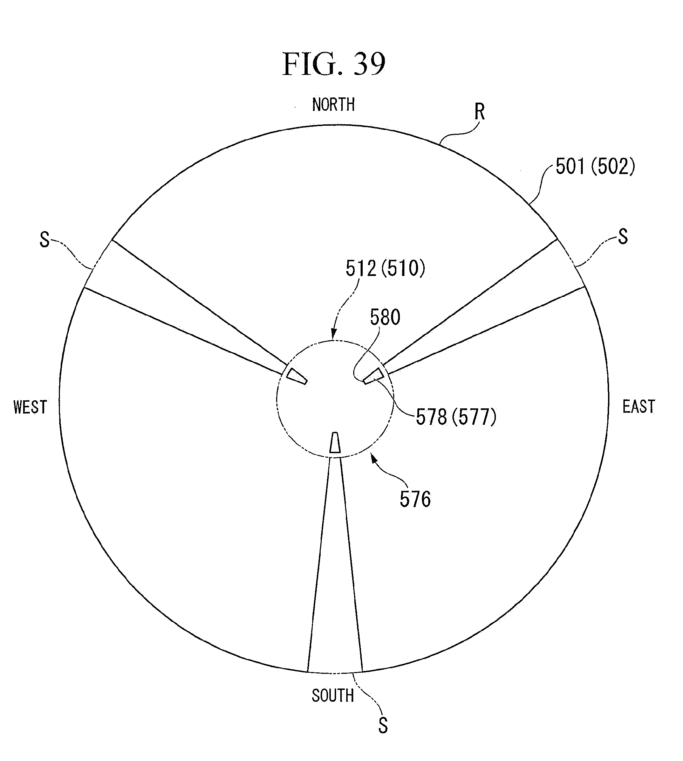

Furthermore, as shown in FIG. 38, the configuration may be such that the respective supporting columns 578 are formed in a rectangular column shape. In this case, by arranging the planarly lengthwise direction of each supporting column 578 so as to match with the radial direction of the heliostat field 501, it is possible to reduce the light-blocked range S.
Furthermore, as shown in FIG. 39, the configuration may be such that the planar shape of each supporting column 578 is formed in a wedge shape. In this case, since the light-blocked range S can be reduced compared to the case of forming the supporting column 578 in a planarly rectangular shape, it is possible to further improve the light collecting efficiency. It is sufficient that the wedge shape of these supporting columns 578 is at least formed only in the region of the tower section 577 where the opening section 580 is formed.

### Eleventh Embodiment

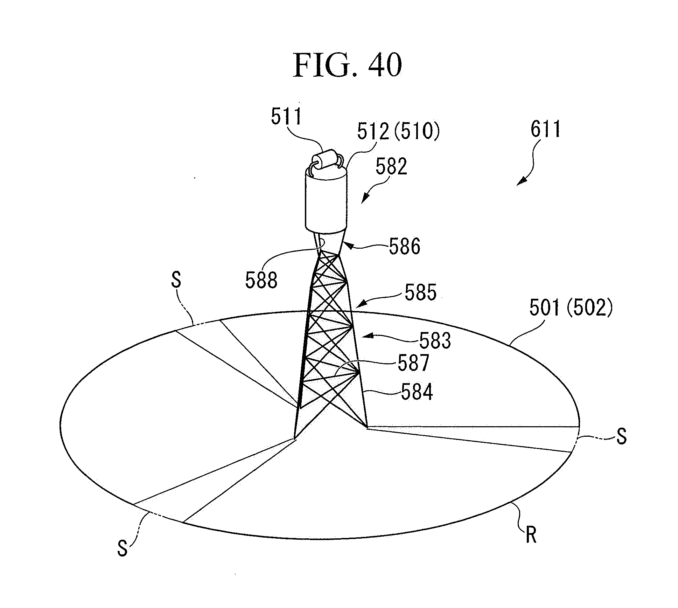

Next there is described an eleventh embodiment of the present invention. FIG. 40 is a perspective view of a sunlight collecting heat receiving system.
As shown in FIG. 40, a light collecting heat receiving system 611 of the present embodiment is such that a ring-shaped heliostat field 501 is provided so as to surround the periphery of a tower section 583 of a power generating device 582. On the upper section of the tower section 583 there is installed a cylinder-shaped housing 512, and inside this housing 512 there are housed the light collecting heat receiver 510 and the gas turbine unit 511 described above.

The tower section 583 is provided with three supporting columns 584 provided standing from the ground G toward the lower surface of the housing 512, and the respective supporting columns 584 are connected by beam sections 587. Moreover, the respective supporting columns 584 are arranged forming a drum shape along the heightwise direction thereof. Specifically, each supporting column 584 comprises a narrowing section which extends so that the distance between the respective supporting columns 584 becomes narrower with approach to the upper side, and an expanding section 586 which extends so that the distance between the respective supporting columns 584 becomes wider again with approach from the upper end section of the narrowing section 585 toward the lower surface of the housing 512. No beam section 587 is arranged between the respective supporting columns 584 at the expanding section 586, and a region with no beam section 587 arranged therein forms an opening section 588 of the present invention.

According to this configuration, by forming the expanding section 586 in the supporting column 584, the distance between the opening section 526 of the light collecting heat receiver 510 (refer to FIG. 24) and the supporting column 584 can be increased compared to the tenth embodiment above. As a result, the light-blocked range S can be reduced while increasing the opening area of the opening section 588. Thereby, it is possible to improve the light collecting efficiency.

### Twelfth Embodiment

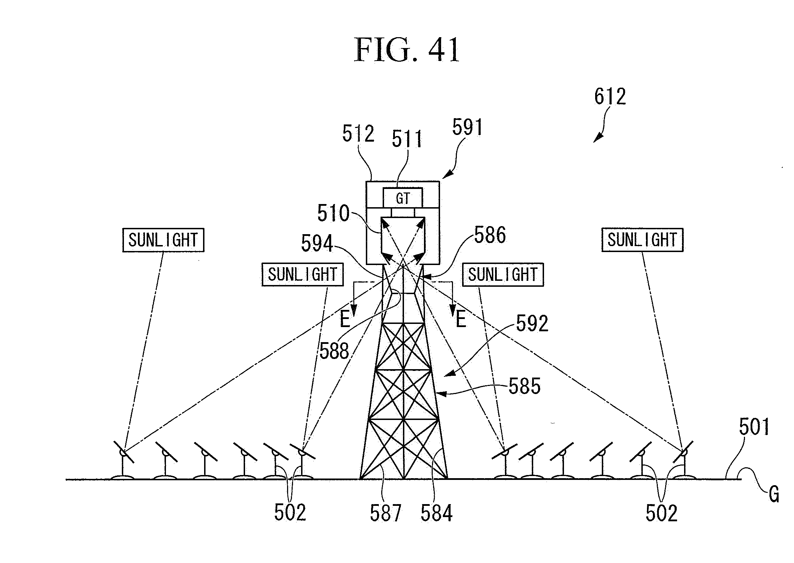

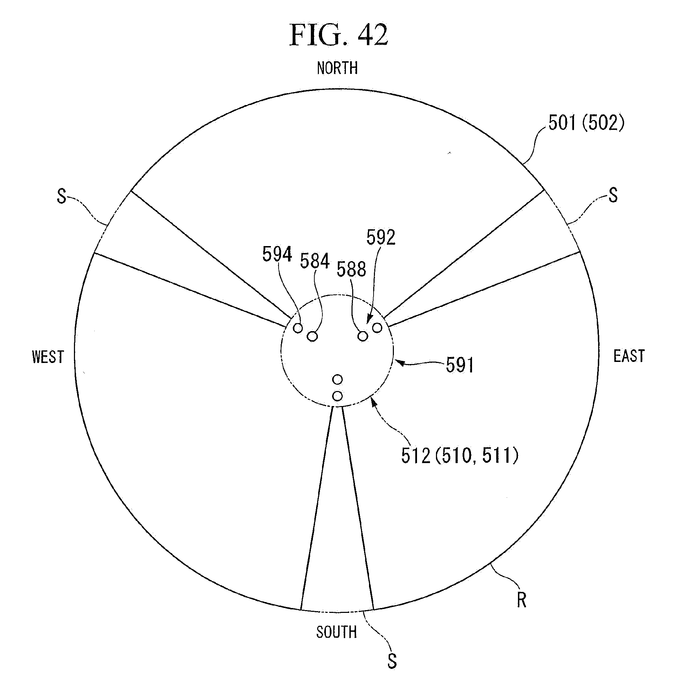

Next there is described a twelfth embodiment of the present invention. FIG. 41 is a side view of a sunlight collecting heat receiving system, and FIG. 42 is a cross-sectional view taken along line E-E of FIG. 41. The light collecting heat receiving system of the present embodiment differs from that of the tenth embodiment described above in that reinforcement columns are provided on the tower section described above.
As shown in FIG. 41 and FIG. 42, a light collecting heat receiving system 612 of the present embodiment is such that a ring-shaped heliostat field 501 is provided so as to surround a tower section 592 of a power generating device 591. On the upper section of the tower section 592 there is installed a cylinder-shaped housing 512, and inside this housing 512 there are housed the light collecting heat receiver 510 and the gas turbine unit 511 described above.

The tower section 592 is provided with three supporting columns 584 provided standing from the ground G toward the lower surface of the housing 512, and the respective supporting columns 584 are connected by beam sections 587.
Here, in the upper section of the tower section 592, on the radial outer side of the respective supporting columns 584, there are provided three reinforcement columns 594 which are respectively arranged in the circumferentially same position as the respective supporting columns 584, and which connect the supporting columns 584 and the housing 512. This reinforcement column 594 extends along the heightwise direction thereof, and the lower end section thereof is connected to the upper section of the narrowing section 585 while the upper end section thereof is connected to the lower surface of the housing 512.

According to this configuration, by reinforcing the tower section 592 with the reinforcement columns 594, it is possible to improve the strength of the tower section 592. Moreover, by arranging the reinforcement columns 594 and the supporting columns 584 in the circumferentially same positions on the heliostat field 501, the reinforcement columns 594 are arranged within the light-blocked range S formed by the supporting columns 584. Therefore, it is possible to prevent an increase in the light-blocked range S due to the additional reinforcement columns 594, and maintain the light collecting efficiency.

In the embodiment described above, there was described the case where the light collecting heat receiving system is installed in a subtropical region in the northern hemisphere. However, the installation is not limited to this, and installation in a subtropical region in the southern hemisphere is also possible. In the case of installing the system in the southern hemisphere, the direction of sunlight beam irradiation is opposite to that in the case of installing it in the northern hemisphere, and therefore, the high efficiency range F1 differs from that in the northern hemisphere (it becomes an oval shape approaching the southern side). Therefore, it is preferable that the arrangement positions of the supporting columns and so forth are set according to changes in the conditions.

### Thirteenth Embodiment

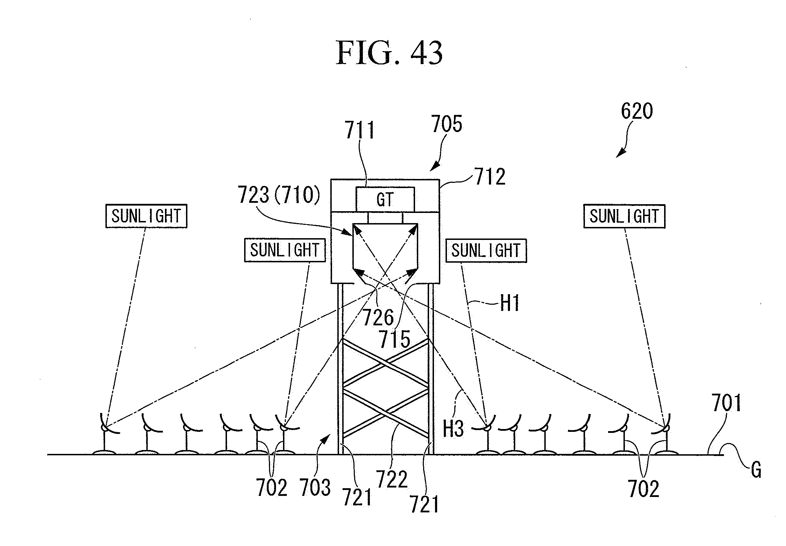

Next there is described a thirteenth embodiment of the present invention. FIG. 43 is a schematic configuration diagram (side view) of a sunlight collecting heat receiving system. As shown in FIG. 43, a light collecting heat receiving system 620 is provided with a substantially ring-shaped heliostat field 701 provided on the ground G, and a solar thermal electric generating device (hereunder, referred to as power generating device) 705. On the heliostat field 701 there are arranged a plurality of heliostats (sunlight collecting system) 702 for reflecting sunlight beams, so as to surround the power generating device 705.

Moreover, in the inner side (center section) of the heliostat field 701 there is provided a tower-shaped power generating device 705 which receives sunlight beams guided by the heliostats 702.
The power generating device 705 is provided with a tower section (supporting section) 703 provided standing on the ground G, a housing 712 supported on the tower section 703, and a light collecting heat receiver 710 and a gas turbine unit 711 housed in the housing 512.

The tower section 703 is provided with a plurality of (for example, four) supporting columns 721 standing from the ground G toward the lower surface of the housing 712. These supporting columns 721 are connected at equal intervals along the circumferential direction on the outer circumferential side on the bottom surface of the housing 712.
Moreover, the tower section 703 is provided with beam sections 722 which bridge-connect the respective supporting columns 721. These beam sections 722 are not arranged on the light paths of sunlight beams reflected by the heliostats 702 and irradiated onto the light collecting heat receiver 710. That is to say, in the present embodiment, the beam sections 722 connect between the respective supporting columns 721 on the vertically lower side of the supporting columns 721.

The housing 712 is of a bottom-ended cylinder shape in which the axial direction thereof matches with the vertical direction, and the top surface thereof is blocked while in the radial center section on the bottom surface thereof, there is formed an opening section 715 which opens toward the ground G. Furthermore, inside this housing 712 there are housed the light collecting heat receiver 710 and the gas turbine unit 711.

The gas turbine unit 711 is supported on the upper side within the housing 712, and it is provided mainly with a gas turbine comprising a compressor and a turbine, and a generator (none of these are shown in the diagram).
The gas turbine is provided with a rotatable rotor connected to the generator, and the compressor and the turbine (none of these are shown in the diagram) are attached so as to be arranged coaxial to this rotor.

The compressor turns air supplied from the outside of the housing 712 into compressed air, and then supplies it to the light collecting heat receiver 710. Then, having been heated in the light collecting heat receiver 710, the compressed air is supplied to the turbine.
The turbine converts the thermal energy of the compressed air heated in the light collecting heat receiver 710 into rotational energy of the rotor, to thereby generate a driving force. This driving force is output to the generator connected to the rotor, and thereby power generation is performed. The compressed air which has flowed inside the turbine becomes exhaust gas to be discharged from the turbine.

Meanwhile, the light collecting heat receiver 710 is provided with a heat receiver main body 723 serving as a casing, and a heat exchanger not shown in the diagram and arranged in the heat receiver main body 723.
The heat receiver main body 723 is of a bottom-ended cylinder shape fixed in the housing 712 in a state where the axial direction thereof matches with the axial direction of the housing 712, and the upper section thereof is blocked while in the lower section thereof, there is formed an opening section 726 which opens toward the ground G. This opening section 726 is to receive sunlight beams collected by the heliostats 702 into the heat receiver main body 723. Since the opening section 726 is set downward in this way, it is possible to suppress thermal energy from being radiated from the opening section 726 to the outside, compared to the case where the opening section 726 is set sideward or upward.
The heat exchanger is a pipe-shaped member through which compressed air supplied from the compressor flows, and it is heated by receiving collected sunlight beams from the opening section 726, and performs heat exchange with the compressed air flowing in the heat exchanger. Then, the compressed air heated by the heat exchanger is supplied to the turbine.

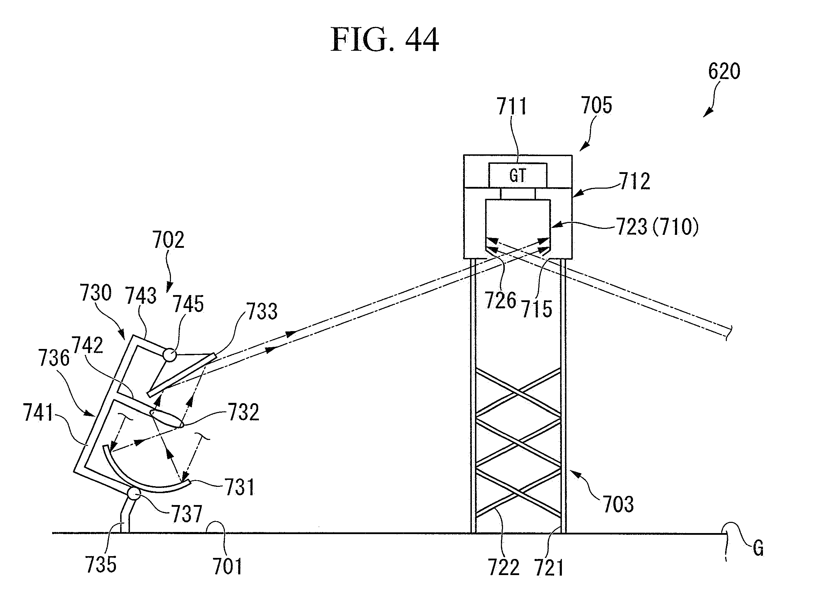

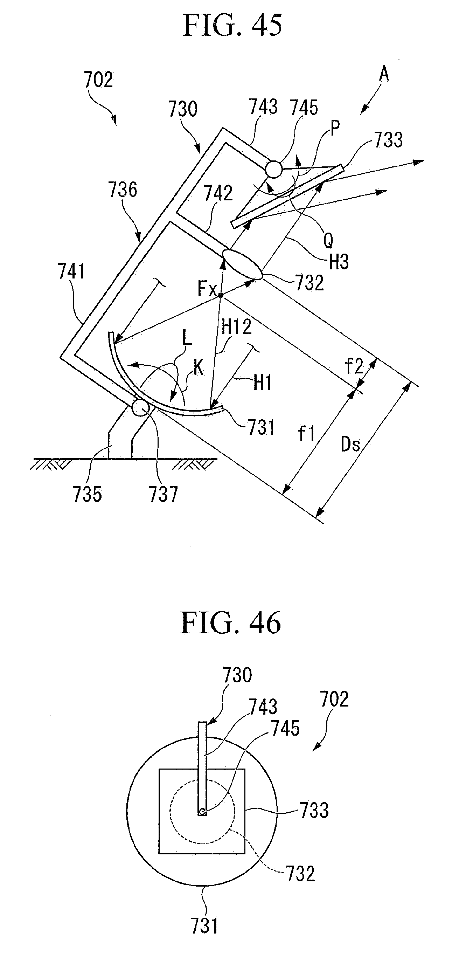

FIG. 44 is a schematic configuration diagram (side view) of the light collecting heat receiving system in a state where one of the heliostats is taken out. Moreover, FIG. 45 is a side view of a heliostat, and FIG. 46 is a diagram seen in the direction of arrow A of FIG. 45.
As shown in FIG. 44 to FIG. 46, the heliostat 702 mentioned above is provided with a primary mirror (mirror) 731 supported on a frame 730, a light collecting lens (optical path, first optical component) 732, and a secondary mirror (second optical component) 733.
The frame 730 is provided with a base section 735 provided standing on the ground G, and an arm 736 extending upward from the base section 735.

The base section 735 is formed bent toward the light collecting heat receiver 710, and at the tip end section thereof, it supports, via a first driving mechanism 737, the primary mirror 731 from the back surface side. The primary mirror 731 is a concaved mirror formed in a paraboloidal shape, and it is arranged so that the center axis (light axis) thereof matches with the axial direction of the base section 735. Moreover, the focal distance of the primary mirror 731 is f1 (refer to FIG. 45).
Furthermore, the first driving mechanism 737 is configured capable of oscillating the primary mirror 731 in biaxial directions (altitude direction K and azimuthal direction L in FIG. 45) with respect to the base section 735. In this case, the first driving mechanism 737 is controlled by a control section not shown in the diagram so that the light receiving surface of the primary mirror 731 always track the diurnal motion of the sun and faces the direction of the sun.

The arm 736 is of a laterally substantially E shape, and the one end side thereof is connected to the first driving mechanism 737 on the back surface side of the primary mirror 731, while the other end side thereof extends so as to enter the front surface (light receiving surface) side of the primary mirror 731. That is to say, the arm 736 is configured capable of oscillating integrally with the primary mirror 731 upon the operation of the first driving mechanism 737. The arm 736 is provided with an L shape extending section 741 which first turns from the upper side of the primary mirror 731 to the front side thereof, and then extends diagonally upward along the light axis of the primary mirror 731, a lens supporting section 742 which extends from the intermediate position of the extending section 741 in the extending direction so as to enter the front surface side of the primary mirror 731, and a secondary mirror supporting section 743 which extends so as to enter the front surface side of the primary mirror 731 from the tip end section of the extending section 741.

The lens supporting section 742 extends toward the radial center section so as to intersect with the light axis of the primary mirror 731, and it supports the light collecting lens 732 at the tip end thereof. The light collecting lens 732 is arranged on a light path between the primary mirror 731 and the light collecting heat receiver 710, and is a convex lens formed in a planarly circular shape. Moreover, the focal distance of the light collecting lens 732 is f2. The light collecting lens 732 is arranged so as to planarly overlap on the center section of the primary mirror 731, and is set so that the light axes thereof match with each other.

The secondary mirror supporting section 743 extends toward the radial center section of the primary mirror 731 so as to intersect with the light axis of the primary mirror 731, and it supports, via a second driving mechanism 745, the secondary mirror 733 from the back surface side at the tip end thereof. The secondary mirror 733 is arranged on the light path between the primary mirror 731 and the light collecting heat receiver 710, and is a planarly rectangular flat mirror. Furthermore, the secondary mirror 733 is configured capable of oscillating in biaxial directions (altitude direction P and azimuthal direction Q) with respect to the secondary mirror supporting section 743 by operating the second driving mechanism 745. In this case, the second driving mechanism 745 is controlled by a control section not shown in the diagram so that light beams collected by the light collecting lens 732 always face the opening section 726 of the light collecting heat receiver 710.

Here, the distance Ds between the primary mirror 731 and the light collecting lens 732 is set to Ds = f1 + f2. That is to say, the focal point position of the primary mirror 731 and the focal point position of the light collecting lens 732 are set to the same focal point Fx.

### Operation Method of Light Collecting Light Receiving System

Next, an operation method of the above light collecting light receiving system is described.
First, as shown in FIG. 43 and FIG. 44, as the generator of the gas turbine unit 711 is activated and the rotor starts to rotate via a speed reducer, air is supplied into the compressor. The air supplied into the compressor is first compressed in the compressor, and it is then supplied as compressed air into the heat exchanger of the light collecting heat receiver.

Meanwhile, as shown in FIG. 44 and FIG. 45, the control section of the heliostat 702 drives the first driving mechanism 737 based on the altitude and direction of the sun, to oscillate the primary mirror 731 and the arm 736. Then, angle adjustment is performed so that the light receiving surface of the primary mirror 731 and the light collecting lens 732 both face the sun. Furthermore, the control section drives the second driving mechanism 745 to oscillate the secondary mirror 733, and thereby, angle adjustment is performed so that light beams collected by the light collecting lens 732 travel toward the light collecting heat receiver 710. By integrally oscillating the primary mirror 731 and the arm 736 with the first driving mechanism 737 in this way, the relative position between the primary mirror 731, the light collecting lens 732, and the secondary mirror 733 is constantly fixed. As a result, angle adjustment of the respective optical components (the primary mirror 731, the light collecting lens 732, and the secondary mirror 733) becomes easy, allowing quick tracking of the sun.

As shown in FIG. 45, sunlight H1 irradiated onto the heliostat 702 is first reflected by the primary mirror 731, and thereby, all of the reflected light H12 reflected by the primary mirror 731 is collected toward the focal point Fx. Then, the reflected light H12 which has passed through the focal point Fx is irradiated onto the light collecting lens 732. Here, since the focal point position of the primary mirror 731 and the focal point position of the light collecting lens 732 are set to the focal point Fx, the reflected light H12 irradiated into the light collecting lens 732 is converted into parallel light through the light collecting lens 732. As a result, the parallel light output from the light collecting lens 732 turns into a light beam H3 having a predetermined spot diameter and is irradiated onto the secondary mirror 733.

The light beam H3 irradiated onto the secondary mirror 733 is reflected by the secondary mirror 733 toward the opening section 726 of the light collecting heat receiver 710. As a result, the light beam H3 reflected by the second mirror 733 is irradiated from the opening section 726 of the heat receiver main body 723 into the heat receiver main body 723.

The light beam H3 irradiated into the heat receiver main body 723 is received by the heat exchanger arranged in the heat receiver main body 723. As a result, the heat exchanger is heated, and heat exchange is performed between the heated heat exchanger and the compressed air flowing inside the heat exchanger. As a result, the temperature of the compressed air becomes high while it is traveling in the heat exchanger.
The compressed air heated by the heat exchanger turns into high-temperature compressed air and flows into the turbine, to drive the turbine. Thereby, the thermal energy of the compressed air is converted into rotational energy of the rotor, to thereby generate a driving force in the turbine. This driving force is output to the generator connected to the rotor, and thereby power generation is performed. The compressed air which has flowed inside the turbine becomes exhaust gas to be discharged from the turbine.

Therefore, according to the present embodiment, all of the sunlight beams H1 irradiated onto the primary mirror 731 are collected toward the focal point Fx, and the collected sunlight beams H1 are converted into light beams H3 having a predetermined spot diameter. Consequently, regardless of the irradiation angle of the sunlight beam H1 to the primary mirror 731, by constantly orienting the mirror toward the direction of the sun, a light beam of a light amount equivalent to that of the sunlight beam H1 irradiated onto the primary mirror 731 can be supplied to the light collecting heat receiver 710. Thereby, a high level of cosine efficiency can be obtained with each heliostat 702, and light collecting efficiency at the light collecting heat receiver 710 can be improved. In this case, since it is possible to obtain a light collecting efficiency equivalent to that conventionally obtained, while reducing the number of the heliostats 702 to be arranged compared to the conventional practice, it is possible to reduce equipment cost and reduce the arrangement range of the heliostats 702. Moreover, by increasing the clearance between the primary mirror 731 and the light collecting lens 732 so that light beams H3 reflected by the secondary mirror 733 are not irradiated onto the heliostat 702 in the close proximity, it is possible to reduce blocking loss while further reducing the arrangement range of the heliostats 702. Moreover, the term blocking loss here refers to the ratio of the light amount of sunlight beams blocked by the surrounding heliostats 702 before being reflected by the secondary mirror 733 and irradiated into the light collecting heat receiver 710, with respect to the light amount of the sunlight beams irradiated onto the primary mirror 731.

Furthermore, by reducing the arrangement range of the heliostats 702, the height of the tower section 703 can be reduced, and as a result, it is possible to reduce the building cost of the tower section 703. Furthermore, since the distance between the heliostats 702 and the light collecting heat receiver 710 can also be reduced, the operation control of the heliostats 702 for guiding sunlight beams H1 to the light collecting heat receiver 710 becomes easier.
Moreover, since the reflected light beams H12 collected by the primary mirror 731 can be converted into parallel light beams H3 by the light collecting lens 732, it is possible to suppress diffusion of the light beams H3 to be guided to the light collecting heat receiver 710. As a result, the dimension of the opening section 726 of the heat receiver main body 723 can be reduced as much as possible, and therefore, it is possible to reduce the loss of the thermal energy radiated from the opening section 726 to the outside.

As a result, light collecting efficiency of the light collecting heat receiver 710 can be improved and the temperature of the heat exchanger of the light collecting heat receiver 710 can be stably raised by the sunlight beams, and therefore, it is possible to efficiently transmit the thermal energy obtained by the heat exchanger to the compressed air. Therefore, it is possible to further raise the temperature of the compressed air, and provide a power generating device 705 with a high level of power generating efficiency.

Incidentally, in the embodiment described above, there was described the case where the light collecting heat receiving system is installed in a subtropical region in the northern hemisphere. However, the installation is not limited to this, and installation in a subtropical region in the southern hemisphere is also possible. In the case of installing the system in the southern hemisphere, the direction of sunlight beam irradiation is opposite to that in the case of installing it in the northern hemisphere, and it is therefore preferable that the arrangement positions of the tower section 703 and the heliostats 702 are set according to changes in the conditions.

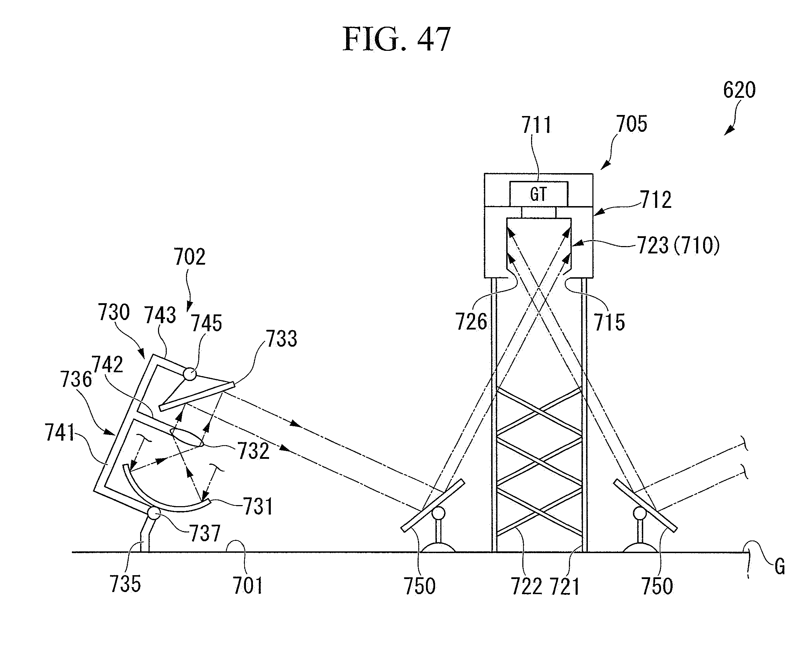

Moreover, in the embodiment described above, there was described the configuration in which the light beams H3 reflected by the secondary mirror 733 of the respective heliostats 702 are directly guided to the light collecting heat receiver 710. However, the configuration may be such that between the secondary mirror 733 and the light collecting heat receiver 710 there is provided a tertiary mirror which first collects the light beams H3 reflected by each secondary mirror 733 and then guides them to the light collecting heat receiver 710.
Specifically, as shown in FIG. 47, a tertiary mirror 750 composed of a flat mirror is installed under the power generating device 705, and the light beams H3 reflected by the secondary mirror 733 of the respective heliostats 702 are first collected toward the tertiary mirror 750. Then, the light beams H3 collected on the tertiary mirror 750 are irradiated into the opening section 726 of the heat receiver main body 723 arranged on the upper side. As a result, for example, even in those cases where the solar altitude is low or where the heliostats 702 and the power generating device 705 are distanced from each other, it is possible to effectively take sunlight beams into the heat receiver main body 723.

Furthermore, in the embodiment described above, there was described the case of extending the frame 730 from the upper side of the primary mirror 731. However, the configuration is not limited to this, and the configuration may be such that the frame 730 is arranged to approach to the primary mirror 731 from the lower side. As a result, it is possible to suppress the light beams H3 reflected by the secondary mirror 733 from being blocked by the frame 730 installed on the surrounding heliostats 702 before being irradiated into the heat receiver main body 723.
Moreover, in the embodiment described above, there was described the configuration in which the light collecting lens 732 is used as the first optical component for converting sunlight beams into parallel light beams, and the secondary mirror 733 is used as the second optical component for guiding the light beams to the heat receiver main body 723. However, the configuration is not limited to this, and the configuration may use an optical component such as a prism.

Furthermore, in the embodiment described above, there was described the configuration of using the heliostats 702 for solar thermal electric generation. However, the configuration is not limited to this, and the configuration may be such that the heliostats 702 are used for solar photovoltaic electric generation. By using the heliostats 702 for solar thermal electric generation, it is possible to improve the light collecting efficiency while reducing the light receiving section.
Moreover, in the embodiment described above, there was described the case where the convex lens (light collecting lens 732) was arranged on the sunlight beam downstream side of the focal point Fx to thereby perform conversion to parallel light beams. However, the configuration is not limited to this, and the configuration may be such that a concave lens is arranged on the sunlight beam upstream side of the focal point Fx.

### Fourteenth Embodiment

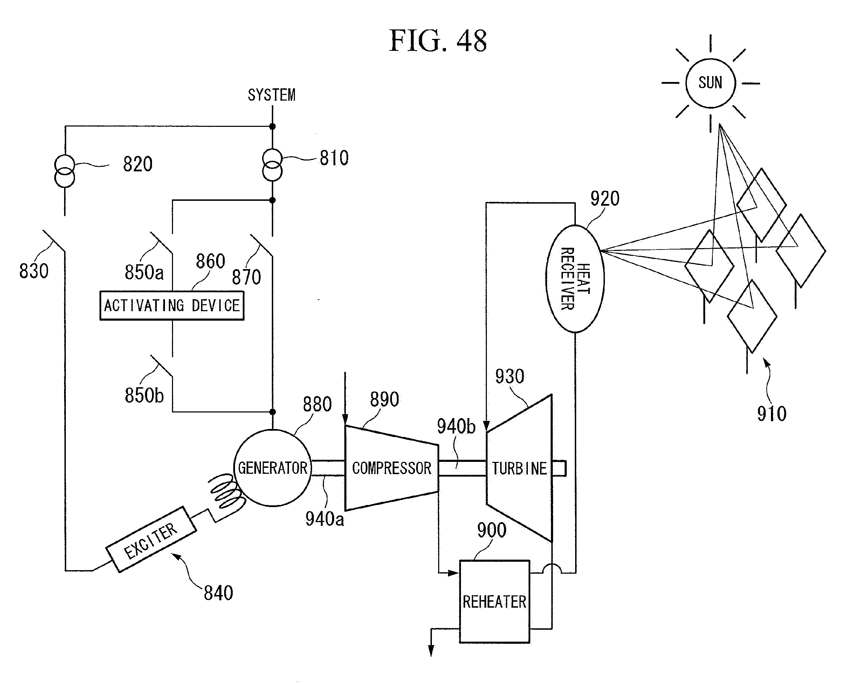

A fourteenth embodiment of the present invention is described in detail, with reference to the drawings. FIG. 48 is a block diagram showing a configuration of a power generating device in the fourteenth embodiment of the present invention.

When activating a turbine 930, the power generating device supplies electric power gained from an external system to a generator 880 which operates as an electric motor, and the turbine 930 is activated with the driving force of the generator 880 operating as the electric motor, and a gas which has been heated with solar heat and has become a high pressure gas.

Next, the power generating device switches the operating mode of the generator 880 so that it operates as a generator, and it causes the turbine 930 to rotate with the high pressure gas heated with solar heat, to thereby supply electric power from the generator 880 to the external system.

The power generating device (solar thermal motor power generating device) of the fourteenth embodiment is provided with a main transformer 810, a transformer 820, an excitation breaker 830, an exciter 840, activating device breakers 850a and 850b, an activating device (control device) 860, a generator breaker 870, a generator 880, a compressor 890, a reheater 900, a heliostat 910, a heat receiver 920, and a turbine (turbo machine) 930. The activating device 860, the excitation breaker 830, the exciter 840, and the heliostat 910 are respectively controlled by a control terminal (not shown in the diagram) of the power generating device.

The main transformer 810 transforms the voltage obtained from the activating device 860 via the activating device breaker 850a, and supplies electric power according to this voltage to the system. Moreover, the main transformer 810 transforms the voltage obtained from the generator 880 via the generator breaker 870, and supplies electric power according to this voltage to the system.

Furthermore, the main transformer 810 transforms the system voltage, and supplies electric power according to the system voltage to the activating device 860 via the activating device breaker 850a. Furthermore, the main transformer 810 transforms the system voltage, and supplies electric power according to the system voltage to the generator 880 via the generator breaker 870.

The transformer 820 transforms the system voltage, and supplies electric power to the exciter 840 via the excitation breaker 830.

The excitation breaker 830 is controlled by the control terminal (not shown in the diagram) of the power generating device, and it connects the transformer 820 and the exciter 840 in the ON state, and it isolates the transformer 820 and the exciter 840 from each other in the OFF state.

The exciter 840 excites the generator 880 at a predetermined constant intensity (constant excitation). Moreover, the exciter 840, upon AVR (automatic voltage regulator) control, adjusts the field magnetic flux to be given to the generator 880 so that the output voltage of the generator 880 becomes constant. Furthermore, the exciter 840 may execute "field-weakening control" for the generator 880. Here, the term field-weakening control refers to a type of control in which, after constant excitation, the field magnetic flux to be given to the generator 880 is weakened to reduce the counter-electromotive force of the generator 880, and thereby the rotation speed of the generator 880 is raised.

The generator 880 is a brush generator, and it is connected to the compressor 890 and the turbine 930 via rotational shafts 940a and 940b. These rotational shafts 940a and 940b rotate together with the compressor 890 and the turbine 930. The generator 880 is controlled by the activating device 860, and is excited by the exciter 840. Moreover, the generator 880 is driven in two modes, namely an electroactuation mode and a power generation mode, according to the control of the activating device 860.

In the electroactuation mode, the generator 880 operates as an electric motor, and it drives, with a driving force (torque) according to the amount of electric power powered by the activating device 860, the rotational shafts 940a and 940b of the compressor 890 and the turbine 930 to rotate.

On the other hand, in the power generation mode, the generator 880 operates as a generator, and it rotates together with the rotational shafts 940a and 940b to thereby perform power generation. Moreover, the generator 880 supplies the electric power amount (generation amount) according to the control of the activating device 860, to the activating device 860 or to the system.

The compressor 890 is connected, via the rotational shafts 940a and 940b, to the generator 880 and the turbine 930, and it rotates with the rotational shafts 940a and 940b upon rotation of the generator 880 and the turbine 930. Furthermore, the compressor 890 draws in gas from an air inlet (not shown in the diagram) as it rotates, and compresses the gas and supplies it to the reheater 900.

The reheater 900 obtains heat from the gas discharged from the turbine 930, and discharges the gas to an exhaust outlet (not shown in the diagram). Moreover, the reheater 900 heats the gas ejected from the compressor 890 with the heat of the gas discharged from the turbine 930, and supplies this heated gas to the heat receiver 920.

The heliostat 910 reflects sunlight beams and irradiates the sunlight beams onto the heat receiver 920. Here, there are provided a plurality of the heliostats 910, and the heliostats 910 are grouped into the heliostats 910 which irradiate sunlight beams onto the heat receiver 920, and the heliostats 910 which do not irradiate sunlight beams onto the heat receiver 920. Thereby, the amount of heat input to the heat receiver 920 is controlled. Here, the heat input amount varies also due to weather conditions.

The heat receiver 920 heats the gas (thermal medium) obtained from the reheater 900 with solar heat, and ejects the gas, which has been heated and has consequently become a high pressure, to the turbine 930.

The turbine 930 is rotated together with the rotational shafts 940a and 940b by the high pressure gas. Moreover, when the generator 880 is operated in the electroactuation mode, the turbine 930 rotates together with the rotational shafts 940a and 940b, which rotate with the driving force of the generator 880 operating as an electric motor. On the other hand, when the generator is operated in the power generation mode, the turbine 930 rotates together with the rotational shafts 940a and 940b, and thereby it causes the generator 880 operating as a generator to perform electric power generation.

The activating device breaker 850a is controlled by the activating device 860, and it connects the activating device 860 and the main transformer 810 in the ON state, while it isolates the activating device 860 and the main transformer 810 from each other in the OFF state.

The activating device breaker 850b is controlled by the activating device 860, and it connects the activating device 860 and the generator 880 in the ON state, while it isolates the activating device 860 and the generator 880 from each other in the OFF state.

The generator breaker 870 is controlled by the activating device 860, and it connects the main transformer 810 and the generator 880 in the ON state, while it isolates the main transformer 810 and the generator 880 from each other in the OFF state.

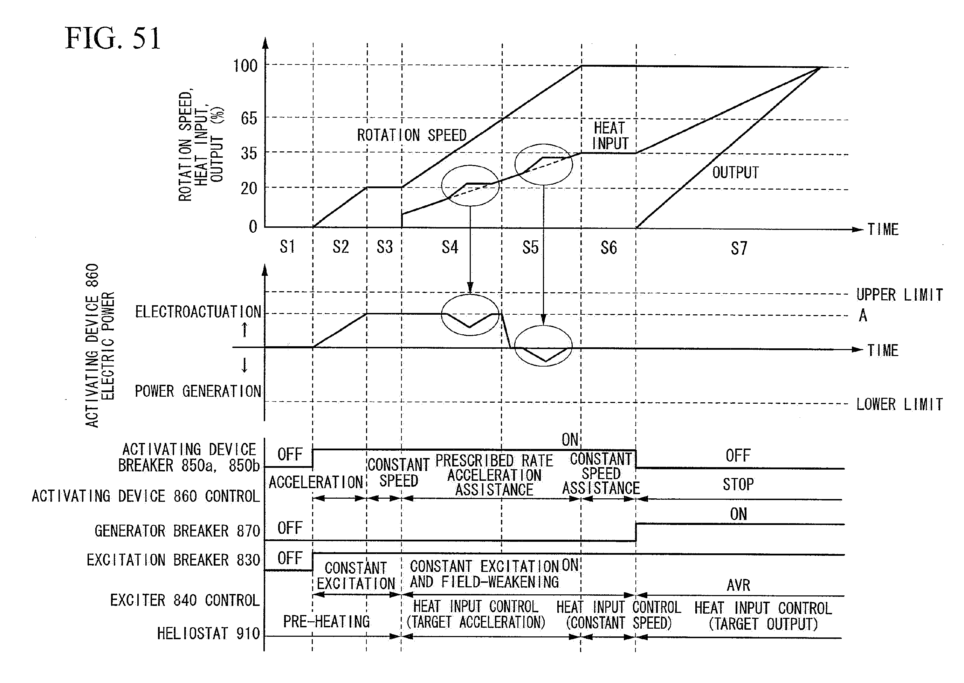

The activating device 860 is a static type activating device which uses, for example, a thyristor, and it supplies electric power obtained from the system to the generator 880 to thereby activate the turbine 930. Moreover, under a predetermined condition described later (step S5 of FIG. 51), the activating device 860 supplies electric power generated by the generator 880 to the system. That is to say, the activating device 860 is capable of bidirectional electric power acquisition.

Furthermore, the activating device 860 controls the activating device breakers 850a and 850b, and the generator breaker 870. Moreover, the activating device 860 controls switching of the generator 880 between the electroactuation mode and the power generation mode. Furthermore, the activating device 860 detects the heat amount of the gas in the heat receiver 920, and it controls the driving force of the generator 880 in the electroactuation mode according to this heat amount, to thereby stably activate the turbine 930. Furthermore, the activating device 860, instead of detecting the heat amount of the gas in the heat receiver 920, may detect the rotation speed of the turbine 930.

When activating the turbine 930, the activating device 860 first puts the generator 880 in the electroactuation mode, and supplies electric power to the generator 880 while increasing the electric power to a predetermined electric power amount (acceleration process). As a result, the turbine 930 is accelerated by the driving force of the generator 880 to a predetermined rotation speed (for example, to 20% of the rated rotation speed).

Under predetermined conditions described later (steps S3 and S6 in FIG. 51), the activating device 860 maintains the amount of electric power to be supplied to the generator 880, to thereby maintain the rotation speed of the turbine 930 at a constant speed (constant speed process, and constant speed assistance).

In a case where there is no variation in the amount of heat input from solar heat, during a period (first acceleration assistance period) between the moment when the rotation speed of the turbine 930 has reached a predetermined first rotation speed (for example, 20% of the rated rotation speed) and the moment when it has reached a predetermined second rotation speed (for example, 65% of the rated rotation speed), the activating device 860 uses the driving force of the generator 880 and heat input from solar heat to accelerate the turbine 930 (first prescribed rate acceleration assistance). Moreover, during a period between the moment when the rotation speed of the turbine 930 has reached a predetermined second rotation speed and the moment when it has reached the rated rotation speed (second acceleration assistance period, and auto-acceleration period), the activating device 860 uses only heat input from the solar heat to accelerate the turbine 930 (second prescribed rate acceleration assistance).

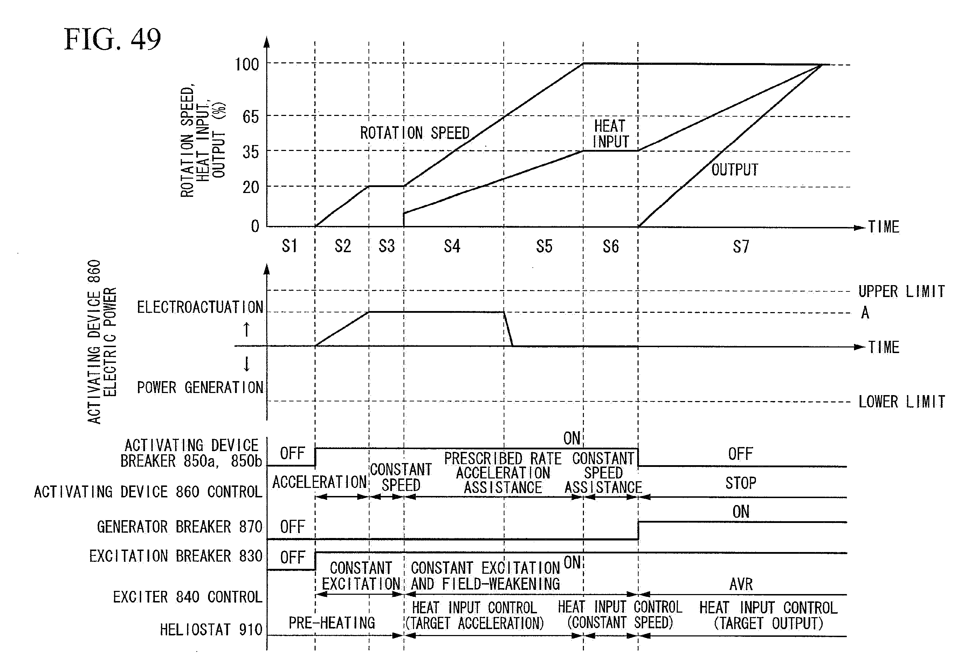

On the other hand, in a case where the amount of heat input from the solar heat varies, during a period between the moment when the rotation speed of the turbine 930 has reached the predetermined first rotation speed and the moment when it has reached the rated rotation speed (acceleration assistance period), the activating device 860 uses the driving force of the generator 880 and heat input from the solar heat to accelerate the turbine 930 (prescribed rate acceleration assistance). When the amount of heat input from solar heat changes, the activating device 860 controls the amount of electric power to be supplied to the generator 880 in the electroactuation mode, or the amount of power generation of the generator 880 in the power generation mode, so that the variation in the rotation speed of the turbine 930 is compensated. The control procedures of these processes are described later in descriptions of FIG. 49 to FIG. 51. Furthermore, the activating device 860 may compensate variations in the rotation speed of the turbine 930, also during the period between the moment when the rotation speed of the turbine 930 has reached the rated rotation speed, and the moment when the generator 880 supplies electric power to the external system.

Next, there are described operations of the power generating device.
FIG. 49 to FIG. 51 are diagrams showing operations of the power generating device in the fourteenth embodiment of the present invention. In FIG. 49 to FIG. 51, the vertical axis on the upper section represents the rotation speed (%) where the rated rotation speed of the turbine 930 is taken as 100%, the heat input amount (%) where the heat input amount required for the generator 880 to output the rated electric power is taken as 100%, and the output (that is electric power) (%) of the generator 880 where the rated electric power of the generator 880 is taken as 100%. The horizontal axis of the upper section represents the time.

Moreover, the vertical axis of the middle section represents the electric power amount supplied from the activating device 860 to the generator 880 in the electroactuation mode, and the electric power amount obtained by the activating device 860 from the generator 880 in the power generation mode. The horizontal axis of the middle section represents the time.

Furthermore, the vertical axis of the lower section represents the operation of the activating device breakers 850a and 850b, the control (operation) of the activating device 860, the operation of the generator breaker 870, the operation of the excitation breaker 830, the control (operation) of the exciter 840, and the operation of the heliostat 910. The horizontal axis of the lower section represents the time.

First, the activating device breakers 850a and 850b, the generator breaker 870, and the excitation breaker 830 are respectively assumed to be in the OFF state. Moreover, it is assumed that the activating device 860 is not supplying electric power to the generator 880, and activation of the turbine 930 has not been started. Furthermore, it is assumed that the heliostat 910 is irradiating sunlight beams onto the heat receiver 920 and is preliminarily heating the heat receiver 920. Moreover, it is assumed that the exciter 840 is not exciting the generator 880 (step S1).

Next, the power generating device starts to activate the turbine 930. Specifically, the exciter 840 constant-excites the generator 880. Furthermore, the activating device 860 brings the activating device breakers 850a and 850b, and the excitation breaker 830 into the ON state. Furthermore, the activating device 860 puts the generator 880 in the electroactuation mode, and it supplies electric power to the generator 880 while increasing the electric power to a predetermined electric power amount A (acceleration process). As a result, the rotation speed of the turbine 930 is gradually accelerated by the driving force of the generator 880 to 20% of the rated rotation speed for example (step S2).

Next, the activating device 860 maintains the electric power amount A to be supplied to the generator 880, to thereby keep the rotation speed of the turbine 930 at a constant speed (constant speed process) (step S3).

Subsequently, in step S4, in order to accelerate the turbine using the driving force of the generator 880 operating in the electroactuation mode, and the gas which has been heated with solar heat and has become high pressure, the sufficiently and preliminarily heated heat receiver 920 ejects the high pressure gas to the turbine 930 (heat input). Moreover, the activating device 860 starts detection of the heat amount of the gas in the heat receiver 920. Furthermore, the heliostat 910 increases the amount of heat input in order to accelerate the turbine 930 with heat input control (target acceleration) to the rated rotation speed, which is a target speed. The exciter 840 may continue to perform constant excitation, however, it may accelerate the turbine 930 with the field-weakening control, instead of performing constant excitation.

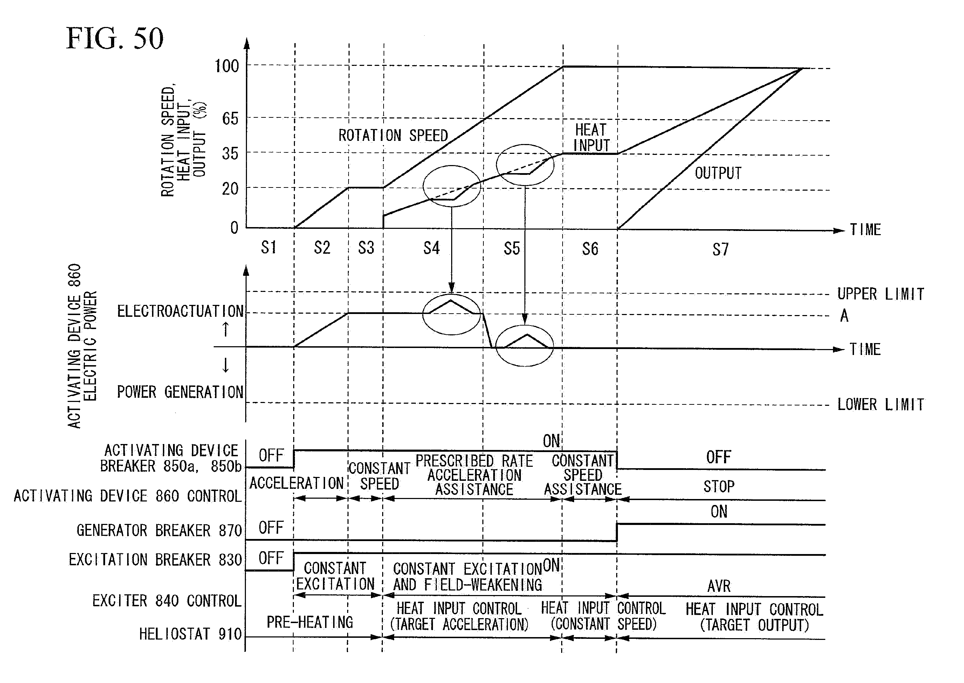

Moreover, the activating device 860 compensates variations in the amount of heat input in order to accelerate the rotation speed of the turbine 930 at a prescribed rate (prescribed rate acceleration assistance process). Here, it is assumed that the amount of heat input is reduced with respect to a prescribed heat input amount (broken line of "heat input" in FIG. 50) due to changes in weather conditions for example (upper section of FIG. 50: step S4). The activating device 860, upon the detection of a drop in the heat input amount, increases the electric power amount only by an electric power amount corresponding to the reduced heat input amount, and it supplies the increased electric power amount to the generator 880 in the electroactuation mode, to thereby compensate the variation in the rotation speed of the turbine 930 associated with the variation in the heat input amount.

On the other hand, in a case where the amount of heat input increases with respect to the prescribed rate of the heat input amount (broken line of "heat input" in FIG. 51) (upper section in FIG. 51: step S4), the activating device 860, upon detection of the increase in the heat input amount, reduces the electric power amount only by an electric power amount corresponding to the increased heat input amount, and it supplies the reduced electric power amount to the generator 880 in the electroactuation mode, to thereby compensate the variation in the rotation speed of the turbine 930 associated with the variation in the heat input amount.

The activating device 860 supplies electric power to the generator 880 operating in the electroactuation mode for a predetermined period of time (step S4). Moreover, regardless of the predetermined period of time, the activating device 860 may detect the rotation speed of the turbine 930 to thereby supply electric power to the generator 880 until the rotation speed of the turbine 930 has accelerated to a predetermined rotation speed (for example, 65% of the rated rotation speed).

Next, the activating device 860 stops electric power supply to the generator 880 operating in the electroactuation mode, in order to accelerate the turbine 930 to the rated rotation speed only with the heat input from the solar heat. Here, it is assumed that the amount of the heat input is reduced with respect to the prescribed heat input amount (broken line of "heat input" in FIG. 50) due to changes in weather conditions for example (upper section of FIG. 50: step S5). In this case, the activating device 860 re-starts electric power supply to the generator 880 in the electroactuation mode, and it compensates the variation in the rotation speed of the turbine 930 associated with the variation in the heat input amount.

On the other hand, in a case where the heat input amount increases with respect to the prescribed rate of the heat input amount (broken line of "heat input" in FIG. 51) (upper section in FIG. 51: step S5), the activating device 860 switches the generator 880 into the power generation mode, and controls (adjusts) the amount of electric power to be obtained from the generator 880, to thereby compensate the variation in the rotation speed of the turbine 930 associated with the variation in the heat input amount (step S5).

Next, it is assumed that the rotation speed of the turbine 930 has accelerated to the rated rotation speed (synchronization speed). It is assumed that the activating device 860 continues stopping electric power supply to the generator 880 operating as an electric motor (supply electric power amount "0") (constant speed assistance). Similarly, by being grouped into the heliostats 910 which irradiate sunlight beams onto the heat receiver 920, and the heliostats 910 which do not irradiate sunlight beams onto the heat receiver 920, the heliostats 910 controls the amount of heat input to the heat receiver 920. Hereunder, the heat input amount (%) in this case (that is, auto-capable heat input amount) is described as being "35%" as an example. If there is an available heat input amount exceeding the auto-capable heat input amount, the generator 880 can supply the generated electric power to the system.

Next, the activating device 860 switches the generator 880 into the power generation mode, and further, it brings the activating device breakers 850a and 850b into the OFF state, while bringing the generator breaker 870 into the ON state (system interconnection) (system synchronization). As a result, electric power is supplied from the generator 880 to the system via the main transformer 810. Moreover, the heliostats 910 adjust the number of the heliostats 910 to irradiate sunlight beams onto the heat receiver 920, so that electric power supplied from the generator 880 to the system increases to the target output (rated output). Furthermore, the exciter 840 executes AVR control so that the output voltage of the generator 880 becomes constant (step S7).

In a case where the activating device 860 is an activating device incapable of obtaining electric power, the activating device 860 may assist (compensate) the rotation speed only in the direction of accelerating the rotation speed of the turbine 930.

As long as practiced as described above, in the process of activating the turbine 930 to supply electric power from the generator 880 to the external system, even if the heat input amount changes, the activating device 860 assists (compensates) the driving of the turbine 930 only by this variation amount, and therefore, it is possible to stably accelerate the turbine 930 to the rated rotation speed without excessively increasing the electrical capacity of the activating device 860.

### Fifteenth Embodiment

A fifteenth embodiment of the present invention is described in detail, with reference to the drawings. The fifteenth embodiment differs from the fourteenth embodiment only in that the activating device 860 compensates variations in the heat input amount (the activating device 860 is used as a buffer) until the phase of the voltage of the generator 880 has synchronized with the phase of the system voltage. Hereunder, only points of differences from the fourteenth embodiment are described.

There is described an operation of the power generating device.

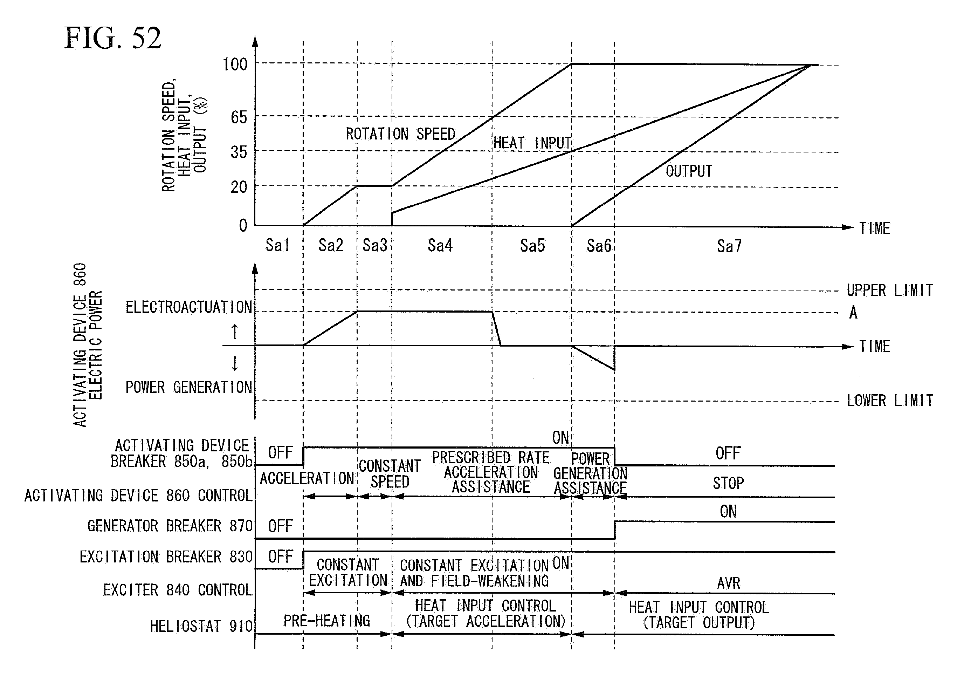

FIG. 52 is a diagram for describing operations of the power generating device of the fifteenth embodiment of the present invention. When the rotation speed of the turbine 930 has reached the rated rotation speed, in step Sa6 (corresponding to step S6 in FIG. 49 to FIG. 51), the activating device 860 switches the generator 880 to the power generation mode, and it synchronizes the phase of the voltage of the generator 880 with the phase of the system voltage while the activating device 860 is buffering the electric power generated by the generator 880 (power generation control) (step Sa6).

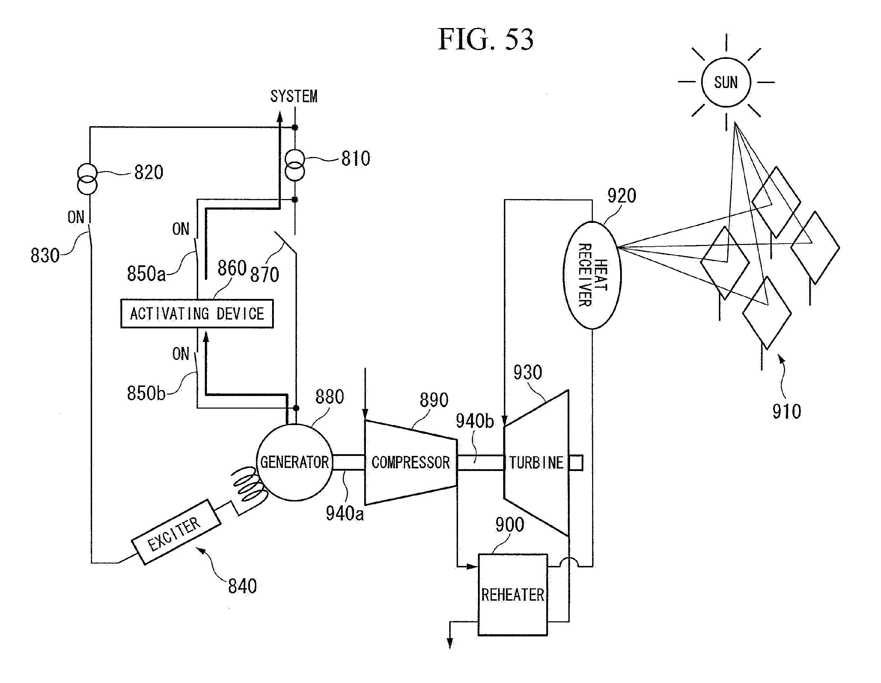

FIG. 53 is a diagram for describing an operation of the power generating device (after the rated rotation speed has been reached) in the fifteenth embodiment of the present invention, and it is for describing the state in step Sa6 of FIG. 52. As shown in FIG. 53, the activating device 860 switches the generator 880 to the power generation mode, and it outputs the electric power of the generator 880 to the main transformer 810 while synchronizing the phase of the voltage of the generator 880 with the phase of the system voltage.

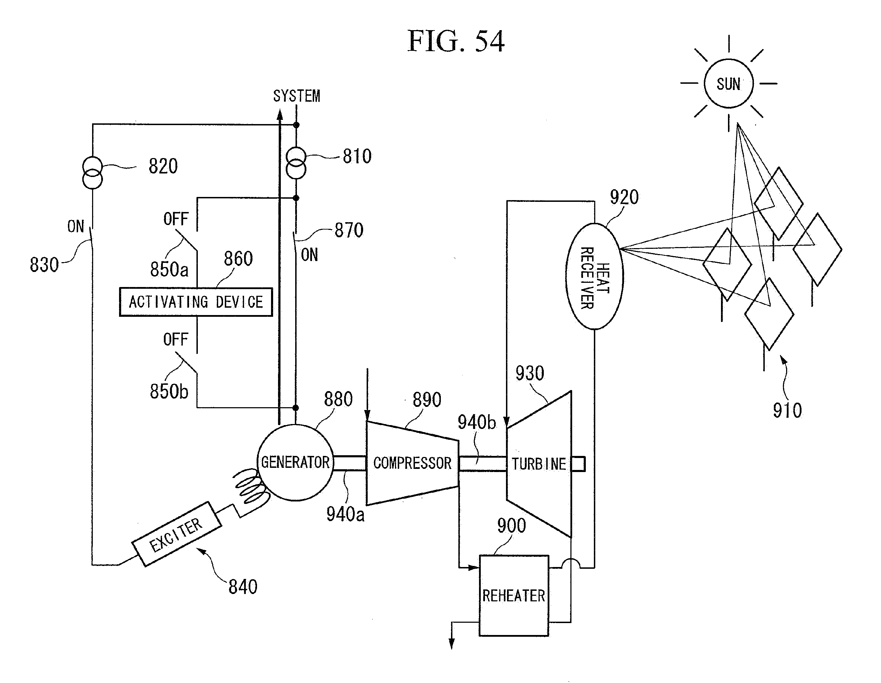

FIG. 54 is a diagram for describing an operation of the power generating device (system interconnection) in the fifteenth embodiment of the present invention, and it is for describing the state in step Sa7 of FIG. 52. As shown in FIG. 54, the activating device 860 brings the activating device breakers 850a and 850b into the OFF state, and it brings the generator breaker 870 into the ON state (system interconnection, and system synchronization) to stop the control. As a result, electric power is supplied from the generator 880 to the system via the main transformer 810.

As long as practiced as described above, in the process from activating the turbine 930 until synchronizing the phase of the voltage of the generator 880 with the phase of the system voltage, even if the heat input amount changes, the activating device 860 assists (compensates) the driving of the turbine 930 only by this variation amount, and therefore, it is possible to stably accelerate the turbine 930 to the rated rotation speed without excessively increasing the electrical capacity of the activating device 860.

### Sixteenth Embodiment

A sixteenth embodiment of the present invention is described in detail, with reference to the drawings. The sixteenth embodiment differs from the fourteenth and fifteenth embodiments in that after the turbine 930 has reached the rated rotation speed, in a case where the heat input amount decreases due to changes in weather conditions, the turbine 930 is standby-operated at a predetermined rotation speed lower than the rated rotation speed based on a recovery prediction of the heat input amount. Hereunder, only points of differences from the fourteenth and fifteenth embodiments are described.

The power generating device is provided with a heat amount prediction section for predicting transition of the heat input amount (not shown in the diagram). The heat amount prediction section (not shown in the diagram) predicts the transition of the heat input amount based on the cloud distribution captured by a weather radar for example, and it notifies the activating device 860 of whether or not the heat input amount (weather) is expected to recover.

If the heat input amount (weather) is not expected to recover, the heat amount prediction section (not shown in the diagram) notifies this to the activating device 860, and as a result, the power generating device stops power generation. On the other hand, if the heat input amount (weather) is expected to recover, the heat amount prediction section (not shown in the diagram) notifies this to the activating device 860, and as a result, the activating device 860 supplies electric power to the generator 880, and it waits for recovery of the heat input amount while the turbine 930 is standby-operated.

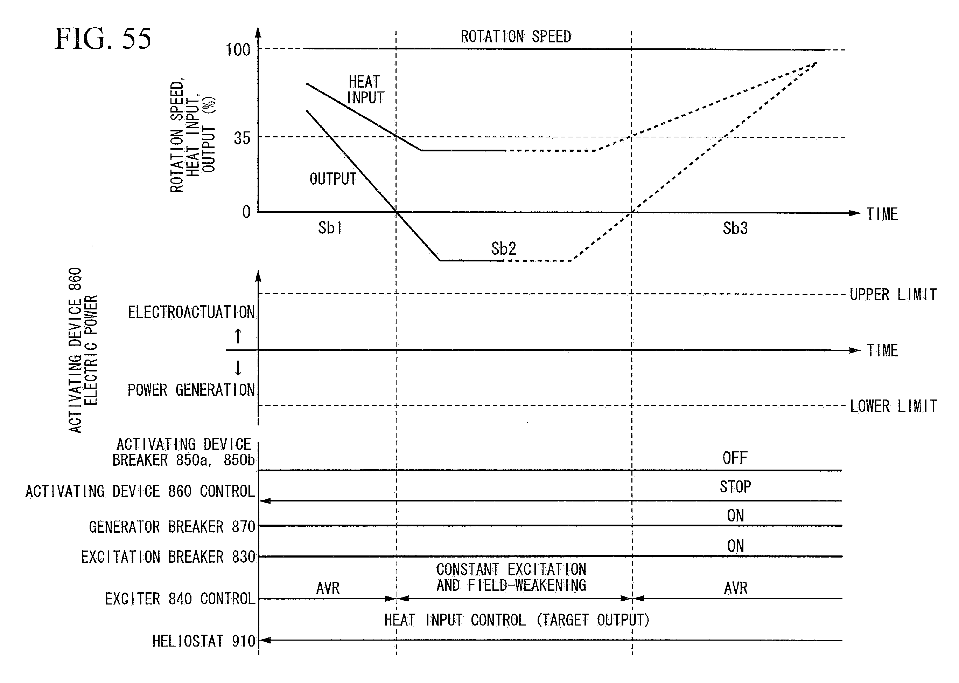

Next there is described an operation of the power generating device.
First, for making a comparison, there is described a case where the activating device 860 does not supply electric power to the generator 880. FIG. 55 is a diagram for describing operations of a power generating device in the sixteenth embodiment of the present invention (where the activating device 860 does not control the generator 880).

The vertical axis on the upper section represents the rotation speed (%) where the rated rotation speed of the turbine 930 is taken as 100%, the heat input amount (%) where the heat input amount required for the generator 880 to output the rated electric power is taken as 100%, and the output (that is electric power) (%) of the generator 880 where the rated electric power of the generator 880 is taken as 100%. The horizontal axis of the upper section represents the time.

Moreover, the vertical axis of the middle section represents the electric power amount supplied from the activating device 860 to the generator 880 (in the electroactuation mode), and the electric power amount obtained by the activating device 860 from the generator 880 (in the power generation mode). The horizontal axis of the middle section represents the time.

Furthermore, the vertical axis of the lower section represents the operation of the activating device breakers 850a and 850b, the control (operation) of the activating device 860, the operation of the generator breaker 870, the operation of the excitation breaker 830, the control (operation) of the exciter 840, and the operation of the heliostat 910. The horizontal axis of the lower section represents the time.

Here, it is assumed that the heat input amount decreases due to changes in weather conditions, and the output of the generator 880 decreases according to the heat input amount. Moreover, it is assumed that the rotation speed of the turbine 930 is maintained at the rated rotation speed (upper section of FIG. 55). Furthermore, it is assumed that the activating device 860 is stopping electric power supply to the generator 880 since the generator 880 is performing power generation (middle section in FIG. 55).

Furthermore, the activating device breakers 850a and 850b are in the OFF state. Moreover, it is assumed that the generator breaker 870 is in the ON state. Furthermore, it is assumed that the heliostats 910 adjust the number of the heliostats 910 to irradiate sunlight beams onto the heat receiver 920, so that electric power supplied from the generator 880 to the system is maintained at the target output (rated output). Moreover, it is assumed that the exciter 840 executes AVR control so that the output voltage of the generator 880 becomes constant (step Sb1).

Next, it is assumed that the heat input amount has gone below the auto-capable heat input amount (35%), and the output of the generator 880 has become 0%. As a result, the activating device 860 switches the generator 880 to the electroactuation mode. Moreover, the generator 880 obtains electric power from the system via the generator breaker without having the activating device 860 intervening therebetween, and it rotates the rotational shaft 940a to thereby rotate the compressor 890 and the turbine 930 at the rated rotation speed (step Sb2).

In this way, the power generating device standby-operates the turbine 930, and waits for the heat input amount to recover (step Sb3).

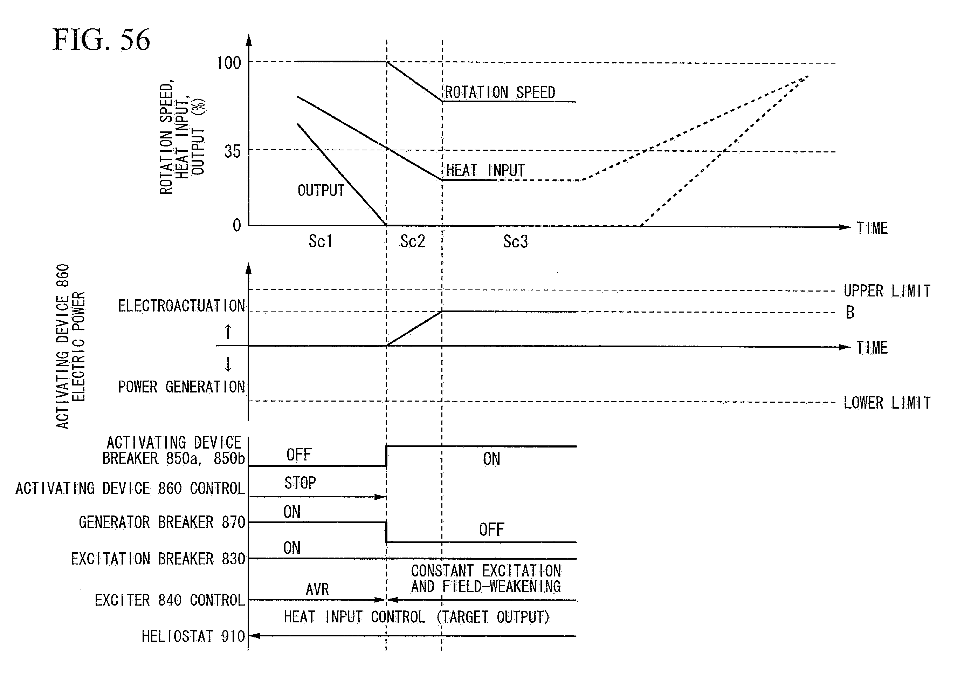

Next there is described a case where the activating device 860 supplies electric power to the generator 880. FIG. 56 is a diagram for describing operations of the power generating device in the sixteenth embodiment of the present invention (where the activating device 860 controls the generator 880).

Here, it is assumed that the heat input amount decreases due to changes in weather conditions, and the output of the generator 880 decreases according to the heat input amount. Moreover, it is assumed that the rotation speed of the turbine 930 is maintained at the rated rotation speed (upper section of FIG. 56). Furthermore, it is assumed that the activating device 860 is stopping electric power supply to the generator 880 since the generator 880 is performing power generation (middle section in FIG. 56).

Furthermore, it is assumed that the activating device breakers 850a and 850b are in the OFF state. Moreover, it is assumed that the generator breaker 870 is in the ON state. Furthermore, it is assumed that the heliostats 910 adjust the number of the heliostats 910 to irradiate sunlight beams onto the heat receiver 920, so that electric power supplied from the generator 880 to the system is maintained at the target output (rated output). Moreover, it is assumed that the exciter 840 executes AVR control so that the output voltage of the generator 880 becomes constant (step Sc1).

Next, it is assumed that the heat input amount has gone below the auto-capable heat input amount (35%), and the output of the generator 880 has become 0% (step Sc2.

If the heat input amount (weather) is not expected to recover, the heat amount prediction section (not shown in the diagram) notifies this to the activating device 860, and as a result, the power generating device stops power generation (not shown in the diagram). Meanwhile, if the heat input amount (weather) is expected to recover, the heat amount prediction section (not shown in the diagram) notifies this to the activating device 860, and as a result, the activating device 860 switches the generator 880 to the electroactuation mode, and supplies the electric power (electric power amount B) to the generator 880 to thereby standby-operate the turbine 930 at a rotation speed lower than the rated rotation speed.

Furthermore, the activating device 860 brings the activating device breakers 850a and 850b into the ON state, and it brings the generator breaker 870 into the OFF state. In this way, the power generating device standby-operates the turbine 930, and waits for the heat input amount to recover (step Sc3).

If the activating device 860 supplies electric power in this way, it is possible, with control of the activating device 860, to standby-operate the turbine 930 at a rotation speed lower than the rated rotation speed. For this reason, even if the heat input amount from the sun is reduced due to poor weather conditions and so forth, in a case where the heat input amount is predicted to recover, the activating device can wait for recovery of the heat input amount while standby-operating the turbo machine at a lower level of electric power compared to the case where the activating device 860 does not supply electric power.

The preferred embodiments of the present invention have been described. However, the present invention is not limited to the above embodiments, and addition, omission, or replacement of the configuration, or other modifications may be made without departing from the scope of the invention. The present invention is not limited by the above description, and it is limited only by the accompanying claims.

### Industrial Applicability

The present invention relates to a gas turbine plant, a heat receiver, a power generating device, and a sunlight collecting system associated with a solar thermal electric generation system. According to the present invention, it is possible with use of solar thermal energy to perform clean electric power generation with a low amount of emission of harmful substances such as carbon dioxide and nitrogen oxide, and it is possible to prevent global warming and realize a reduction in the amount of fossil fuel use.

### Brief Description of the Reference Symbols

1: gas turbine plant, 10: heat receiver, 11: casing, 13: connection pipe, 14: outlet pipe, 20: temperature sensor, 21: auxiliary combustor, 30: gas turbine, 31: compressor, 32: turbine, 33: rotational shaft, 34: electric motor (auxiliary driving device), 35: regenerative heat exchanger, 36: generator, 37: vibration damper, 102: heliostat, 110: tower, 111: reinforcement member, 123: first suspender, 124: second suspender,
202: heliostat, 203: tower section, 210, 410: light collecting heat receiver (sunlight collecting heat receiver), 211: gas turbine unit, 223: compressor, 224: turbine, 227: regenerative heat exchanger, 228: generator, 241, 441: heat receiver main body (casing), 242, 442: heat receiving section, 244, 424: opening section, 247: thermal insulation material, 251: heat receiving pipe (heat exchange heat receiving pipe), 252: low-temperature side header (thermal medium inlet header), 253: high-temperature side header (thermal medium outlet header), 300, 400: power generating device (solar thermal electric generation device),
502: heliostat (reflecting mirror), 503, 542, 552, 557, 562, 568, 577, 583, 592: tower section (supporting section), 505, 541, 567, 576, 582, 591: power generating device (sunlight collecting heat receiving device), 510: light collecting heat receiver (heat receiver), 522, 580, 588: opening section,
702: heliostat (sunlight collecting system), 703: tower section (supporting section), 710: light collecting heat receiver (light receiving section), 723: heat receiver main body (casing), 726: opening section, 731: primary mirror (mirror), 732: light collecting lens (optical path, first optical component), 733: secondary mirror (optical path, second optical component), 750: tertiary mirror (optical path, third optical component),
810: main transformer, 820: transformer, 830: excitation breaker, 840: exciter, 850a, 850b: activating device breaker, 860: activating device, 870: generator breaker, 880: generator, 890: compressor, 900: reheater, 910: heliostat, 920: heat receiver, 930: turbine, 940a, 940b: rotational shaft

## Claims

1. A gas turbine plant comprising:
a heat receiver which receives heat from the sun;
a gas turbine having a compressor and a turbine which operates with an operating fluid compressed by the compressor and heated by the heat receiver;
a temperature sensor which detects heat from the sun;
an auxiliary driving device which is driven based on the temperature of the heat detected by the temperature sensor, and which starts the gas turbine; and
a generator which converts kinetic energy generated as a result of the rotation of the turbine into electric energy.

2. A gas turbine plant according to claim 1, wherein
the compressor and the turbine are directly connected with each other by a coaxial rotational shaft, and
the rotational shaft is rotated by driving of the auxiliary driving device.

3. A gas turbine plant according to claim 1 or claim 2, further comprising a regenerative heat exchanger which performs heat exchange between the operating fluid and exhaust of the turbine before the operating fluid is heated in the heat receiver.

4. A gas turbine plant according to any one of claim 1 through claim 3, wherein the compressor and the heat receiver are directly connected with each other.

5. A gas turbine plant according to any one of claim 1 through claim 4, further comprising an auxiliary combustor which injects a fuel into the operating fluid, and which combusts and heats the fuel to be supplied to the turbine.

6. A gas turbine plant according to any one of claim 1 through claim 5, further comprising
a tower with the heat receiver arranged on an upper section thereof, and
heliostats which are arranged around the tower and which collect light beams from the sun and reflect them to the heat receiver.

7. A gas turbine plant according to claim 6, wherein a plurality of reinforcement members are provided in the tower so as to intersect with a lengthwise direction of the tower and to have a clearance between the reinforcement members, and the clearance is set to become greater with approach to the upper section of the tower, within a range serving as a light path on which light from the sun is entered from the heliostats to the heat receiver.

8. A gas turbine plant according to claim 6 or claim 7, wherein the temperature sensor, the auxiliary driving device, the gas turbine, and the generator are arranged on the upper section of the tower.

9. A gas turbine plant according to claim 8, wherein a vibration damper which dampens vibrations of the generator is provided on the upper section of the tower.

10. A heat receiver comprising:
a heat receiving pipe which transmits heat to a thermal medium which receives heat from the sun and flows thereinside;
a casing which houses the heat receiving pipe; and
a first suspender for suspending the casing, one end of which suspender is fixed to the outside and the other end is fixed to the casing.

11. A heat receiver according to claim 10, wherein the first suspender has flexibility.

12. A heat receiver according to claim 10 or claim 11, further comprising a second suspender for suspending the heat receiving pipe, one end of which suspender is fixed to the inner surface of the casing and the other end is fixed to the heat receiving pipe.

13. A heat receiver according to claim 12, wherein the heat receiving pipe is suspended by the second suspender so as to be distanced from the casing.

14. A heat receiver according to claim 12 or 13, wherein the first suspender and the second suspender are directly connected with each other.

15. A heat receiver according to any one of claim 10 through claim 14, wherein the heat receiving pipe and the casing respectively are connected separatably at least at one location.

16. A heat receiver according to any one of claim 10 through claim 15, further comprising;
a connection pipe which is connected to the heat receiving pipe and which allows the thermal medium flowing through the heat receiving pipe to flow out, and
an outlet pipe which is connected to the connecting pipe and which is connected to the outside, wherein
the connecting pipe and the outlet pipe are separatably connected at least at one location.

17. A sunlight collecting heat receiver provided with a heat receiving section through which a thermal medium flows, and which receives sunlight beams and transmits the heat to the thermal medium, wherein
the heat receiving section is provided with:
a plurality of heat exchange heat receiving pipes which receive sunlight beams;
a thermal medium inlet header, to which an upstream end of the plurality of heat exchange heat receiving pipes in the flow direction of the thermal medium is connected, and which introduces the thermal medium toward the plurality of heat exchange heat receiving pipes; and
a thermal medium outlet header, to which a downstream end of the plurality of heat exchange heat receiving pipes in the flow direction of the thermal medium is connected, and through which the thermal medium is derived from the plurality of heat exchange heat receiving pipes, and
the thermal medium inlet header is arranged on the vertically lower side of the plurality of heat exchange heat receiving pipes, and the thermal medium outlet header is arranged on the vertically upper side of the plurality of heat exchange heat receiving pipes; and
the plurality of heat exchange heat receiving pipes are such that the extending direction of the heat exchange heat receiving pipes, which reach from the upstream end to the downstream end, are arranged along the vertical direction.

18. A sunlight collecting heat receiver according to claim 17, further comprising
a casing which is installed on a tower section provided standing on the ground and which houses at least the heat exchange heat receiving pipes of the heat receiving section, wherein
the casing is formed in a bottom-ended cylinder shape with the axial direction thereof arranged along the vertical direction, and the plurality of heat exchange heat receiving pipes are arranged along the inner surface of the circumferential wall of the casing; and
an opening section, which opens downward, is formed in the casing; and
the casing receives, from the opening section, sunlight beams collected by heliostats arranged so as to surround the periphery of the tower section.

19. A sunlight collecting heat receiver according to claim 17, further comprising
a casing which is installed on a tower section provided standing on the ground and which houses at least the heat exchange heat receiving pipes of the heat receiving section, wherein
the casing is provided with a planarly arc-shaped back surface section with the axial direction thereof arranged along the vertical direction, a front surface section which covers the front part of the back surface section, and an opening section formed in the lower end section of the front surface section;
the plurality of heat exchange heat receiving pipes are arranged along the inner surface thereof on the back surface section; and
the casing receives, from the opening section, sunlight beams which are collected by heliostats arranged within a predetermined angle range in front of the tower section.

20. A sunlight collecting heat receiver according to claim 18 or claim 9, wherein a thermal insulation material is arranged on the inner surface of the casing.

21. A solar thermal electric generation device provided with:
a sunlight collecting heat receiver according to any one of claim 17 through claim 20, and
a gas turbine unit which uses the thermal medium heated by the sunlight collecting heat receiver to perform power generation, wherein:
the gas turbine unit is provided with: a compressor which supplies the thermal medium to the thermal medium inlet header;
a turbine which receives supply of the thermal medium derived from the thermal medium outlet header; and
a generator which converts the driving force of the turbine into electric power.

22. A solar thermal electric generation device according to claim 21, wherein the gas turbine unit is installed on the tower section, along with the sunlight collecting heat receiver.

23. A solar thermal electric generation device according to claim 21 or claim 22 wherein, a regenerative heat exchanger for performing heat exchange between the thermal medium supplied from the compressor to the thermal medium inlet header and exhaust gas discharged from the turbine is provided between the compressor and the thermal medium inlet header.

24. A sunlight collecting heat receiver provided with:
a casing having an opening section which collects sunlight beams; and
a plurality of heat exchange heat receiving pipes which are housed in the casing, through which a thermal medium flows, and which receive sunlight beams collected in the casing and transmit the heat to the thermal medium, and
a thermal insulation material is arranged on the inner surface of the casing, and
the plurality of heat exchange heat receiving pipes are arranged at predetermined arrangement pitches in a state of having a clearance between adj acent the heat exchange heat receiving pipes, and the heat exchange heat receiving pipes are arranged in a state of having a predetermined distance from the inner surface of the thermal insulation material.

25. A sunlight collecting heat receiver according to claim 24, wherein
when an outer diameter of the heat exchange heat receiving pipes is taken as D, and a distance from the inner surface of the thermal insulation material to the center axis of the heat exchange heat receiving pipe is taken as Lx,
the distance Lx with respect to the outer diameter D is set within a range of 1.0 ≤ Lx/D≤2.5.

26. A sunlight collecting heat receiver according to claim 25, wherein when a distance between the center axes of the adjacent heat exchange heat receiving pipes is taken as an arrangement pitch Px, the arrangement pitch Px is set within a range of 1.0D < Px ≤ 2.0D.

27. A solar thermal electric generation device provided with:
a sunlight collecting heat receiver according to any one of claim 24 through claim 26; and
a gas turbine unit which uses the thermal medium heated by the sunlight collecting heat receiver to perform power generation, and
the gas turbine unit is provided with:
a compressor which supplies the thermal medium to the heat exchange heat receiving pipe;
a turbine which receives supply of the thermal medium derived from the heat exchange heat receiving pipe; and
a generator which converts the driving force of the turbine into electric power.

28. A solar thermal electric generation device according to claim 27, wherein the sunlight collecting heat receiver and the gas turbine unit are installed on a tower section provided standing on the ground.

29. A solar thermal electric generation device according to claim 27 or claim 28 wherein, a regenerative heat exchanger for performing heat exchange between the thermal medium supplied from the compressor to the heat exchange heat receiving pipe and exhaust gas discharged from the turbine is provided between the compressor and the heat exchange heat receiving pipe.

30. A sunlight collecting heat receiver device provided with:
a heat receiver through which a thermal medium flows, and which receives sunlight beams collected by a plurality of reflecting mirrors and transmits the heat to the thermal medium; and
a supporting section which supports the heat receiver, and
opening sections, which allows sunlight beams collected by the plurality of reflecting mirrors to pass therethrough toward the heat receiver on a light path between the reflecting mirrors and the heat receiver, are formed in the supporting section" and
at least one of the opening sections is opened so that sunlight beams can be irradiated along the north-south direction onto the heat receiver.

31. A sunlight collecting heat receiving device according to claim 30, wherein:
the heat receiver is arranged on the upper side of the arrangement range where the plurality of reflecting mirrors are collaterally arranged, and
the supporting section is provided standing toward the heat receiver from an outer side range positioned on the outer side of the range of the arrangement range including the range directly under the heat receiver, and the supporting section supports the heat receiver at a position decentered from the center of the arrangement range to the upstream side in the sunlight beam irradiation direction in the north-south direction.

32. A sunlight collecting heat receiver device according to claim 30 or claim 31, wherein the supporting section, in an intermediate section thereof in the heightwise direction, has a frame structure, and the opening section is formed between the members which constitute the frame structure.

33. A sunlight collecting system provided with:
a mirror which has a focal point and reflects sunlight beams;
a light receiving section which receives reflected light from the mirror; and
an optical path which is arranged between the mirror and the light receiving section, and which guides the reflected light from the mirror to the light receiving section, and
the optical path has a first optical component which converts light beams collected on the focal point into parallel light beams, and a second optical component which guides the parallel light beams to the light receiving section.

34. A sunlight collecting system according to claim 33, wherein:
the light receiving section has a casing supported on a supporting section provided standing on the ground; and
a heat exchanger housed within the casing, and
an opening section, which opens downward and receives the parallel light beams guided from the optical path, is formed in the casing.

35. A sunlight collecting system according to claim 34, wherein the optical path has a third optical component which reflects the parallel light beams guided downward from the second optical component, upward toward the opening section.

36. A sunlight collecting system according to any one of claim 33 through claim 35, wherein the mirror and the optical path are integrally and oscillatably configured so as to track the position of the sun.

37. A power generating device provided with:
a heat receiver which receives sunlight beams and supplies a thermal medium having a heat amount according to the received light beams;
a generator which increases/decreases the driving force according to the amount of supplied electric power when electric power is supplied, and which generates electric power of a power generation amount according to performed control when the electric power is not supplied;
a control device which detects the heat amount and supplies the electric power to the generator or which controls the power generation amount of the generator so as to compensate variations in the detected heat amount; and
a turbo machine which is driven by the thermal medium supplied from the heat receiver, and by the driving force of the generator.

38. A power generating device according to claim 37, wherein in a process from the moment of activation of the turbo machine to the moment where the generator supplies the electric power to an external system, the control device controls the generator so as to compensate variations in the heat amount.

39. A power generating device according to claim 37, wherein in a process from the moment of activation of the turbo machine to the moment where the phase of the voltage of the generator and the phase of the voltage of the system are synchronized, the control device controls the generator so as to compensate variations in the heat amount.

40. A power generating device according to any one of claim 37 through claim 39, wherein in a case where the detected heat amount is a predetermined heat amount or lower, the control device increases the amount of electric power to be supplied, and in a case where the detected heat amount is a predetermined heat amount or higher, it reduces the amount of electric power to be supplied.

41. A power generating device according to any one of claim 37 through claim 39, wherein in a case where the detected heat amount is a predetermined heat amount or lower, the control device increases the amount of electric power to be supplied, and in a case where the detected heat amount is a predetermined heat amount or higher, it causes the generator to perform power generation.

42. A power generating device according to any one of claim 37 through claim 41, wherein the control device detects the rotation speed of the turbo machine, instead of detecting the heat amount.

43. A power generating device according to any one of claim 37 through claim 42, further comprising a heat amount prediction section which predicts transition of the heat amount, wherein
in a case where the heat amount is predicted to recover to a predetermined heat amount,
the control device controls the electric power to be supplied to the generator so that the rotation speed of the turbo machine becomes a predetermined rotation speed.

44. A power generating device comprising:
a heat receiver which receives sunlight beams and supplies a thermal medium having a heat amount according to the received light beams;
a control device which detects the heat amount;
a generator which is driven according to an excited magnetic force;
a turbo machine which is driven by the thermal medium supplied from the heat receiver and by the generator;
a heat amount prediction section which predicts transition of the heat amount; and
an exciter which, in a case where the heat amount is predicted by the heat amount prediction section to recover to a predetermined heat amount, excites the generator according to the heat amount detected by the control device so that the rotation speed of the turbo machine becomes a predetermined rotation speed.

45. A driving control method of a power generating device including:
a step in which a heat receiver receives sunlight beams and supplies a thermal medium having a heat amount according to the received light beams;
a step in which in the case where electric power is supplied, a generator increases/decreases the driving force according to the supplied electric power amount, and in the case where the electric power is not supplied, it generates electric power of a power generation amount according to the performed control;
a step in which a control device detects the heat amount, and supplies the electric power to the generator or controls the power generation amount of the generator so as to compensate variations in the detected heat amount; and
a step in which a turbo machine is driven by the thermal medium supplied from the heat receiver and by the driving force of the generator.
